(19) Europäisches Patentamt
European Patent Office
Office européen des brevets

(11) **EP 3 390 021 B1**

(12) **EUROPÄISCHE PATENTSCHRIFT**

(45) Veröffentlichungstag und Bekanntmachung des Hinweises auf die Patenterteilung:
**13.11.2024 Patentblatt 2024/46**

(21) Anmeldenummer: **16815818.6**

(22) Anmeldetag: **15.12.2016**

(51) Internationale Patentklassifikation (IPC):
**B29C 70/38** (2006.01)   **B25J 9/00** (2006.01)

(52) Gemeinsame Patentklassifikation (CPC):
**B29C 70/388**

(86) Internationale Anmeldenummer:
**PCT/EP2016/081248**

(87) Internationale Veröffentlichungsnummer:
**WO 2017/102978 (22.06.2017 Gazette 2017/25)**

(54) **VORRICHTUNG UND VERFAHREN ZUR KOMPOSITION VON FASER-KUNSTSTOFF-VERBUNDEN MIT HOHEN APPLIZIERGESCHWINDIGKEITEN**

DEVICE AND METHOD FOR THE COMPOSITION OF FIBRE-PLASTIC COMPOSITES WITH HIGH APPLICATION SPEEDS

DISPOSITIF ET PROCÉDÉ DE COMPOSITION DE COMPOSITES FIBRES/MATIÈRE PLASTIQUE À DES VITESSES D'APPLICATION ÉLEVÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2015 DE 102015122026**

(43) Veröffentlichungstag der Anmeldung:
**24.10.2018 Patentblatt 2018/43**

(73) Patentinhaber: **Automation Steeg + Hoffmeyer GmbH**
**55257 Budenheim (DE)**

(72) Erfinder:
• **LICHTNER, Jens**
**67678 Mehlingen (DE)**
• **STEEG, Markus**
**55257 Budenheim (DE)**

(74) Vertreter: **Blumbach · Zinngrebe Patentanwälte PartG mbB**
**Alexandrastraße 5**
**65187 Wiesbaden (DE)**

(56) Entgegenhaltungen:
WO-A1-03/047845      WO-A1-2010/031364
WO-A1-2011/039484    WO-A2-2015/075079
CN-A- 104 985 834    FR-A1- 2 942 741
US-A- 5 562 788

• **LIN L ET AL: "PMAC-based Tracking Control System for 8-axis Automated Tape-laying Machine", CHINESE JOURNAL OF AERONAUTICS, ELSEVIER, AMSTERDAM, NL, vol. 22, no. 5, 1 October 2009 (2009-10-01), pages 558 - 563, XP026718833, ISSN: 1000-9361, [retrieved on 20091001], DOI: 10.1016/S1000-9361(08)60141-7**

**Beschreibung**

Gebiet der Erfindung

Die Erfindung betrifft ein Verfahren zur Komposition von Faser-Kunststoff-Verbunden sowie eine entsprechende Kompositionsanlage.

Hintergrund und allgemeine Beschreibung der Erfindung

Bauteile aus Verbundwerkstoffen weisen zahlreiche Vorzüge wie das geringe Gewicht bei gleichzeitig hohen Belastbarkeiten insbesondere in Faserrichtung eingebetteter Fasermaterialien auf. Gerade für die Serienfertigung wäre aber beispielsweise eine Erhöhung der Prozessgeschwindigkeit zur Herstellung von Bauteilen aus Verbundwerkstoffen wünschenswert.

Bei Arbeitsverfahren zur Herstellung und Verarbeitung von Faser- und/oder Polymerhalbzeugen zu Verbundwerkstoffen in teilweise plastischem Zustand werden typischerweise die physikalischen Größen Druck, Temperatur und Zeit(Geschwindigkeit) für die Verarbeitung gesteuert oder geregelt.

Im Kontext der automatisierten Herstellung von Verbundwerkstoffen durch die richtungs- und positionsvariable Ablage von unidirektionalen Faserhalbzeugen werden Verfahren im internationalen Sprachgebrauch unterschiedlich tituliert. Beispielsweise werden üblicherweise die Begriffe "Tapelegen", "Tape/Tow Placement" bzw. "Fiber Placement", "Automated Fiber Placement" (AFP) oder "Automated Tape Laying" (ATL) zu deren Bezeichnung eingesetzt. Generell handelt es sich um teil- oder vollautomatisierte Verfahren zur Herstellung von Verbundwerkstoffen oder Preformen mit Endlosfaserverstärkung auf gekrümmten oder flächigen Strukturen.

Der Ursprung der Herstellungsverfahren liegt bei der Herstellung komplexer, leichter sowie auch korrosionsbeständiger Flugzeugrumpfstrukturen. Im Vordergrund stand dabei zunächst die Verarbeitung duroplastischer Prepregs, die anschließend auf thermoplastische Halbzeuge und behinderte Materialien ausgedehnt wurden. Mittels teilautomatisierten, handgeführten Ablegegeräten konnten Handablegeverfahren von unidirektionalen und multiaxialen Prepregs auf rotationssymmetrische Bauteile substituiert werden.

Bekannt ist das AVSD-Konzept ("Automated Variable Strand Dispensing Head"-Konzept), das mittels NC-Technik vorimprägnierte Rovings auf ebene und leicht gekrümmte Oberflächen ablegt. Die erste kommerziell nutzbare Anlage wurde 1978 von "The Ingersoll Milling Machine Company" an General Dynamics ausgeliefert.

Aus der Forderung, komplexere Bauteile fertigen zu können, entstanden Multi-Tapelegeverfahren. Bis zu 32 vorimprägnierte, unidirektionale Halbzeuge werden in einer konstruktiv aufwendig gestalteten Appliziereinrichtung einzeln transportiert und geschnitten. Dieses geschieht anlagentechnisch mit einer Robotereinheit und einer externen Rotationsachse.

Parallel dazu wurden Anfang der 1980er Jahre erste Anlagen für die Verarbeitung von thermoplastischen Halbzeugen in den Laboren der Forschungsinstitute aufgebaut. Hintergrund dieser Entwicklung war, die gewonnenen Erkenntnisse aus den duroplastischen Halbzeugen mit den Vorteilen der thermoplastischen Halbzeuge zu verbinden. Gegenüber den duroplastischen Faser-Kunststoff-Verbunden weisen sie sich durch eine praktisch unbegrenzte Lagerfähigkeit, Verarbeitbarkeit in nichtklimatisierter Umgebung, eine mögliche autoklavfreie Verarbeitung durch inline-Konsolidierung, sehr gute Impacteigenschaften, außerordentliche Chemikalienbeständigkeit bei teilkristallinen Thermoplasten, Schmelzbarkeit, Umformbarkeit, Schweißbarkeit, kurze mögliche Verarbeitungszyklen und eine lösungsmittelfreie Verarbeitung auf.

Besonders hervorzuheben ist die autoklavfreie Fertigung, da hierdurch ein sehr zeit- und kostenintensiver Fertigungsschritt entfällt.

Aufgrund der Komplexität interagierender Prozessparameter und der noch zu erforschenden Fügemechanismen sind in Europa und den USA seit Mitte der 90er Jahre zahlreiche Dissertationen und wissenschaftliche Arbeiten auf diesem Gebiet entstanden. Eine Übersicht ist beispielsweise der Veröffentlichung "Automation implementation and process development of thermoplastic tape placement for 3-dimensional parts", Steeg et al., SAMPE, 42, 5 (2006), pp. 18-24, zu entnehmen.

Im Verlauf der Konsolidierungsphase durchlaufen das Substrat und das Halbzeug Phasenänderungen (viskoelastisch vs. flüssig vs. visko-elastisch). Es sind hierzu unterschiedliche physikalische Modelle entwickelt worden, die unterschiedliche Konstellationen der Prozessparameter Druck, Temperatur und Zeit beschreiben und verifizieren. Der Fokus liegt auf einer quantitativen und qualitativen Beschreibung und Ableitung aller wesentlichen Einflussfaktoren des Fügeprozesses. Diese Systematik gilt für alle Polymere.

Beispielhaft ist diese Modellbildung für thermoplastische Fügemechanismen dargestellt. Typischerweise wird hierbei ein Modell zum "in Kontakt Bringen der Oberflächen" und ein Modell "Autohäsion" differenziert. Das "in Kontakt Bringen" imperfekter Oberflächen mit einer Rauigkeit wurde von Dara und Loos (Dara, P. H.; Loos, A.: Thermoplastic Matrix Composite Processing Model. Virginia Polytechnic Institute Report, Report CCMS-85-10, (1985)) mit Rechtecken beschrieben, die sich unter Druckbeaufschlagung (Konsolidierungsdruck) weiten. Andere erweiterten oder vereinfachten dieses Modell mit unterschiedlichen zeitabhängigen, materialabhängigen oder geometrischen Randbedingungen.

Die genannten physikalischen bzw. theoretischen Modelle sind jedoch nicht für flüssige Phasen, sehr hohe Heizraten und/oder hoch dynamische, instationäre Materialeigenschaftsänderungen definiert. Die Einsatzmöglichkeiten zur Anpassung für Steuerungs- und Regelparameter in der Verarbeitungstechnologie sind deshalb limitiert.

Sofern die Kontaktflächen zusammengeführt sind, wird angenommen, dass die Polymerketten durch die Grenzzone diffundieren können. Durch die mechanische Verschlingung/Verhakung der frei beweglichen Molekülketten entsteht eine mechanisch belastbare Verbindung. Dieses polymerphysikalische Phänomen wird als Autohäsion bezeichnet. Die Mobilität der Molekülketten ist jedoch begrenzt. Beispielsweise formuliert De Gennes in seinen Reptationsmodellen diese Verschlingungs- und Verhakungsmechanismen (de Gennes, P.-G.: "Reptation of a polymer chain in the presence of fixed obstacles". The journal of chemical physics, 55, 2 (1971), pp. 572-579).

Auch die Abhängigkeiten zwischen Kontaktflächen und mechanischen Eigenschaften auf Basis von Materialeigenschaften, Druck, Temperatur und Zeit können modelliert werden. Dabei wird die Qualität bezüglich der Zugfestigkeit und der Bruchenergie in Relation zur Kontaktzeit $t_c$ gebracht. Es kann festgestellt werden, dass eine kohäsive Probe, die mit der Zeit $t_r$ gefügt ist, von einem homogenen Polymer typischerweise nicht mehr zu differenzieren ist.

$$\frac{\text{Zugfestigkeit}}{\text{Zugfestigkeit}_\infty} = \left(\frac{t_c}{t_r}\right)^{\frac{1}{4}}$$

$$\frac{\text{Bruchenergie}}{\text{Bruchenergie}_\infty} = \left(\frac{t_c}{t_r}\right)^{\frac{1}{2}}$$

Der Grad der Autohäsion kann nach Dara und Loos wie folgt bestimmt werden:

$$D_A = D_{A0} + K(T) \cdot t_c^{\frac{1}{4}}$$

$$t_c = a_T \cdot t_{c,ref}$$

$$a_T = \frac{-C_1 \cdot (T - T_{ref})}{C_2 + T - T_{ref}} \qquad \text{Williams-Landel-Ferry}$$

$$D_A = K_0' \cdot \left(a_T \cdot t_{c,ref}\right)^{\frac{1}{4}}$$

Einen alternativen Ansatz entwickelten Lee und Springer:

$$D_A = \chi \cdot t_c^{\frac{1}{4}}$$

$$\chi = \chi_0 \cdot \exp\left(\frac{-E_a}{k \cdot T}\right) \qquad \text{Arrhenius}$$

Der Unterschied zwischen Dara und Loos und Lee und Springer ist die Art der Bestimmung der präexpotenziellen Faktoren bzw. der Proportionalitätskonstanten. Die Williams-Landel-Ferry Beziehung ist eher für amorphe Kunststoffe gültig, wohingegen die Arrhenius-Beziehung für kristalline oder teilkristalline Polymere Anwendung findet.

Die Qualität der Autohäsion kann auch in Verbindung mit den temperaturabhängigen Viskositäten in der Schmelze gesetzt werden:

$$t_c = T_{c,ref} \cdot a_T$$

$$\eta_0(T) = \eta_0(T_0) \cdot a_T$$

$$\eta_0(T) = \eta_0(T_0) \cdot \exp\left[\frac{E_0}{k}\left(\frac{1}{T} - \frac{1}{T_0}\right)\right] \qquad \text{Arrhenius}$$

Die Temperaturabhängigkeit der Polymere kann ebenfalls über ein Arrhenius-Modell beschrieben werden. Für schnelle Verarbeitungsprozesse, die auf geringen Viskositäten beruhen, sollte somit eine möglichst hohe Temperatur gewählt werden.

Eine natürliche Restriktion bildet die Degradation. Oberhalb der Schmelztemperatur existiert in Sauerstoffexposition somit ein Temperaturbereich, in dem es über einen Zeitraum zu überwiegend oxidativen Zersetzungen kommt. Es handelt sich um die Degradation der Matrix. Der Grad des Abbaus und der Expositionsdauer können dabei gegenübergestellt werden. Nam und Seferis haben beispielsweise in einem Degradationsmodell definiert, dass die mechanischen Eigenschaften signifikant erst durch einen Verlust des Molekulargewichts von mehr als 0,06% sinken.

Das Patent DE 10 2012 102 841 B3 zeigt ein automatisierbares Verfahren zum Auftrag eines Binders auf ein Faserhalbzeug mit einer Brenngasdüse.

Die Veröffentlichung WO 2013/139 834 A1 weist auch auf die Verarbeitungsfähigkeit von Stapelfasern in automatisierten Ablageprozessen hin.

Die CN 104 985 834 A beschreibt ein Infrarot-Heizsystem zur Hochgeschwindigkeits-Platzierung von Fasern in einer ATL-Vorrichtung. Gemäß der CN 104 985 834 A lassen sich verschiedene Geschwindigkeitsbereiche zur Platzierung der Fasern einstellen. Die bekannten Verfahren oder Vorrichtungen ermöglichen jedoch vor Allem keine zufriedenstellenden Prozessgeschwindigkeiten.

Es ergibt sich daher als eine Aufgabe der vorliegenden Erfindung, eine Kompositionsanlage für Verbundwerkstoffe bereit zu stellen, welche die vorgenannten Nachteile behebt oder verbessert. Insbesondere hat sich die vorliegende Erfindung die Aufgabe gestellt, die Prozessgeschwindigkeit deutlich zu erhöhen.

Ein weiterer Aspekt der Erfindung ist es, einen gleichmäßigen Wärmeeintrag in den Faser-Kunststoff-Verbund zu realisieren.

Noch ein weiterer Aspekt der Erfindung besteht darin, eine platzsparende Vorrichtung bereitzustellen.

Weitere Aufgaben ergeben sich aus der nachfolgenden Beschreibung bzw. den besonderen Vorteilen die mit bestimmten Ausführungsformen erzielt werden.

Die Aufgabe wird durch den Gegenstand der unabhängigen Ansprüche gelöst. Vorteilhafte Ausführungsformen sind Gegenstand der abhängigen Ansprüche.

Bei dem erfindungsgemäßen Verfahren gemäß Anspruch 1 zur Komposition von Faser-Kunststoff-Verbunden wird zunächst ein Halbzeug in einer Vorratseinrichtung bereitgestellt.

Das Halbzeug kann beispielsweise ein Faserhalbzeug, ein Polymerhalbzeug und/oder ein eigenverstärktes Polymer oder eine Kombinationen daraus umfassen.

Das Halbzeug kann ferner zum Beispiel vollkonsolidierte, teilkonsolidierte, behinderte, benetzte Halbzeuge oder deren Kombinationen umfassen.

Überdies kann das Halbzeug Duroplaste, Thermoplaste, Elastomere, deren Derivate und/oder Kombinationen daraus umfassen.

Mit anderen Worten handelt es sich bei dem Halbzeug typischerweise um ein bandförmig, insbesondere rollenförmig, bereitgestelltes Faser-Kunststoff-Material, wobei der mit dem Verfahren bzw. der Vorrichtung herzustellende Faser-Kunststoff-Verbund durch wiederholtes beispielsweise streifenweises und/oder schichtweises Auftragen von Lagen aus Faser-Kunststoff-Material hergestellt wird.

Das bereitgestellte Halbzeug wird gemäß dem erfindungsgemäßen Verfahren einer Appliziereinrichtung zur weiteren Verwendung zugeführt.

Im nächsten Schritt des Verfahrens folgt das Ausführen einer Relativbewegung zwischen der Appliziereinrichtung und einem Applikationsbereich, auf den der Faser-Kunststoff-Verbund mittels der Appliziereinrichtung appliziert werden kann. Während der Relativbewegung geschieht die Applikation des Halbzeugs auf den Applikationsbereich mittels der Appliziereinrichtung.

Mit anderen Worten erfolgt die Applikation bzw. das Auftragen des Halbzeugs auf den Applikationsbereich während einer Relativbewegung zwischen dem Applikationsbereich und der Appliziereinrichtung. Beispielsweise und bevorzugt wird dabei die Appliziereinrichtung bewegt, d.h. insbesondere auf Schienen gefahren. Es ist aber auch möglich, dass der Applikationsbereich gegenüber der Appliziereinrichtung bewegt wird und, besonders vorteilhaft, sowohl die Appliziereinrichtung als auch der Applikationsbereich eine Bewegung unterläuft, so dass die Relativbewegung zwischen Appliziereinrichtung und Applikationsbereich durch eine gegenläufige Bewegung sowohl der Appliziereinrichtung als auch des Applikationsbereichs erreicht wird.

Die Relativbewegung zwischen Appliziereinrichtung und Applikationsbereich wird erfindungsgemäß mit einer Tool-Center-Point-Geschwindigkeit von größer oder gleich 0,5 m/s ausgeführt.

Während der Applikation des Halbzeugs auf den Applikationsbereich kann eine Heizeinrichtung vorteilhaft derart eingestellt sein, dass ein Temperaturgradient der Wärmeverteilung über eine Dicke des Halbzeugs eingestellt werden kann. Mittels des Temperaturgradienten der Wärmeverteilung kann das Halbzeug beispielsweise derart erwärmt werden, dass es nur teilweise aufgeschmolzen wird.

Es ist ferner möglich, die Heizeinrichtung derart einzustellen, dass die im Halbzeug gespeicherte Wärmeenergie kleiner als 40% im Verhältnis zu der vom Halbzeug zum vollständigen aufschmelzen benötigten Wärmeenergie eingestellt ist. Bevorzugt ist die von der Heizeinrichtung abgegebene und im Halbzeug gespeicherte Wärmeenergie kleiner als 20% im Verhältnis zu der vom Halbzeug zum vollständigen aufschmelzen benötigten Wärmeenergie eingestellt.

Die Heizeinrichtung kann ferner derart eingestellt sein, dass eine sich einstellende Phasenänderung im Halbzeug die Morphologie eines Polymers des Halbzeugs nur in der Randzone verändert.

Eine Kompositionsanlage gemäß Anspruch 4 für Verbundwerkstoffe, die insbesondere geeignet ist, das zuvor beschriebene Verfahren auszuführen, umfasst zunächst eine Bodengruppe, die den Applikationsbereich bereitstellt. Mit anderen Worten ist eine Bodengruppe vorgesehen, die bevorzugt möglichst stabil ausgeführt ist, d.h. beispielsweise sehr schwer ausgelegt ist, also insbesondere eine Masse aufweist, die um den Faktor 1.000.000 oder mehr größer ist als die bahnbezogene Masse an applizierten Halbzeugen und/oder mit dem Boden verschraubt ist, so dass eine entsprechende Masse und damit eine hohe Dämpfung gegenüber von dynamischen Lasten erzeugten Schwingungen und Bewegungen vorgehalten wird. Insbesondere ist die Bodengruppe erheblich schwerer als die (im Betrieb der Kompositionsanlage) bewegte Masse der Kompositionsanlage. z.B. ist die Bodengruppe um den Faktor 10, 50 oder sogar 100 schwerer als die bewegte Masse der Kompositionsanlage. Im einfachsten Beispiel ist die bewegte Masse der Kompositionsanlage in der Appliziereinrichtung vereinigt, so dass die Bodengruppe um den Faktor 10, 50 oder sogar 100 schwerer ist als die Masse der Appliziereinrichtung.

Die Kompositionsanlage umfasst ferner eine Vorratseinrichtung für die Bereitstellung eines Halbzeugs zur Weiterverarbeitung in der Kompositionsanlage. Eine Appliziereinrichtung ist vorgesehen zum Auftragen des Halbzeugs auf den Applikationsbereich.

Die Kompositionsanlage umfasst ferner eine Antriebseinheit zur Veränderung der Position der Appliziereinrichtung relativ zu dem Applikationsbereich, wobei die Antriebseinheit für die Zeitphase während des Auftrags des Halbzeugs auf den Applikationsbereich eine Tool-Center-Point-Geschwindigkeit für die Appliziereinrichtung bereitstellt. Mit anderen Worten bewegt die Antriebseinheit die Appliziereinrichtung, beispielsweise entlang von Schienen. In einer bevorzugten Ausführungsform sind die Schienen in einer zu der Erstreckungsrichtung der Schienen senkrechten Ebene ebenfalls verstellbar, so dass die Antriebseinheit die Appliziereinrichtung in zwei bevorzugt zueinander senkrechten Richtungen bewegen kann.

Die Appliziereinrichtung umfasst eine Heizeinrichtung bzw. eine Heizquelle zum Erhitzen des Halbzeugs, so dass eine lokale Phasenänderung des Halbzeugs in einen zumindest teilweise plastischen Zustand induziert werden kann. Die Heizquelle wirkt auf das Halbzeug bevorzugt wenige Millimeter bis Zentimeter vor dessen Aufbringung auf den Applikationsbereich ein.

Die Antriebseinheit wirkt mit der Appliziereinrichtung erfindungsgemäß derart zusammen, dass das Halbzeug richtungs- und positionsvariabel auf dem Applikationsbereich mit einer Tool-Center-Point-Geschwindigkeit von größer oder gleich 0,5m/s aufgetragen wird.

Die Antriebseinheit kann in einer bevorzugten Ausführungsform hergerichtet sein, die Tool-Center-Point-Geschwindigkeit (vTCP) für den Zeitbereich während der Auftragung des Halbzeugs auf den Applikationsbereich konstant oder im Wesentlichen konstant zu halten. Eine im wesentlichen konstante Tool-Center-Point-Geschwindigkeit (vTCP) liegt beispielsweise vor, wenn die vTCP um gleich oder weniger als $\pm2\%$, weniger bevorzugt gleich oder weniger als $\pm5\%$ oder noch weniger bevorzugt gleich oder weniger als $\pm10\%$ schwankt. Mit anderen Worten kann eine Korrelation zwischen der Geschwindigkeit der Appliziereinrichtung und der Vorschubgeschwindigkeit des Halbzeugs so realisiert werden, dass das Halbzeug nur dann appliziert wird, wenn zwischen der Appliziereinrichtung und dem Applikationsbereich eine konstante oder im wesentlichen konstante Relativgeschwindigkeit vorliegt.

In einer bevorzugten Ausführungsform ist die Heizquelle hergerichtet, beim Erhitzen des Halbzeugs einen Temperaturgradienten der Wärmeverteilung über eine Dicke des Halbzeugs einzustellen. Mit anderen Worten induziert in dieser Ausführungsform die Heizquelle gerade so viel Wärmeenergie in das Halbzeug, dass sich die Wärmeenergie nicht gleichmäßig in der Dicke des Halbzeugs verteilt, also das Halbzeug z.B. vollständig durchdringt. Vielmehr induziert die Heizquelle gerade so viel Wärmeenergie, dass an der Oberfläche des Halbzeugs eine Schmelzzone erzeugt wird und in tieferen Schichten des Halbzeugs eine geringere Erwärmung als an der Oberfläche erzeugt, so das insbesondere die tieferen Schichten des Halbzeugs während der Applikation auf dem Applikationsbereich im festen Zustand verbleiben.

Alternativ oder kumulativ kann die Heizquelle bevorzugt hergerichtet sein, die Schmelzzone bei dem Erhitzen des Halbzeugs auf die Fügeflächen zu konzentrieren oder sogar im Wesentlichen darauf zu begrenzen.

In einer weiteren vorteilhaften Ausführung ist die Antriebseinheit dazu hergerichtet, die Appliziereinrichtung mit einer Beschleunigung von größer oder gleich 8m/s$^2$, weiter bevorzugt größer oder gleich 20 m/s$^2$ oder besonders bevorzugt größer oder gleich 50 m/s$^2$ zu beschleunigen. Mit anderen Worten ist die dynamische Leistungsfähigkeit der Antriebseinheit bevorzugt so groß, die Appliziereinrichtung mit den vorgenannten Beschleunigungen zu beschleunigen. Die erzielbare Beschleunigung wird jedoch voraussichtlich nicht größer als 100 m/s$^2$ realisierbar sein, da zu große Beschleunigungen vor allem die Lebensdauer der bewegten oder bewegenden Teile der Kompositionsanlage reduzieren können, oder aber Winkelfehler bei dem Auftrag des Halbzeugs auf den Applikationsbereich auftreten können.

Ferner bevorzugt beträgt die Summe der bewegten Massen der Appliziereinrichtung und der Antriebseinheit zusammen weniger als 750 kg. Eine Reduzierung der bewegten Massen kann die Steuerung der Appliziereinrichtung derart verbessern, dass eine sehr genaue Platzierung und Koordinierung der Appliziereinrichtung bei sehr hohen Geschwindigkeiten und/oder Beschleunigungen möglich ist.

Ferner bevorzugt beträgt die Summe der bewegten Massen der Appliziereinrichtung und der Antriebseinheit zusammen gleich oder weniger als 250 kg und noch weiter bevorzugt gleich oder weniger als 75 kg.

Die Komposition von Faser-Kunststoff-Verbunden auf dem Applikationsbereich aus Halbzeugen kann bevorzugt sukzessive entlang von vorgegebenen Bahnpfaden stattfinden. Mit anderen Worten kann ein Linearpfad, d.h. ein gerades Ablegestück, durch eine Steuerung vorgegeben werden, wobei die Appliziereinrichtung den vorgegebenen Linearpfad abfährt und dabei das Halbzeug auf dem Applikationsbereich ablegt.

Die Bahnpfade können in einer Ausführungsform auch in der Ebene gekrümmt oder sphärisch gekrümmt sein. Somit kann auch der Applikationsbereich eine gekrümmte Oberfläche aufweisen.

In einer Ausgestaltung der Erfindung ist zumindest ein weiteres Halbzeug umfasst, welches sich von dem Halbzeug unterscheidet. Mit anderen Worten können zwei verschiedene Halbzeuge zum Beispiel in der Vorratseinrichtung bevorratet werden. Die Vorratseinrichtung kann dann insbesondere beide Halbzeuge bereitstellen, d.h. derart automatisiert arbeiten, dass das gewünschte Halbzeug zur Verfügung gestellt werden kann. Die Vorratseinrichtung kann also dazu hergerichtet sein, das Halbzeug und das weitere Halbzeug wechselweise zu der Appliziereinrichtung zuzuführen, so dass Faser-Kunststoff-Verbunde aus verschiedenen Halbzeugen hergestellt werden können. Auf diese Art können auch mehr als zwei Halbzeuge in der Vorratseinrichtung vorgehalten werden, so dass aus einer Vielzahl von Halbzeugen ausgewählt werden kann. In einer bevorzugten Ausführungsform können sich das eingesetzte Material des Halbzeugs und/oder die Abmessungen (z.B. Breite oder Dicke) des Halbzeugs unterscheiden.

Die Komposition von Faser-Kunststoff-Verbunden ist in einer weiteren Ausführungsform für jeden Bahnpfad individuell ermöglicht. Mit anderen Worten kann vor jeder Ansteuerung eines weiteren Bahnpfads mit der Appliziereinrichtung das mit der Vorratseinrichtung bereitgestellte Halbzeug ausgewählt und bahnweise appliziert werden, beispielsweise wechselweise.

Die Kompositionsanlage kann in einer Ausführungsform ein Synchronisationssystem zur elektronischen Synchronisation der Geschwindigkeit des Antriebssystems (Tool-Center-Point-Geschwindigkeit) und einer Vorschubgeschwindigkeit des Halbzeugs umfassen.

In einer Ausführungsform ist die Kompositionsanlage dazu hergerichtet, während der Applizierung des Halbzeugs auf den Applikationsbereich die Tool-Center-Point-Geschwindigkeit des Halbzeugs im Wesentlichen konstant zu halten. Mit anderen Worten wird das Halbzeug nach einer Beschleunigungsphase in einer Phase ohne Beschleunigung der Appliziereinrichtung appliziert, wobei die Applikation des Halbzeugs beendet wird, bevor die Appliziereinrichtung nach dem Bahnende abgebremst wird. Die Appliziereinrichtung ist dabei insbesondere dazu hergerichtet, auch die Vorschubgeschwindigkeit des Halbzeugs während der Applizierung des Halbzeugs im Wesentlichen konstant zu halten.

Die Antriebseinheit kann einen Direktantrieb umfassen. Ein Direktantrieb kann ein Elektromotor sein, der die Antriebskraft ohne Zwischengetriebe oder andere Zwischenbaugruppen bereitstellt. Auch die Appliziereinrichtung kann einen Direktantrieb für den Vorschub des Halbzeugs umfassen. Die Antriebseinheit und/oder die Appliziereinrichtung, bzw. sogar bevorzugt alle Antriebe der Kompositionsanlage, können mit einem hochauflösenden Messsystem zur Messung der Bewegung bestückt sein.

Die Heizquelle kann für eine Phasenänderung in einen teilweise plastischen Zustand der Polymerkomponenten des Halbzeugs gesteuert und geregelt werden. Mit anderen Worten ist die Heizquelle in einer Ausführungsform in der Art und Weise der Wärmeeindringung (z.B. der Brenntiefe), in der Wärmeleistung und/oder in der geometrischen Wärmeeinwirkung (z.B. der Breite der Hitzeeinwirkung)einstellbar, d.h. bevorzugt steuer- und regelbar. Bevorzugt umfasst die Heizquelle beispielsweise eine Brennerdüse, eine Plasmaquelle, Halogen, Laser und/oder eine LED-Quelle, deren jeweilige erzeugbare Energiedichte insbesondere für den Einsatz in der Kompositionsanlage optimiert ist.

Erfindungsgemäß umfasst die Kompositionsanlage eine elektronische Steuerung zur integrierten Steuerung aller Systeme, welche bevorzugt eine Zykluszeit von kleiner oder gleich 1000 μs bereitstellt insbesondere zur elektronischen Synchronisation der Geschwindigkeit des Antriebssystems (Tool-Center-Point-Geschwindigkeit) und der Vorschubgeschwindigkeit des Halbzeugs der Appliziereinrichtung. Bevorzugt realisiert die elektronische Steuerung eine Synchronisation gemeinsam der Geschwindigkeit des Antriebssystems, einer Geschwindigkeit der Schneideinheit sowie der Vorschubgeschwindigkeit des Halbzeugs, die durch die Appliziereinrichtung realisiert wird.

Die elektronische Steuerung umfasst bevorzugt eine Multicore-Architektur. Mit anderen Worten weist die elektronische Steuerung mehrere Rechenkerne auf, die parallel zueinander verschiedene Prozesse der Steuerung der Kompositionsanlage ausführen können.

Insbesondere können dabei unterschiedlichen Kernen unterschiedliche Tasks zugeordnet werden. Es können sich auch die Zykluszeiten der unterschiedlichen Tasks unterscheiden. In einer bevorzugten Ausführung kann eine Zykluszeit in mindestens einer Task von kleiner als 100 μs bereit gestellt werden kann, weiter bevorzugt von kleiner als 50 μs, noch weiter bevorzugt von kleiner als 10 μs, noch weiter bevorzugt von kleiner als 2 μs.

Die elektronische Synchronisation der Systeme basiert besonders bevorzugt auf einem Protokoll in Echtzeit.

Die Antriebseinheit und die Applikationseinrichtung können über ein Motion-Control-System synchronisiert sein, die in Verbindung mit einer Controller-Steuerung eine quasisynchrone Ansteuerung gewährleistet. Mit anderen Worten werden die Antriebseinheit und die Applikationseinrichtung derart miteinander elektronisch gekoppelt, dass diese gemeinsam synchron angesteuert werden, so dass insbesondere die Applikationsgeschwindigkeit ähnlich oder identisch zu der Vorschubgeschwindigkeit ist.

In einer weiteren Ausführungsform umfasst der Applikationsbereich ein thermisch isolierendes Medium. Ein thermisch isolierendes Medium ist z.B. ein Medium mit einer Wärmeleitfähigkeit kleiner oder gleich 1 W/(m · K) für polymere Werkstoffe bzw. 3,5 W/(m · K) für anorganische Werkstoffe. In dieser Ausführungsform wird zumindest eine erste Lage oder eine erste Bahn des Halbzeugs direkt auf das thermisch isolierende Medium appliziert.

Das thermisch isolierende Medium weist in einer bevorzugten Ausführungsform eine flächige Ausdehnung auf bei einer Dicke im Bereich zwischen 0,05 mm bis 5 mm.

In noch einer weiteren Ausführungsform stellt die Bodengruppe einen Unterdruck bereit, wobei das thermisch isolierende Medium über den Unterdruck an der Bodengruppe gehalten wird. Beispielsweise umfasst die Bodengruppe ein Werkzeug, welches flächig aufliegt. Mit anderen Worten kann das thermisch isolierende Medium an dem Werkzeug mittels Unterdruck gehalten sein. Der Unterdruck kann beispielsweise so eingestellt sein, dass das thermisch isolierende Medium während der Applikation ausreichend fixiert ist, um gegenüber der Bodengruppe keine Bewegung zu vollziehen.

Die Bodengruppe kann alternativ oder kumulativ eine Fixiereinrichtung aufweisen, so dass das thermisch isolierende Medium mittels der Fixiereinrichtung an der Bodengruppe fixiert ist.

Alternativ oder kumulativ kann die Bodengruppe zu dem thermisch isolierenden Medium ein elektrisches Feld aufbauen, so dass das thermisch isolierende Medium durch das elektrische Feld an der Bodengruppe fixiert wird.

Bevorzugt ist das thermisch isolierende Medium ein Polymer, ein Elastomer, ein Verbundwerkstoff oder ein anorganisches Material.

Es ist also bevorzugt, dass das thermisch isolierende Medium an der Bodengruppe fixiert ist.

Auf das thermisch isolierende Material kann eine Trägerfolie lösbar aufgebracht sein. Die Trägerfolie kann z.B. adhäsiv haftend und/oder elektrostatisch haftend aufgebracht sein.

Es ist hierbei von Vorteil, zumindest eine erste Lage oder erste Bahn des Halbzeugs direkt auf die Trägerfolie zu applizieren.

Es ist weiter von Vorteil, wenn die Trägerfolie rückstandslos vom thermisch isolierenden Material gelöst werden kann und/oder die Trägerfolie rückstandslos vom Faser-Kunststoff-Verbund gelöst werden kann.

In einer weiteren bevorzugten Ausführungsform kann der Applikationsbereich eine Konsolidierung oder eine Teilkonsolidierung mit dem darauf applizierten Halbzeug eingehen, so dass das Halbzeug fest mit dem Applikationsbereich verbunden ist. Mit anderen Worten wird in dieser Ausführungsform bereits durch den Auftrag der ersten Lage des Halbzeugs auf den Applikationsbereich ein Faser-Kunststoff-Verbund hergestellt, da das Halbzeug bereits mit dem Applikationsbereich einen Verbund herstellt.

Mittels der Appliziereinrichtung kann ein Halbzeug auch eine Konsolidierung oder eine Teilkonsolidierung mit einem bereits applizierten Halbzeug und/oder mit einem vorkonfektionierten Halbzeug eingehen. Dies ist z.B. der Fall, wenn das Halbzeug auf einem bereits applizierten Halbzeug abgelegt wird. Das Halbzeug ist in diesem Fall fest mit dem bereits applizierten Halbzeug verbunden, wobei der Grad der Verbindung insbesondere über Adhäsion, Autohäsion oder Vernetzung beispielsweise durch die flexible Regel- und Steuerbarkeit der physikalischen Prozessgrößen Druck (Konsolidierung), Temperatur und Zeit (Hochgeschwindigkeit) bahnbezogen einstellbar ist.

In dem Halbzeug kann während dem Auftrag durch die Heizquelle bevorzugt eine Polymerdiffusion oder eine Vernetzung in der Grenzschicht induziert werden.

In einer weiteren bevorzugten Ausführungsform ist eine zweite Appliziereinrichtung umfasst, welche ebenfalls von der Antriebseinheit bewegbar ist zum wechselweisen oder gleichzeitigen Aufbringen von zwei Halbzeugen auf den Applikationsbereich. Die zweite Appliziereinrichtung ist bevorzugt von der Appliziereinrichtung unabhängig bewegbar zum gleichzeitigen oder versetzten Aufbringen von mindestens zwei Halbzeugen im Applikationsbereich.

Es wird bevorzugt auch eine Mehrzahl gekoppelter Appliziereinrichtungen eingesetzt. Die Mehrzahl gekoppelter Appliziereinrichtungen kann durch Parallelisierung gekoppelt sein. Ferner kann die Mehrzahl gekoppelter Appliziereinrichtungen ortsfest zur Bodengruppe angebracht sein. In diesem Fall kann der Applikationsbereich drehbar gelagert sein und hergerichtet sein, eine Translation auf der Bodengruppe durchzuführen. Hierdurch ist gewährleistet, dass eine Bedeckung des Applikationsbereiches, insbesondere eine volle Bedeckung des Applikationsbereiches in einer Traversierung, erreicht werden kann.

Die Antriebseinheit und die Appliziereinrichtung sind insbesondere an der Bodengruppe befestigt und oberhalb der Bodengruppe angeordnet, so dass ein kompakter und platzsparender Aufbau der Kompositionsanlage gewährleistet ist.

Die Kompositionsanlage kann eine Eingabeeinrichtung zur Eingabe von Bahnstart- und Endpunkten bzw. zur Eingabe von Bahnpfaden umfassen.

Die Kompositionsanlage kann ferner bevorzugt selbständig Parameter zur Steuerung der Antriebseinheit und der Appliziereinrichtung ermitteln und die Antriebseinheit und die Appliziereinrichtung anhand der Parameter steuern.

In einer weiteren Ausführungsform wird eine Tool-Center-Point Geschwindigkeit größer oder gleich 0,5 m/s realisiert. Mit anderen Worten bewegt sich die Appliziereinrichtung relativ zu dem Applikationsbereich während der Applikation des Halbzeugs mit einer Geschwindigkeit größer oder gleich 0,5 m/s. Bevorzugt wird eine Tool-Center-Point Geschwindigkeit größer oder gleich 2 m/s, weiter bevorzugt größer oder gleich 5 m/s und ferner bevorzugt größer oder gleich 10 m/s realisiert.

Die Kompositionsanlage kann ferner zumindest einen Positionsgeber zur Bestimmung der Position der Appliziereinrichtung umfassen. Mittels des Positionsgebers ist eine Rückmeldung (feed-back) z.B. an die Steuereinrichtung möglich, so dass die Position der Appliziereinrichtung verifiziert werden kann.

Die Vorratseinrichtung kann überdies eine freie Schlaufe zur Ausbildung eines Halbzeugpuffers umfassen. In einer Ausführungsform kann diese Schlaufe eine Spannungskontrolleinheit aufweisen. In einer weiteren Ausführungsform können die durch Reibung erzeugten Ladungen über eine elektrisch leitfähige Bürste abgeführt werden.

Die Vorratseinrichtung kann überdies eine Tänzereinheit zur Ausbildung eines Halbzeugpuffers umfassen. In einer Ausführungsform ist die Tänzereinheit kraft- und weggesteuert, in einer bevorzugten Ausführung kraft- und weggeregelt.

Die Vorratseinrichtung kann eine Fangvorrichtung zur sicheren Zuführung des Halbzeugs in die Appliziereinrichtung umfassen.

Der Winkel ($\alpha$) der Heizquelle zum Substrat ist in einer bevorzugten Ausführungsform der Heizquelle einstellbar, wobei weiter bevorzugt der Winkel der Heizquelle zum Substrat ($\alpha$) etwa halb so groß ist wie der Winkel des Einlaufs des Halbzeugs auf das Substrat ($\beta$).

Die Heizeinrichtung kann derart hergerichtet sein, pro Millimeter Halbzeugbreite (mm-Hb) eine Heizeinrichtungsmasse von weniger als 200 g/mm-Hb, bevorzugt weniger als 120 g/mm-Hb, weiter bevorzugt weniger als 100 g/mm-Hb aufzuweisen. Es ist mit der vorliegenden Erfindung sogar möglich, eine Heizeinrichtungsmasse von gleich oder weniger als 25 g/mm-Hb zu realisieren. Eine besonders niedrige Heizeinrichtungsmasse kann beispielsweise die bewegte Masse der Kompositionsanlage weiter reduzieren und somit höhere Beschleunigungen der bewegten Masse, d.h. insbesondere der Appliziereinrichtung, ermöglichen. Mit anderen Worten kann die Heizeinrichtung in Abhängigkeit von den erwartet zu bearbeitenden Halbzeugbreiten so angepasst werden, dass eine möglichst kompakte und leichte Heizeinrichtung zur Verfügung steht.

Die Heizeinrichtung kann ferner hergerichtet sein, eine relative Leistung im Verhältnis zur Halbzeugbreite (mm-Hb) von gleich oder mehr als 20 W/mm-Hb multipliziert mit der Tool-Center-Point-Geschwindigkeit (vTCP [m/s]), bevorzugt gleich oder mehr als 100 W/mm-Hb * vTCP, und/oder eine relative Leistung von bis zu 300W/mm-Hb * vTCP zu erzeugen.

Die Heizeinrichtung kann eine Brenngasdüse umfassen. Die Heizeinrichtung ist in diesem Fall eine Brenngas-Heizeinrichtung.

Zum Zünden des Brenngases kann ferner eine Zündeinrichtung umfasst sein. Die Zündeinrichtung kann in diesem Fall das Brenngas beispielsweise mit einem Lichtbogen und/oder einem Zündfunken entzünden.

Das Brenngas strömt beispielsweise bahnbezogen wenige Millimeter vor dem Zündpunkt aus. Es ist besonders bevorzugt, dass das Brenngemisch zum wegbezogenen Zündpunkt mit einer Präzision von $\pm$ 0,5 mm oder präziser entzündet werden kann. Die Zündeinrichtung wird vorzugsweise mit 5 bis 30 kV betrieben.

Die Brenngasdüse kann in einer bevorzugten Ausführung gestaltet sein, im Betrieb durch das bei der Verbrennung entstehende Brenngas-Abgasgemisch eine Schutzgasumgebung im Bereich um die Fügeflächen auszugestalten. Mit anderen Worten wird beispielsweise die aus der Brenngasdüse austretende Fluidströmung derart gelenkt, gerichtet oder fokussiert, dass das Brenngas-Abgasgemisch im Bereich der Fügeflächen konzentriert wird. Somit wird am Ort der Fügeflächen eine geringe Konzentration freier Sauerstoffatome erzeugt. Die geringe Konzentration freier Sauerstoffatome wiederum vermag die Degradation der Halbzeuge zu vermindern und somit ggf. die Lebensdauer und/oder die Belastbarkeit des hergestellten Verbundwerkstoffes zu erhöhen.

Es hat sich in einer weiteren Ausführungsform als vorteilhaft erwiesen, wenn das Halbzeug Sphärolite, Pigmente und/oder eingebettete Fasermaterialien umfasst, da mit der Variation solcher Materialien und/oder Polymerstrukturen in das Halbzeug ein Gradient der Wärmeverteilung der durch die Heizeinrichtung in dem Halbzeug eingebrachten Wärmeenergie besser eingestellt werden kann. Mit anderen Worten lässt sich mittels dem Einsatz von Sphäroliten, Pigmenten und/oder eingebetteten Fasermaterialien der Ort und/oder die Ausprägung der Schmelzzone einstellen.

In einer Ausführungsform umfasst die Heizeinrichtung Lichtwellenleiter zum Transport der Wärmeenergie. Mit anderen Worten kann eine Wärmequelle entfernt von dem Halbzeug bzw. dem Substrat angeordnet werden, wobei die Wärme z.B. in Form von Wellen wie Wärmestrahlung, oder auch in Form von Laserstrahlung durch den Lichtwellenleiter zu dem Halbzeug bzw. dem Substrat transportiert werden kann. Bevorzugt kann die Heizeinrichtung hierbei zumindest ein Lasermodul, insbesondere zumindest ein Diodenlasermodul, umfassen. Die Energie dieser Module lässt sich über Lichtwellenleiter transportieren. Beispielsweise können Diodenlasermodule eingesetzt werden, die in Anlagen zur Laserbeschriftung verwendet werden.

Die Heizeinrichtung kann in einer Ausführungsform mehrere, insbesondere verschiedene, Wärmequellen aufweisen zur Einstellung der Schmelzzone. Insbesondere bei einem Wechsel des Halbzeugs, beispielsweise dabei bei einer Änderung der Wärmekapazität, bei einer Änderung der Schmelztemperatur des Halbzeugs, Änderungen der Dicke und/oder Breite des Halbzeugs ist es vorteilhaft, wenn die Heizeinrichtung bereits verschiedene Wärmequellen aufweist. Dies ermöglicht ggf. eine kürzere Wartezeit bei einem Wechsel der Halbzeuge und somit - im Ergebnis - eine kürzere Standzeit zwischen dem Auftragen des Halbzeugs auf den Applikationsbereich. Die Kompositionsanlage kann mehrere Heizeinrichtungen aufweisen, was beispielsweise bei der Applikation von Halbzeugen in unterschiedlichen Richtungen von Vorteil ist.

Bevorzugt kann die Heizeinrichtung die Schmelzzone für jeden Bahnpfad individuell erzeugen. Dies ist insbesondere interessant, wenn beispielsweise bei einem ersten Bahnpfad die Wärmequelle mit einer anderen Einstellung betrieben wird, als bei einem darauffolgenden weiteren Bahnpfad.

In einer weiteren Ausführungsform können die translatorischen Antriebe der Antriebseinheit in der Schwerpunktsebene der zu beschleunigenden Masse, d.h. insbesondere der Appliziereinrichtung, angeordnet sein. Die translatorischen Antriebe der Antriebseinheit können bevorzugt auch in einem Bereich von $\pm 100$ mm um die Schwerpunktsebene der zu beschleunigenden Masse angeordnet sein.

Ein Aspekt der vorliegenden Erfindung hat also zusammenfassend den Hintergrund, dass bei herkömmlichen Verfahren ein oder mehrere Faserhalbzeuge, die eine geringe Masse aufweisen, mit einer Vorrichtung prozessiert werden, wobei im Verhältnis zu den Faserhalbzeugen die bewegte Masse der Vorrichtung um Vielfache größer ist. Die typischerweise früher eingesetzten Portalsysteme und Knickarmroboter müssen zusammen mit der Applikationseinheit eine bewegte Masse zwischen 750 kg bis hin zu 25 t entlang des Bahnpfades präzise beschleunigen und bremsen. Die hierfür notwendigen Antriebsleistungen lassen sich über den physikalischen Ansatz Kraft = Masse x Beschleunigung ableiten. Während der Beschleunigungs- und Bremsphasen ist die Appliziergeschwindigkeit nicht konstant. Dies führt entweder zu einer Nachregelung der Temperaturführung oder zu einem ungleichmäßigen Energieeintrag in die Halbzeuge.

Mit anderen Worten kann bereits die Ermangelung an der dynamischer Leistungsfähigkeit der Antriebseinheit, insbesondere die dynamische Leistungsfähigkeit zur Beschleunigung der bewegten Masse der Kompositionsanlage, den möglichen Applikationsbereich einschränken, der mit einer konstanten Tool-Center-Point-Geschwindigkeit genutzt werden kann. Es ist bevorzugt, dass die dynamische Leistungsfähigkeit der Kompositionsanlage die Abmessungen des Applikationsbereichs definiert. Es ist ferner bevorzugt, dass die dynamische Leistungsfähigkeit der Antriebseinheit derart hergerichtet ist, dass der bedienbare Applikationsbereich maximiert wird.

Aus diesen Zusammenhängen leitet sich auch eine starke Restriktion der minimal erreichbaren Zykluszeit für eine Herstellung des Bauteils oder einer Preform ab.

Ein weiterer wesentlicher Zusammenhang ist die thermodynamische Steuer- und Regelbarkeit einer Heizquelle. Für hohe Appliziergeschwindigkeiten und der Einstellung eines definierten Schmelzverhaltens der Polymerkomponenten ist es vorteilhaft, hohe Wärmeenergien von beispielsweise mehreren hundert- bzw. tausend Watt konzentriert auf eine kleine Fläche der Schmelzzone zu erzeugen. Studien haben vorliegend ergeben, dass es besonders aufwändig ist, diese Energien für eine Appliziergeschwindigkeit dynamisch an eine variierende Tool-Center-Point-Geschwindigkeit zum Erhalt eines konstanten Energieeintrags in das Halbzeug zu steuern oder zu regeln. Es ist vorteilhaft, die Heizquelle mit den hohen Energiedichten digital an- oder auszuschalten. Für ein definiertes Konsolidierungs- bzw. Teilkonsolidierungsverhalten oder Vernetzungsverhalten können die Einstellungen der Heizquelle für eine konstante Tool-Center-Point-Geschwindigkeit ermittelt werden und diese können z.B. für die Applikation mindestens einer Bahn konstant gehalten werden.

Es wurde im Rahmen der vorliegenden Erfindung erkannt, dass bereits höhere Appliziergeschwindigkeiten und Prozessgeschwindigkeiten mit einer Vorrichtung und einem Verfahren zur Komposition von Faser-Kunststoff-Verbunden erreicht werden können, wenn in vorteilhafter Weise die bewegten Massen der Vorrichtung deutlich verkleinert werden. Es wurde daher insbesondere eine dynamische, elektronische Synchronisation der Bewegung mehrerer Achsen entwickelt, wobei leistungsfähige Antriebe, eine leistungsfähige Steuerung, sowie eine schlanke PLC-Programmierung entwickelt wurde, mittels derer die vorliegende Erfindung weiter verbessert und ausgestaltet werden kann.

Das Verhältnis von Antriebsleistung zur bewegten Masse kann in vorteilhafter Weise unter den Randbedingungen der Steifigkeits- und Festigkeitsanforderung des Faser-Kunststoff-Verbundes optimiert und präzise angesteuert werden.

Diese Verfahren ermöglichen eine anforderungsgerechte Faserorientierung und eine frei wählbare Positionierung der Verstärkungsphase im Bauteil.

Es ist möglich diese Technologien auch zur lokalen, lastpfadgerechten Verstärkung einzusetzen.

Die Halbzeuge können unterschiedlichste Geometrien aufweisen und die Zusammensetzung aus Fasern und Matrizes ist im Rahmen der physikalischen Möglichkeiten frei wählbar. Darüber hinaus wird auf Basis des Imprägnierzustands sowie der Massen- und Volumenverhältnisse zwischen bebinderten, teilkonsolidierten und vollkonsolidierten Faserhalbzeugen unterschieden.

Die vorgestellte Erfindung löst also die Aufgabe, einen Faser-Kunststoff-Verbund, welcher aus unterschiedlichsten Faser- und/oder Polymerhalbzeugen oder eigenverstärkten Polymeren und/oder vorstreckten Polymeren oder deren Kombinationen komponiert werden kann, vollautomatisch richtungs- und positionsvariabel herzustellen. Die vorgestellte Erfindung ist darüber hinaus kompakt aufgebaut, so dass der Platzbedarf gegenüber bekannten Anlagen verringert werden kann.

Das Funktionsprinzip der Komposition von Faser-Kunststoff-Verbunden wird wesentlich durch die von einer Antriebseinheit bereitgestellten Translation und der Ablage von Halbzeugen über eine Appliziereinrichtung gebildet.

Hierfür können durch den Bediener Bahnstartpunkte und Bahnendpunkte bzw. Bahnpfade definiert und über eine Benutzerschnittstelle eingegeben werden. Alternativ oder kumulativ können diese über eine Schnittstelle von anderen Geräten eingelesen werden. Die Eingabe von Bahnstartpunkten und Bahnendpunkten bzw. Bahnpfaden kann vorzugsweise auch pro Bahn bzw. pro Schicht möglich sein.

In einer Ausführungsform erfolgt vor jeder Bahnbewegung die Berechnung bahnrelevanter Ereignisse und/oder Prozessparameter auf Basis der eingegebenen Bahnstart- und Bahnendpunkte. Prozessparameter können sowohl geschwindigkeitsabhängig als auch geschwindigkeitsunabhänig sein.

Zu den Prozessparametern zählen beispielsweise Orte, an denen Ereignisse stattfinden können oder ausgelöst werden müssen. Prozessparameter können in Abhängigkeit von konstruktionsbedingten Maschinenkonstanten berechnet werden. Eine Maschinenkonstante kann beispielsweise die minimale Ablegelänge sein. Prozessparameter können geschwindigkeitsabhängige Distanzen in der Einheit [mm] sein, oder geschwindigkeitsunabhänige prozessrelevante Orte in der Einheit [mm] oder über den Verlauf einer Bahn konstante Parameter, wie beispielsweise der Winkel der Appliziereinheit um die Z-Achse.

Ein geschwindigkeitsabhängiger Prozessparameter kann beispielseise die Vorlaufdistanz zum Starten des Halbzeugtransports sein, um zu gewährleisten, dass der Bahnstartpunkt mit dem geforderten Ablagestartpunkt exakt zusammenfällt.

Geschwindigkeitunabhängige Prozessparameter können beispielsweise sein die bahnbezogenen Orte des Trennvorgangs, Bahnstart- und Bahnendpunkte oder Start- und Endpunkte.

- Ereignisse können beispielsweise sein: Schneiden des Halbzeugs
- Starten des Halbzeugtransports
- Stoppen des Halbzeugtransports
- Heizquelle an
- Heizquelle aus
- Zündung an
- Zündung aus
- Appliziereinheit absenken
- Appliziereinheit anheben
- Richtungswahl Halbzeug "duplex"

Alle Parameter können in einem Zwischenspeicher hinterlegt bzw. gespeichert werden. Die Berechnung kann vor der eigentlichen Bewegung stattfinden.

Beschleunigungs- und Bremsvorgänge der Antriebseinheit können bevorzugt durch die Berechnung automatisch ergänzt werden, so dass während der Applizierung der Halbzeuge eine konstante Tool-Center-Point-Geschwindigkeit gewährleistet sein kann. Hochgeschwindigkeit bedeutet im Sinne der vorliegenden Erfindung eine konstante Tool-Center-Point-Geschwindigkeit ab 0,5 m/s.

In einer Ausführungsform werden alle Ereignisse und/oder Prozessparameter in maschinenrelevante Parameter umgerechnet. Hierbei handelt es sich beispielsweise um definierte Achspositionen. Diese Vorgehensweise kann iterativ für alle Bahnen und für alle Lagen durchgeführt werden. Die Parameter können in einem Zwischenspeicher hinterlegt bzw. gespeichert werden.

Die Bewegung startet mit dem Anfahren des Startpunktes der Bahn und der Ausrichtung aller Achsen in eine definierte Ausgangsstellung. Am Startpunkt sind alle relevanten Achsen zur Applizierung von Halbzeugen voll elektronisch synchronisiert.

Beispielsweise ist die Fördereinheit der Halbzeuge mit der Tool-Center-Point Geschwindigkeit synchronisiert. Im Resultat ist ein Gleichlauf gewährt. Dieser Gleichlauf ist bei der Halbzeugablage von gewisser Bedeutung, da es vorteilhaft ist, wenn keine relative Kraft zwischen Halbzeug und Werkzeugoberfläche oder Halbzeug und Halbzeug entsteht. Eine solche relative Kraft könnte zu einem Gleiten, einer inkorrekten Positionierung oder einer schlechten Konsolidierungsqualität führen. Für die vorgestellte Kompositionsanlage oder das Verfahren konnte mittels Messungen beispielsweise für ein 20 mm PA6-CF-Halbzeug eine zu vernachlässigende relative Kraft in einer Größenordnung < $^+/_-$ 0,1 N ermittelt werden.

Diese Kopplung kann zum Beispiel über ein Motion-Control-System in Verbindung mit speziell ausgelegten Controllern umgesetzt werden, die einen synchronen Lauf der Antriebe, d.h. mit einer relativen Geschwindigkeitsdifferenz im Bereich gleich oder weniger als $\pm 2\%$, beispielsweise aber auch im Bereich gleich oder weniger als $\pm 5\%$ oder auch gleich oder weniger als $\pm 10\%$, auch bei unterschiedlichen Getriebeverhältnissen gewährleisten. Diese Technologie kann daher auch in vorteilhafter Weise beispielsweise klassische Kurvengetriebe mit Königswellen oder starre mechanische Kopplungen substituieren.

Die Antriebe in der Appliziereinheit für die Halbzeuge können mit der Tool-Center-Point-Geschwindigkeit der Antriebseinheit der Kompositionsanlage derart synchronisiert sein, dass im Resultat ein Gleichlauf gewährt ist, bei dem die relative Kraft, die zwischen Halbzeug und dem thermisch isolierenden Material oder der Trägerfolie oder dem Werkzeug oder dem Applikationsbereich oder dem Faser-Kunststoff-Verbund wirkt kleiner oder gleich 0,01 N/mm-Halbzeug beträgt.

Die Kompositionsanlage kann eine Halbzeugwechseleinrichtung zum automatischen Wechsel des Halbzeugs umfassen. Die zur Bevorratung der Halbzeuge eingesetzten Magazine oder Spulen können also beispielsweise für eine automatische Zuführung der Halbzeuge zur Kompositionsanlage automatisch gewechselt werden.

Die Beschleunigungsenergie des Antriebssystems bzw. aller Antriebe kann z.B. teilweise über ein Energierückgewinnungssystem genutzt werden. Das Energierückgewinnungssystem kann z.B. aus der bei den Bremsvorgängen frei werdenden Energie gespeist werden. Insbesondere erfolgt dies über die Zwischenkreisspannung.

Prozessparameter können sowohl geschwindigkeitsabhängig als auch geschwindigkeitsunabhänig sein. Zu den Prozessparametern zählen beispielsweise Orte, an denen Ereignisse stattfinden können oder ausgelöst werden müssen. Prozessparameter können in Abhängigkeit von konstruktionsbedingten Maschinenkonstanten berechnet werden. Prozessparameter liegen typischweise in der Einheit [mm] vor. Die Ereignisse und Prozessparameter sind typischerweise bahnabhängig, basieren auf der Berechnung und sind im Zwischenspeicher hinterlegt. Alle Ereignisse können mit einer Präzision von bis zu +/- 0,005 mm über alle Tool-Center-Point-Geschwindigkeiten ausgeführt werden. Selbstverständlich sind auch niedrigere, d.h. schlechtere, Präzisionen möglich.

Weiter bevorzugt werden beim Anfahren des Endpunktes die Ereignisse über die Prozessparameter hoch präzise und wegabhängig durchgeführt. Die Bahnposition wird aus den Ist-Daten der Positionsgeber der Achsen errechnet.

Anschließend kann beispielsweise die elektronische Synchronisation ausgeschaltet und ein neuer Startpunkt angefahren werden.

Dies wird bevorzugt für alle Bahnen und Lagen ausgeführt.
Die Komposition des Faser-Kunststoff-Verbunds kann aus mehreren einzelnen Berechnungen zusammengesetzt sein. Ein Sonderfall ist die Komposition eines Faser-Kunststoff-Verbunds aus jeweils einer Bahn. Dies ermöglicht beispielsweise einen materialspezifischen Einsatz von Halbzeugen für jede Bahn, also mit anderen Worten die Verwendung verschiedener Halbzeugmaterialien bei aufeinanderfolgenden Bahnen.

Bei dem Verfahren zur Komposition von Faser-Kunststoff-Verbunden werden insbesondere Faser- und/oder Polymerhalbzeuge und/oder eigenverstärkte Polymere und/oder vorstreckte Polymere und/oder deren Kombinationen bereitgestellt. In der Folge werden die mit der Kompositionsanlage zu verarbeitenden Materialien, an denen bereits eine Wertschöpfung erfolgt ist, als Halbzeuge bezeichnet.

Typischerweise werden die Halbzeuge auf Spulen aufgewickelt. Es sind aber auch andere Magazinierungsformen oder bereits konfektionierte Zuschnitte anwendungsgerecht. Die Spulen oder Magazine für die Halbzeuge befinden sich in einer Ausführungsform oberhalb der Werkzeugfläche und können das Material elektronisch gekoppelt und entkoppelt von der Bewegung des Antriebsystems und der Appliziereinrichtung manuell oder automatisch fördern. Die Fördergeschwindigkeit und die Fördermenge sind über einen Sensor überwacht.

In einer Ausführungsform wird eine Zugspannung in Längsrichtung der Halbzeuge mittels einer Tänzereinheit zur Ausbildung eines Halbzeugpuffers erzeugt. Die Zugspannung kann dabei bevorzugt eingestellt und/oder mit einem Sensor überwacht werden.

Die Spulen oder Magazine können gleiche oder unterschiedliche Halbzeuge enthalten. In einer Ausführungsform lassen sich die Spulen oder Magazine für eine kontinuierliche Komposition von Verbundwerkstoffen im Verarbeitungsprozess tauschen, so dass eine kontinuierliche Verarbeitung gewährleistet werden kann. Hierfür kann jede Spule oder jedes Magazin individuell angetrieben sein. In einer Ausführungsform erfolgt dieser Antrieb über einen stirnseitigen Antrieb, der außen auf das Spulen- oder Magazingehäuse ansetzt.

Es können unterschiedlichste Halbzeuge appliziert werden. Diese Halbzeuge können vollkonsolidiert, teilkonsolidiert, behindert, benetzt sein oder aus Kombinationen daraus bestehen. Als polymere Anteile können Duroplaste, Thermoplaste, Elastomere, deren Derivate und Kombinationen daraus prozessiert werden. Als lasttragende Faserkomponenten können Glasfasern, Kohlenstofffasern, Keramikfasern, Aramidfaser, Stahlfasern, Naturfasern, Nylonfasern (z.B. von Du Pont), Basaltfasern, Borfasern, weitere Fasern oder Kombinationen daraus Anwendung finden.

Darüber hinaus lassen sich mit einer entsprechend angepassten Appliziereinrichtung auch Piezofasern, Formgedächtnis-Polymere oder Legierungen oder faseroptische Systeme zur Adaptronik, Sensorik oder Datentransport in die Komposition des Verbundwerkstoffes automatisch einbetten.

Die Abmessungen dieser Materialien liegen typischer Weise in einer Breite von 2,5 bis 300 mm, bevorzugt 12 bis 100 mm, vor und haben eine Dicke von 0,05 bis 10 mm, bevorzugt 0,1 bis 0,5 mm. Weitere Abmessungen sind ebenfalls anwendungsgerecht.

Eine Fangvorrichtung kann eingesetzt sein, die von den Spulen oder Magazinen geförderten Halbzeuge der Appliziereinrichtung sicher zuzuführen. Die Fangvorrichtung zentriert die Materialien oberhalb der Einführung in die Appliziereinrichtung während das neue Material in die Appliziereinrichtung transportiert wird. Durch das Zusammenwirken von Spulen oder Magazinen, Fangvorrichtung und Appliziereinrichtung können schnelle Halbzeugwechsel durchgeführt werden oder eine kontinuierliche Produktion gewährleistet werden. In vorteilhafter Weise befinden sich die Spulen oder Magazine für das Halbzeug in dieser Ausführungsform über der Anlage.

In einer zweiten Variante platzieren sich die Anlage und der Bandzuführmechanismus für einen Materialwechsel an einem Übergabepunkt, das Band kann von einem Greiferkopf am Zuführarm automatisch gegriffen und über die Umlenkrollen in den Bandfördermechanismus des Kopfes geschoben werden. Erkennt der Bandsensor in der Appliziereinrichtung das Material vorhanden ist wird der Greifer gelöst. Auf einen zweiten Fördermechanismus in der Appliziereinrichtung kann damit verzichtet werden.

Das erfindungsgemäße Verfahren bzw. die erfindungsgemäße Vorrichtung ist durch die flexible Regel- und Steuerbarkeit der physikalischen Prozessgrößen Druck (Konsolidierungskraft), Temperatur (Energieeintrag) und Zeit (Geschwindigkeit) beispielsweise nicht auf eine explizite Prozessparameterkonstellation festgelegt. Die Prozessgrößen können materialabhängig sein.

Die Konsolidierungsraft wirkt senkrecht zur Bahntangente und kann zwischen 25 und 5000 N pro Applizierungseinheit betragen. In einer Ausführung kann zur Verbesserung der Konsolidierungsqualität die Konsolidierungskraft oszillierend, mit einer Amplitude von bis zu 30 % der Konsolidierungskraft, mit einer Frequenz von 60 bis 15000 Hz beaufschlagt werden.

Im Rahmen der Bildung der vorliegenden Erfindung wurde ferner erkannt und erforscht, inwiefern die Ausbildung einer dünnen und variabel an die Material- und Prozesserfordernisse anpassbaren Schmelzschicht in dem Halbzeug ein neuartiges Fügeverhalten ermöglicht. Das neuartige Fügeverhalten kann beispielsweise eine weitere Prozessbeschleunigung ermöglichen.

Der Energieeintrag kann beispielsweise mit einer Brenngasdüse in einer korrelierten Leistung zwischen 100 W und 25 kW gewählt werden. Die Vorschubgeschwindigkeit kann zwischen 0,5 und 10 m/s gewählt werden. Beispielsweise für ein thermoplastisches Polyamid-6 Kohlenstofffaserhalbzeug, mit 55 % Faservolumenanteilen, einer Breite von 50 mm, ergibt sich eine Teilkonsolidierung (unvollständige Autohäsion) bei 3 m/s mit einer korrelierten Leistung von 4,5 kW und eine Vollkonsolidierung bei einer korrelierten Leistung von 6,8 kW.

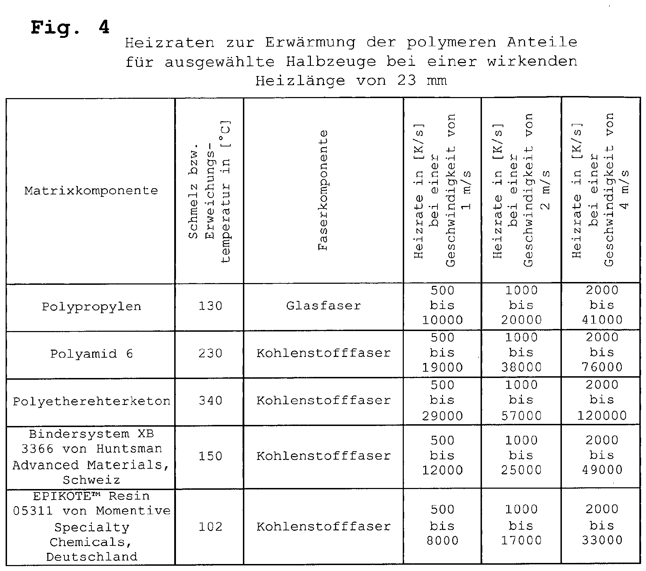

Von besonderem Vorteil ist ein Fügeverfahren, bei welchem sehr hohe Heizraten mit der Heizvorrichtung erwirkt werden. Beispiele für effektiv wirkende Heizlängen wurden in eigenen Testreihen ermittelt, deren Ergebnisse in Fig. 4 tabellarisch wiedergegeben sind.

Mit dem erfindungsgemäßen Verfahren können zwei schmelzflüssige Polymerphasen in Kontakt gebracht werden. Sowohl die polymeren Anteile des Halbzeugs als auch die polymeren Anteile des Substrats sind bereits kurz vor dem Nip-Point schmelzflüssig. Der Nip-Point ist der Punkt, in dem das einlaufende Halbzeug und das bereits abgelegte Substrat im schmelzflüssigen Zustand sind und durch die Applikation des Konsolidierungsdrucks unter der Konsolidierungsrolle in Kontakt gebracht werden. Das "in Kontakt Bringen" erfolgt in der schmelzflüssigen Phase.

In einer bevorzugten Ausführung ist der Winkel der Heizquelle zum Substrat $\alpha$ halb so groß wie der Winkel des Einlaufs des Halbzeugs $\beta$.

Durch eine Variation von $\alpha$ und $\beta$ kann die Schmelzzone zum Substrat oder zum Halbzeug hin verschoben werden. Wenn $\beta - \alpha > 0,5\,\beta$, dann verstärkt sich die Schmelzzone im Halbzeug. Wenn $\beta - \alpha < 0,5\,\beta$, dann verstärkt sich die Schmelzzone im Substrat.

In einer bevorzugten Ausführung ist $\alpha = 22,5°$ und $\beta = 45°$.

Die Position der Heizquelle $X_{HQ}$, $Y_{HQ}$, $Z_{HQ}$ ist an der Appliziereinrichtung einstellbar.

In einer weiteren Ausführungsform beruht der Fügeprozess des Kunststoff-Laserstrahlfügens auf der Absorption von Strahlungsenergie der Fügepartner und der damit einhergehenden Erwärmung. Die Absorption wird dabei hauptsächlich von der Wellenlänge der Strahlungsquelle, dem zu verbindendem Material und den darin enthaltenen Zusatzstoffen beeinflusst.

Kurzwellige Laserstrahlung wie z.B. Dioden- Laser weisen eine geringere Absorption als z.B. die langwelligere Strahlung von CO2- Lasern auf.

Amorphe Kunststoffe haben einen geringeren Absorptionsgrad als teilkristalline Kunststoffe, da es bei diesen durch die kristallinen Strukturen (z. B. Sphärolithe) zu Streueffekten kommen kann. Ähnliche Effekte werden durch eingebettete Fasermaterialien und gegebenenfalls durch Pigmentierung erreicht. Das Absorptionsverhalten und damit Ort und Ausprägung der Schmelzzone lassen sich dadurch beeinflussen.

Für den vorliegenden Prozess ist eine hohe Absorption der Strahlung in den Fügeflächen und damit verbunden eine geringe Eindringtiefe in die zu verbindenden Materialen vorteilhaft. Durch Abstimmung der Materialparameter, der Verarbeitungsgeschwindigkeit, der Bestrahlungsflächen, der Strahlungsleistung und der Leistungsverteilung lässt sich in besonders vorteilhafter Weise ein hoher Gradient der Wärmeverteilung in Dickenrichtung des Halbzeugs und/oder des Faser-Kunststoff-Verbundes bzw. des Substrats einstellen. Die Schmelzzone kann damit lokal stark begrenz werden und die gespeicherte Wärmekapazität gering gehalten werden.

Die Wärmekapazität von diesen Verbundwerkstoffen kann in einer Näherung über die spezifischen Eigenschaften der Dichte, der Fasermassen- und Faservolumenanteile beschrieben werden.

$$c_{p,FKV} = \psi \cdot c_{p,Faser} + (1 - \psi) \cdot c_{p,Matrix}$$

$$\psi = \frac{m_{Faser}}{m_{FKV}} = \frac{\rho_{Faser} \cdot \varphi}{\rho_{Faser} \cdot \varphi + \rho_{Matrix} \cdot (1 - \varphi)} = \text{Fasermassenanteil}$$

$$\varphi = \text{Faservolumenanteil}$$

Am Beispiel CF-PA6 mit einem Faservolumengehalt von 50 % ergibt sich ein $c_{p,FKV}$ von ca. 1130 J/kgK.

Beispielsweise kann somit für Abmessungen des Halbzeugs mit einer Breite von 20 mm und einer Dicke von 0,13 mm und einer mit der Heizeinrichtung erzielten effektiven Heizlänge von 23 mm bei einem auf 400 °C erwärmten Halbzeug eine Wärmemenge von ca. 37 J bei einer Verarbeitungsgeschwindigkeit von 0,1 m/s berechnet werden. Bei 1 m/s ergeben sich 11,5 J und bei 4 m/s lediglich 5,7 J. Die eingebrachten Wärmeenergien sind erfindungsgemäß sehr viel geringer als bei bestehenden Technologien.

Die gesamte Masse für die Heizquelle inklusive Halterung, Zündeinrichtung und Brenngaszuführung beträgt in dieser Ausführungsform beispielsweise weniger als 2250 g. Pro Millimeter Halbzeugbreite ergibt sich eine kumulierte Heizquellenmasse von unter 120 g/mm-Halbzeug und eine relative Leistung im Verhältnis zur Halbzeugbreite von bis zu 185 W/mm-Halbzeug.

Ab dem Kontaktpunkt der Grenzflächen (Nip-Point) von Halbzeug und Substrat unter der Konsolidierungsrolle findet insbesondere keine direkte Erwärmung durch Strahlung mehr statt und die sich einstellende Homogenisierung der Wärmeverteilung führt zur Phasenänderung und damit zum Fügen der Materialien.

In einer weiter bevorzugten Ausführungsform lassen sich durch eine Faserkopplung mittels Lichtwellenleiter mehrere Laser-Module, wie sie z.B. in Anlagen zur Laserbeschriftung verwendet werden, an einer günstigen Stelle der Anlage platzieren, d.h. insbesondere entfernt von dem Halbzeug bzw. dem Substrat. Die Lichtwellenleiter können dann nahe der Erwärmungszone, in einem Halter, beispielsweise Spalten- und Zeilenweise zusammengefasst werden. Durch die geometrische Aufteilung bzw. die Steuer- und Regelbarkeit insbesondere der Ausgangsleistung der einzelnen Module kann daher die Leistungseinbringung und Aufteilung der eingebrachten Energie in Substrat und Halbzeug gesteuert und damit Ort und Ausprägung der Schmelzzone vorteilhaft beeinflusst werden. Mit anderen Worten ist der Halter der Heizeinrichtung derart gestaltet, dass die Schmelzzone bei dem Erhitzen des Halbzeugs auf die Fügeflächen konzentriert wird. Im Falle des Einsatzes von Laserstrahlung ist es bevorzugt, wenn gleich oder mehr als 65% der Wärmeenergie, weiter bevorzugt gleich oder mehr als 75%, noch weiter bevorzugt gleich oder mehr als 85% der Wärmeenergie so auf die Fügefläche konzentriert wird, dass die beabsichtigte Schmelzzone, d.h. die effektiv wirkende Heizlänge von 23 mm, erwärmt wird.

Bei Verwendung kurzwelliger Laserstrahlung wie beispielsweise von Diodenlasern und die damit einhergehende hohe Divergenz der Strahlung nach dem Verlassen des Lichtleiters besteht die Möglichkeit, Erwärmungseinheiten ohne strahlformende Optiken zu bauen. Durch diese Ausführung lassen sich daher kompakte, bauraumoptimierte Erwärmungseinheiten bauen, die wiederum nahe der Erwärmungszone montiert werden können. Darüber hinaus kann die Masse der Wärmequelle inkl. der Lichtwellenleiter und der Halterung gering gehalten werden.

Beispielsweise sind für PA-6 aus Kohlenstofffasern mit 50 % Faservolumengehalt und mit einer Breite von 20 mm 6 Module für das Hochgeschwindigkeitsfügen gekoppelt. Diese Module haben eine Ausgangsleistung von bis zu 6 kW. Die gesamte Masse der 6 Module inklusive Lichtwellenleiter und Halterung beträgt 3750 g. Pro Millimeter Halbzeugbreite ergibt sich in dieser Ausführungsform somit eine kumulierte Heizquellenmasse von unter 200 g/mm-Halbzeug und eine relative Leistung im Verhältnis zur Halbzeugbreite von bis zu 300 W/mm-Halbzeug.

Die ausgeführten Heizquellen stellen hohe Energiedichten mit einer hohen Heizleistung zur Verfügung.

Das erfindungsgemäße Verfahren erwirkt in den Fügepartnern, d.h. insbesondere Halbzeug oder Substrat, einen guten Wärmeübergang.

Damit einhergehend werden hohe Heizraten erreicht. Durch die hohen Appliziergeschwindigkeiten führen die hohen Temperaturen zu geringer Degradation, da die Expositionszeit kurz gehalten werden kann. Die Expositionszeit kann in einer Variante Ausführungsform über die Wirklänge der Temperatur beeinflusst werden.

Dies wird insbesondere dadurch erwirkt, dass die Heizquelle, mit anderen Worten der Emittent der Heizleistung mit hoher Energiedichte, unmittelbar vor dem Nip-Point ortsnah angebracht wird. In einer Ausführungsform ist der Austrittspunkt der Heizenergie weniger als 85 mm vom Nip-Point entfernt. In einer bevorzugten Ausführungsform ist der Austrittspunkt der Heizenergie weniger als 55 mm entfernt.

Das erfindungsgemäße Verfahren kann geringere Viskositäten der Polymerschmelze durch einen erweiterten Temperaturbereich nutzen. Das erfindungsgemäße Verfahren erreicht das geringere Viskositätsniveau insbesondere durch höhere Verarbeitungstemperaturen. Für thermoplastische Polymere können die Viskositäten z.B. über eine Arrhenius-Beziehung abgeleitet werden. Für duroplastische Systeme kann die Vorhersage des Viskositätsverlaufs z.B. aus reaktionskinetischen Verläufen über den Molmassenaufbau durch Polyaddition und Polykondensation linearer Polymere ebenfalls durch einen Arrhenius-Ansatz mit Aktivierungsenergien und einem empirisch ermittelten präexpotenziellen Faktor und dem Polymerisationsgrad abgeleitet werden.

Zur Vermeidung von Degradation durch oxidative Zersetzungen kann in einer Ausführungsform hierfür eine Schutzatmosphäre im Bereich des Wärmeeintrags in das Halbzeug eingesetzt werden. In der Ausführungsform mit einer Brenngasdüse bilden die stark überhitzter Fluide der Verbrennung selbst eine Schutzatmosphäre aus.

In einer weiteren Ausführungsform heizt die Heizeinrichtung nicht durch die gesamte Dicke des Substrats oder des Halbzeugs, sondern bringt insbesondere aufgrund der hohen Verarbeitungsgeschwindigkeit lediglich die Oberflächen in einen schmelzflüssigen Zustand. Da nicht die komplette Dicke erhitzt wird, ist die gebundene Energie in Form von Wärme gering.

Wenn die gebundene Energie in Form von Wärme gering ist, kann diese während und nach dem Fügeprozess durch Wärmeleitung und Konvektion zügig im Substrat und an die Umgebung abgegeben werden. Mit anderen Worten werden hohe Kühlraten möglich. Ein Teil der Energie kann beispielsweise direkt beim Phasenübergang oder am Beispiel der endothermen Kristallisation bei Thermoplasten in den Erstarrungszustand absorbiert werden.

Die Wärmeleitung in Faserrichtung ist bei Faser-Kunststoff-Verbunden ggf. größer als die Wärmeleitung quer zur Faserrichtung, dies gilt insbesondere für Kohlenstofffasern. Damit kann die Energie nach der Applizierung schnell verteilt werden. Durch die schnelle Verteilung entgegen der Prozessrichtung wird die Energie schnell in das Substrat geführt und direkt beispielsweise durch Konvektion abgegeben. Damit werden sehr hohe Kühlraten möglich.

Die Wärmeleitung quer zur Faserrichtung in der Dicke des Halbzeugs kann mit der nachfolgenden Gleichung beschrieben werden:

$$\lambda_{\text{quer,FKV}} = \lambda_{\text{Matrix}} \cdot \left( \frac{1 + \xi \cdot \kappa \cdot \varphi}{1 - \kappa \cdot \varphi} \right)$$

$$\xi = \log^{-1} \cdot \sqrt{3} \cdot \log \frac{\text{Faserquerschnitt in Wärmeleitrichtung}}{\text{Faserquerschnitt quer zur Wärmeleitrichtung}}$$

$$\xi_{\text{Kreis}} = 1$$

$$\kappa = \frac{\left( \dfrac{\lambda_{\text{Faser}}}{\lambda_{\text{Matrix}}} - 1 \right)}{\left( \dfrac{\lambda_{\text{Faser}}}{\lambda_{\text{Matrix}}} + \xi \right)}$$

Da nur die Oberfläche stark erhitzt wird ist auch die Applizierung von verstreckten und eigenverstärkten Halbzeugen möglich, da die typische Morphologie der Verstreckung im Innern des Halbzeugs erhalten bleibt.

Der Grad an Autohäsion ist über die Prozessparameter Druck, Temperatur und Zeit auch in den erweiterten Temperatur- und Viskositätsbereichen des Hochgeschwindigkeitsfügens einstellbar. Kohäsives Fügen ist mit einer homogenen, polymeren Oberfläche des Halbzeugs in Hochgeschwindigkeit möglich. Adhäsion wirkt bei unterschiedlichen Fügepartnern oder mit zumeist chemischen Zusatzstoffen.

In der Summe ergibt sich ein Fügeverfahren, mit einem definierbaren Grad der Autohäsion oder Adhäsion, das ein Hochgeschwindigkeitsfügen aus mindestens zwei Fügepartnern mit einer Vorschubgeschwindigkeit des Halbzeugs und/oder Translationsgeschwindigkeit der Appliziereinrichtung von größer oder gleich 0,5 m/s ermöglicht.

Die Appliziereinrichtung kann beispielsweise die geförderten Halbzeuge aufnehmen. Über einen Sensor wird sichergestellt, dass die Verarbeitungsmaterialien korrekt bereitgestellt werden. In einer bevorzugten Gestaltungsform wird die Zuführung durch eine trichterförmige Öffnung dargestellt. In einer bevorzugten Gestaltungsform wird das Halbzeug über einen ein- und ausrückbaren Fördermechanismus direkt erfasst und dem zweiten Fördermechanismus der Appliziereinrichtung zugeführt. Dies kann den Halbzeugwechsel beschleunigen.

Die korrekte Zufuhr und der korrekt ausgeführte Schnitt des Halbzeugs kann jeweils in einer Ausführungsform von einem Sensor oder von einem jeweiligen Sensor überwacht werden. Darüber hinaus kann die Temperatur der Konsolidierungsrolle überwacht werden.

Die Appliziereinrichtung hat eine Heizeinrichtung zur Herstellung des teilweise plastischen Zustands der Polymerkomponenten. Die Kombination aus Druck, Temperatur und Zeit kann für jeden Bahnpfad individuell festgelegt werden.

In einer bevorzugten Version handelt es sich um eine Brenngasdüse, die ein Brenngas- /Sauerstoffgemisch zur Energieerzeugung verbrennt. Die Fluidmengen können beispielsweise elektronisch geregelt und in Temperatur und Leistung über die Variation der stöchiometrischen Verhältnisse und/oder dem Volumenstrom angepasst werden.

Der Wärmeeintrag kann beispielsweise über Strahlung aber auch kumulativ oder alternativ über den Partikelstrom des Verbrennungsproduktes stattfinden. Bei einer Wasserstoff-Sauerstoff-Verbrennung entsteht ein stark überhitztes $H_2O$-Gemisch.

Die Umströmung mit der Brenngasatmosphäre kann in einer Ausführungsform die Degradation des Polymers durch hohe Temperaturen stark mindern, da die freien Sauerstoffatome für eine Oxidation gebunden sind. Es entsteht eine Schutzgasumgebung.

In einer Ausführungsform wird das gezündete Brenngasgemisch über einen Strömungskanal zum Halbzeug geführt. In einer bevorzugten Ausführungsform besteht der Strömungskanal aus keramischen Werkstoffen. Mit anderen Worten konzentriert die Heizeinrichtung, z.B. mittels des Strömungskanals, die Schmelzzone bei dem Erhitzen des Halbzeugs auf die Fügeflächen. Es ist bei Einsatz der Brenngasdüse bevorzugt, wenn gleich oder mehr als 40% der von der Heizeinrichtung erzeugten Wärmeenergie, weiter bevorzugt gleich oder mehr als 50%, noch weiter bevorzugt gleich oder mehr als 60% der Wärmeenergie so auf die Fügefläche konzentriert wird, dass die beabsichtigte Schmelzzone, d.h. die effektiv wirkende Heizlänge von 23 mm, erwärmt wird.

In einer Ausführungsform der Brenngasdüse wird eine elektrische Zündeinrichtung verwendet, welche das Brenngas mit einem Lichtbogen und/oder einem Zündfunken entzündet. Das Brenngas strömt bahnbezogen wenige Millimeter vor dem Zündpunkt aus, und exakt zum wegbezogenen Zündpunkt kann das Brenngasgemisch mit einer Präzision von bis zu +/-0,001 mm, auf den Bahnpfad bezogen über alle Tool-Center-Point-Geschwindigkeiten gezündet werden. Selbstverständlich sind auch niedrigere Präzisionen möglich.

Die Zündeinrichtung wird vorzugsweise mit 5 bis 30 kV betrieben.

Es können auch andere physikalische Heizprinzipien, wie beispielsweise Plasma, Laser, LED verwendet werden.

Die Halbzeuge werden über die Appliziereinrichtung, die gegenüber der Antriebseinheit eine Bewegung in Z-Richtung durchführen kann, auf die Werkzeugoberfläche gelegt. Ein elektrischer, pneumatischer oder magnetischer Aktuator erzeugt die steuerbare und regelbare Konsolidierungskraft.

Die Führungselemente für die Halbzeuge in der Appliziereinrichtung sind in einer quer zur Förderrichtung der Halbzeuge konkav oder konvex gebogenen Ausführung gestaltet. Diese Gestaltungsform nutzt den Selbstzentrierungseffekt. Darüber hinaus wird dadurch die Applizierpräzision erhöht, da die Breitentoleranz der Halbzeuge in eine gleichmäßige Biegung des Halbzeugs überführt wird und somit die absolute Breite der Führung nicht mit einer hohen Toleranz bedacht werden muss. Darüber hinaus wird durch eine Durchbiegung im Halbzeug erreicht, dass bei nicht geführten, freien Passagen die Eigensteifigkeit des Halbzeugs gegenüber Auslenkungen verbessert wird.

Die Anbauelemente der Appliziereinrichtung sind derart gestaltet, dass sie den Coandä-Effekt zur Unterstützung der Strömungsausbildung und somit zur Verbesserung der Temperaturführung nutzen. Damit wird der Energiefluss möglichst zentral in den Konsolidierungspunkt (Nip-Point) geleitet.

Durch die Ausgestaltung der Anbauelemente wird die effektive Wirklänge der Heizquelle und somit der effektive Wirkbereich der Temperatur bestimmt. Mit anderen Worten konzentrieren die Anbauelemente die Schmelzzone bei dem Erhitzen des Halbzeugs auf die Fügeflächen.

Die Appliziereinrichtung kann in einer kompakten Bauform ausgeführt sein. In Summe kann sich für die Appliziereinheit inklusive Heizquellen eine Masse von 40 kg oder weniger, in einer bevorzugten Ausführung soger eine Masse von 25 kg oder weniger ergeben.

Die Antriebe der Appliziereinrichtung können über Achsen, die den Stator des Antriebs enthalten, mit dem Gestell der Appliziereinrichtung verbunden sein. Bei den Achsen kann es sich bevorzugt um Hohlachsen handeln. Die Antriebe der Appliziereinrichtung können ferner im Innern des Rotors des Antriebs angeordnet sein.

Ferner bevorzugt können Leistungsanschlüsse bspw. für die Antriebe und/oder eine Datenanbindung der Messsysteme durch die Achse geführt sein.

Bei den Antrieben der Appliziereinrichtung kann es sich in einer weiter bevorzugten Ausführungsform um Außenläufer handeln.

Die Bodeneinheit der Vorrichtung dient insbesondere zur präzisen Aufnahme der Antriebseinheit und eines Werkzeugs. In einer bevorzugten Ausführungsform umfasst sie bearbeitetes Granit oder Beton mit einer hohen Präzision an Ebenheit, Planparallelität und Winkelabweichung. In einer bevorzugten Ausführungsform besitzt es eine Masse, die um das 15-bis 1000-fache höher ist, als die bewegte Masse.

Das Werkzeug zur Applizierung der Halbzeuge, das heißt der Applikationsbereich, kann beispielsweise aus Metall oder Kunststoff aufgebaut sein. Der Applikationsbereich kann temperiert sein.

In einer bevorzugten Bauform umfasst der Applikationsbereich ein thermisch isolierendes Trägermedium, das beispielsweise auf einem Aufnahmewerkzeug liegt und eine Wärmeleitung von < 1 W/(m · K) für polymere Werkstoffe und < 3,5 W/(m · K) für anorganische Werkstoffe und eine Dichte von < 3,5 g/cm^3 besitzt. In einer bevorzugen Bauform hat das Material eine flächige oder sphärische Ausdehnung mit einer Dicke von 0,05 mm bis 25 mm.

In einer bevorzugten Bauform wird das thermisch isolierende Material als Träger mittels Unterdruck am Werkzeug fixiert. Es kann auch kraft- oder formschlüssig fixiert werden. Eine weitere Möglichkeit der Fixierung ist die Erzeugung einer elektrischen Spannung zwischen Werkzeugplattform und thermisch isolierendem Material. In einer weiteren Ausführungsform wird für die erste Lage keine Heizquelle benötigt, da der Haftmechanismus über einen Unterdruck durch das Werkzeug selbst erzeugt wird.

In einer bevorzugten Ausführungsform wird das thermisch isolierende Material mittels Unterdruck am Werkzeug fixiert. Auf das thermisch isolierende Material ist eine Trägerfolie adhäsiv haftend aufgebracht. Auf die Trägerfolie werden im Prozess die Halbzeuge aufgebracht. Nach dem Aufbringen der Halbzeuge lässt sich die Trägerfolie von dem thermisch isolierenden Material insbesondere rückstandslos ablösen. Mittels Einstellung des Grades der Autohäsion bzw. Adhäsion bzw. Vernetzung ist es möglich, z.B. die Trägerfolie von den Halbzeugen rückstandslos zu lösen oder die Trägerfolie zusammen mit den Halbzeugen weiterführenden Prozessen zuzuführen.

Durch die flexible Regel- und Steuerbarkeit der physikalischen Prozessgrößen Druck (Konsolidierung), Temperatur und Zeit (Hochgeschwindigkeit) und die Materialauswahl des Trägermediums können Halbzeuge eine Adhäsion, Autohäsion oder kohäsiven oder chemischen Verbund mit dem thermisch isolierenden Trägermedium eingehen. Nach dem Aufbau des Verbundwerkstoffes können Trägermedium und Verbundwerkstoff gemeinsam entnommen werden.

Durch die flexible Regel- und Steuerbarkeit der physikalischen Prozessgrößen Druck (Konsolidierung), Temperatur und Zeit (Hochgeschwindigkeit) und die Materialauswahl des Trägermediums können Halbzeuge eine Teiladhäsion, Teilautohäsion oder unvollständigen chemischen Verbund mit dem thermisch isolierenden Trägermedium eingehen. Nach dem Aufbau des Verbundwerkstoffes können Trägermedium und Verbundwerkstoff ggf. voneinander getrennt werden.

Durch die flexible Regel- und Steuerbarkeit der physikalischen Prozessgrößen Druck (Konsolidierung), Temperatur und Zeit (Hochgeschwindigkeit) und die Materialauswahl können Halbzeuge untereinander eine Adhäsion, eine Autohäsion oder einen kohäsiven oder einen chemischen Verbund eingehen. Die Halbzeuge lassen sich anschließend ggf. nicht wieder voneinander trennen.

Durch die flexible Regel- und Steuerbarkeit der physikalischen Prozessgrößen Druck (Konsolidierung), Temperatur und Zeit (Hochgeschwindigkeit) und die Materialauswahl können Halbzeuge eine Teiladhäsion, Teilautohäsion oder einen unvollständigen chemischen Verbund eingehen. Die Halbzeuge lassen sich anschließend ggf. voneinander trennen.

Die Antriebseinheit ist in einer bevorzugten Version in einer Gantry-Portalbauweise ausgeführt. Die Freiheitsgrade können zwei Translationen und eine Rotation der Appliziereinrichtung umfassen. In einer bevorzugten Version werden für die translatorischen und rotatorischen Bewegungen der Antriebseinheit Direktantriebe verwendet. Die zu erzielende Kraft der Direktantriebe für eine translatorische Bewegung kann bis zu 12000 N je Antrieb und für rotatorische Direktantriebe bis 175000 Nm betragen. Alle Antriebe können mit hochauflösenden Messsystemen bestückt werden.

Die Summe der bewegten Massen wird besonders bevorzugt auf unter 250 kg reduziert. In einer Ausführungsform können die Antriebskomponenten aus Verbundwerkstoffen bestehen, wobei die bewegten Massen z.B. auf unter 75 kg reduziert werden können.

Im Resultat ergeben sich im Rahmen der vorgestellten Erfindung im Bedarfsfall Beschleunigungen von > 100 m/s2. Durch dieses Beschleunigungsvermögen kann erfindungsgemäß in sehr kurzen Zeitabschnitten auf eine Zielgeschwindigkeit beschleunigt werden. Ist die Zielgeschwindigkeit erreicht, werden die Halbzeuge mit konstanter, hoher Appliziergeschwindigkeit aufgebracht und anschließend die Appliziereinrichtung mit hoher Negativbeschleunigung verzögert. Erfindungsgemäß wird durch die Leistungsfähigkeit der Antriebe die Anlage in einer kompakten Bauform möglich.

In einer Ausführungsform befinden sich die translatorischen Antriebe in der Schwerpunktsebene der zu beschleunigenden Masse. Durch dieses Konstruktionsprinzip werden die hohen Momente bei der Beschleunigung und Verzögerung minimiert.

Durch eine Parallelisierung der kompakten Appliziereinrichtungen können die Masseneinträge der Halbzeuge vergrößert werden und somit sinkt die Zykluszeit. Eine individuelle Materialzuführung zu jeder Appliziereinrichtung ermöglicht auch in der parallelisierten Form eine bahnbezogene Wahl des Halbzeugs.

Das Verfahren und die Vorrichtung können beispielsweise über eine Steuerung auf Basis von Industrie-PCs betrieben werden. Offene Schnittstellen ermöglichen die Einbindung unterschiedlichster elektronischer Technologien in Echtzeit. Die Anlage kann umfangreiche CNC-Funktionalität mit High-Speed-Optionen für die Achsinterpolation aufweisen, damit die höchste Dynamik erreicht werden kann.

Das PLC-Programm ist beispielsweise in einer Hochsprache erstellt und kann in wenigen Mikrosekunden durchlaufen werden.

Das Verfahren und die Vorrichtung kann gemäß Steuerungsvorgaben beispielsweise bahnweise einen Faser-Kunststoff-Verbund herstellen. Hierbei kann der Verbundwerkstoff aus lediglich einem Halbzeugtyp bestehen oder je nach Vorgabe kann für jeden Bahnpfad ein individuelles Material gewählt werden. Durch diese Kompositionsmöglichkeit von Verbundwerkstoffen lassen sich vorteilhafte isotrope und anisotrope Materialeigenschaften einstellen. Die hohen Applizier-/ und Materialwechselgeschwindigkeit steigert maßgeblich die Kapazität und die Wirtschaftlichkeit.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können, ohne den Schutzbereich der Ansprüche zu verlassen.

Kurzbeschreibung der Figuren

Es zeigen:

Fig. 1 Funktionsprinzip der Applizierung von Halbzeugen und Bezeichnung ausgewählter Bahnpunkte,
Fig. 2 Ablagebewegung der Appliziereinrichtung und Vorschub des Halbzeugs,
Fig. 3 Verfahrensschritte zur Steuerung der Kompositionsanlage,
Fig. 4 Heizraten in Abhängigkeit von der eingestellten Vorschubgeschwindigkeit,
Fig. 5 Einwirkung der Heizeinrichtung auf ein Substrat,
Fig. 6 Seitenansicht einer Ausführungsform der Appliziereinrichtung
Fig. 7 Viskositätsfeld für PA-6 und PEEK,
Fig. 8 Auswirkung der durch die Heizeinrichtung erzeugte Hitze-Expositionszeit auf die Substrattemperatur,
Fig. 9 Expositionszeit für unterschiedliche effektive Wirklängen der Temperatur,
Fig. 10 Funktionsprinzip des Hochgeschwindigkeitsfügens,
Fig. 11a Messergebnisse und Berechnung der mit der Heizeinrichtung erzielbaren Wärmeenergieverteilung im Halbzeug bzw. im Substrat,
Fig. 11b Berechnung der erzielbaren Viskositätsverteilung im Halbzeug bzw. im Substrat,
Fig. 11c Messergebnisse und Berechnung der Temperaturverteilung im Halbzeug bzw. im Substrat,
Fig. 12a wie 11a jedoch mit geänderter Oberflächentemperatur,
Fig. 12b wie 11b, jedoch mit geänderter Oberflächentemperatur,
Fig. 12c wie 11b, jedoch mit geänderter Oberflächentemperatur,
Fig. 13 Ausführungsform der Appliziereinrichtung,
Fig. 14 weiteren Ausführungsform der Appliziereinrichtung,
Fig. 15 noch eine Ausführungsform der Appliziereinrichtung,
Fig. 16 mit Fig. 16a und 16b Ausführungsform der Appliziereinrichtung mit Darstellung der Antriebssysteme,
Fig. 17 mit Fig. 17a und 17b weitere Ausführungsform der Appliziereinrichtung mit Darstellung eines weiteren Antriebssystems,
Fig. 18 Appliziereinrichtung mit Führungselementen,
Fig. 18a Schnitt durch die Ebene A-A der Fig. 18,
Fig. 19 Darstellung des Konsolidierungsbereichs,
Fig. 20 Heizeinrichtung mit Zündeinrichtung,

Fig. 21    Applikationsbereich mit Trägermedium,

Fig. 21b   Applikationsbereich mit weiterem Trägermedium,

Fig. 22    Beispiel eines Ablegeverfahrens,

Fig. 23    zweites Beispiel eines Ablegeverfahrens,

Fig. 24    drittes Beispiel eines Ablegeverfahrens,

Fig. 25    viertes Beispiel eines Ablegeverfahrens,

Fig. 26    fünftes Beispiel eines Ablegeverfahrens,

Fig. 27    sechstes Beispiel eines Ablegeverfahrens,

Fig. 28    siebtes Beispiel eines Ablegeverfahrens,

Fig. 29    Antriebskonfigurationen möglicher Anlagenkonzepte der Antriebseinheit,

Fig. 30    Totalansicht der Kompositionsanlage,

Fig. 31    Halbzeughalterung,

Fig. 32    Bodengruppe mit Werkzeug und Trägermedium,

Fig. 33    Appliziereinrichtung mit Zuführeinrichtung,

Fig. 34    Antriebseinheit in Gantry-Ausführung,

Fig. 35    Variante der Zuführeinrichtung,

Fig. 36    Weitere Ansicht der vorigen Variante der Kompositionsanlage,

Fig. 37    beispielhafter Bahnaufbau gleicher Halbzeuge, die mit der Kompositionsanlage appliziert werden können,

Fig. 38    beispielhafter Bahnaufbau verschiedener Halbzeuge, die mit der Kompositionsanlage appliziert werden können.

### Detaillierte Beschreibung der Erfindung

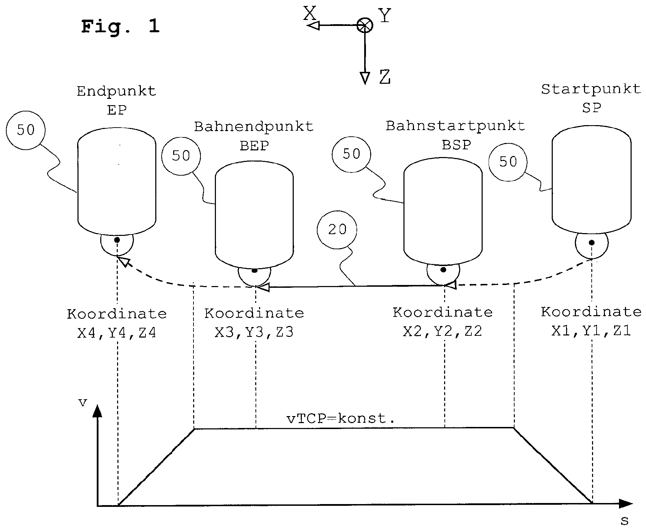

Fig. 1 zeigt ein Beispiel eines Funktionsprinzips der Applizierung von Halbzeugen 20 mittels der Appliziereinrichtung 50 in Hochgeschwindigkeit mit zwei Ereignissen, dem Bahnstartpunkt BSP (X2, Y2, Z2) und dem Bahnendpunkt BEP (X3, Y3, Z3), zwischen welchen Halbzeug 20 in einem Applikationsbereich 100 abgelegt werden kann. Die Bewegung startet mit dem Anfahren des Startpunktes SP (X1, Y1, Z1) der Bahn und der Ausrichtung aller Achsen in eine definierte Ausgangsstellung. Am Startpunkt SP sind alle relevanten Achsen zur Applizierung von Halbzeugen 20 voll elektronisch synchronisiert. Die Bahnbewegung endet mit dem Erreichen des Endpunkts EP (X4, Y4, Z4). Bevorzugt kann mit dem Erreichen des Endpunkts EP unmittelbar mit dem Anfahren und in Folge dem Ablegen einer weiteren Bahn begonnen werden, so dass die Bewegung der Appliziereinrichtung 50 ggf. flüssig in das Anfahren der weiteren Bahn übergeht, die beispielsweise in Gegenrichtung zu der zuvor abgelegten Bahn in den Grenzen des Applikationsbereiches 100 abgelegt werden kann.

Im unteren Teil der Fig. 1 ist ein Weg-Geschwindigkeits-Diagramm der zurückgelegten Wegstrecke der Appliziereinrichtung 50 dargestellt. In diesem Beispiel wird die Appliziereinrichtung im Bereich zwischen dem Startpunkt SP und dem Bahnstartpunkt BSP beschleunigt, zwischen dem Bahnendpunkt BEP und dem Endpunkt EP wird die Appliziereinrichtung 50 verzögert. In dem Wegstück zwischen dem Bahnstartpunkt BSP und dem Bahnendpunkt BEP liegt für die Appliziereinrichtung 50 eine konstante Tool-Center-Point-Geschwindigkeit vTCP vor.

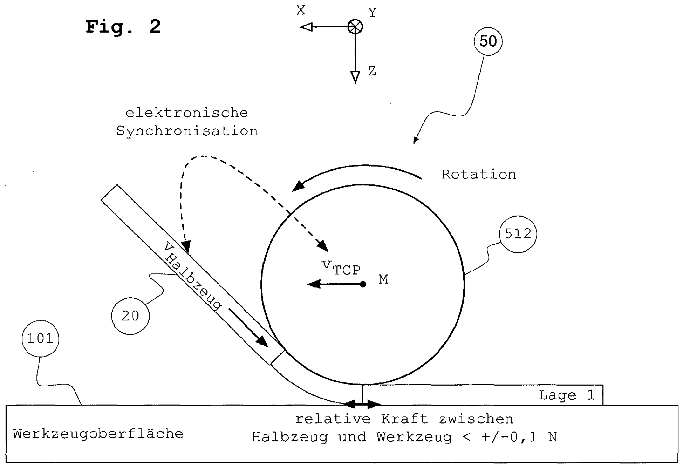

Fig. 2 demonstriert grundlegende Zusammenhänge zwischen der Ablagebewegung der Appliziereinrichtung 50 und dem Vorschub des Halbzeugs 20 in selbiger in einer Ausführungsform. Beispielsweise kann der Vorschub des Halbzeugs 20 mit der Tool-Center-Point Geschwindigkeit vTCP synchronisiert werden. Im Resultat ist ein Gleichlauf zwischen der Bewegung der Appliziereinrichtung 50 und dem Vorschub des Halbzeugs 20 gewährt. Dieser Gleichlauf kann bei der Halbzeugablage besonders vorteilhaft sein, da keine oder nur eine sehr geringe relative Kraft zwischen Halbzeug 20 in der ersten Lage und einer Werkzeugoberfläche 101 oder, bei einer weiteren Lage (2 bis N-1), zwischen Halbzeug 20 und Halbzeug 20 entsteht. Dies könnte ggf. zu einem Gleiten, einer inkorrekten Positionierung oder einer schlechten Konsolidierungsqualität führen. Die Messungen ergaben für eine Ausführungsform der Erfindung, dass eine zu vernachlässigende Kraft von < $^+/_-$ 0,1 N realisierbar ist.

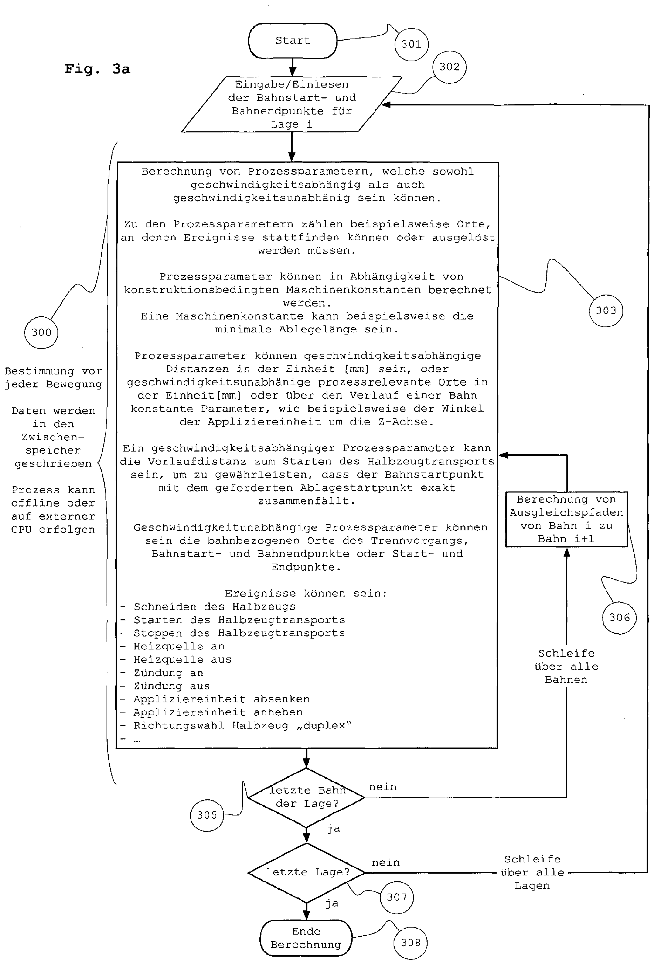

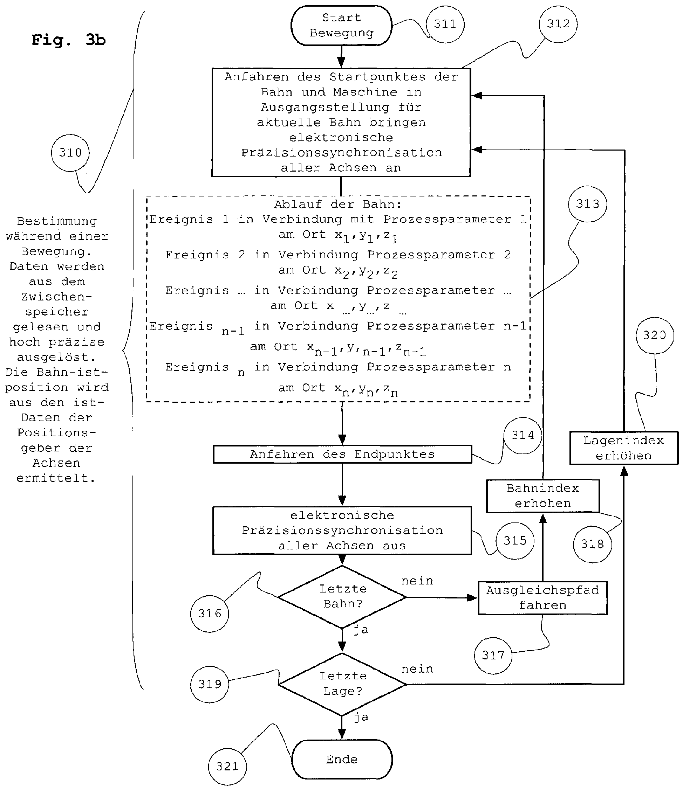

Fig. 3 zeigt Schritte eines beispielhaften Verfahrens zur Steuerung der Kompositionsanlage 1. Zunächst werden in diesem Beispiel vor jeder Bewegung erst in einer Berechnungsphase 300 Daten berechnet und in einem Zwischenspeicher abgelegt.

In einem ersten Schritt 301 wird dabei z.B. eine Prozesssoftware bzw. ein Steuerungssystem aktiviert, z.B. hochgefahren.

In einem zweiten Schritt 302 können verschiedene erste Bahnparameter, die die spätere Applikation der Halbzeuge 50 auf den Applikationsbereich 100 beeinflussen, von einem Benutzer mittels einer Bedienkonsole eingegeben werden oder über eine Schnittstelle eingelesen werden. Beispiele für die ersten Parameter sind Bahnstart- und Bahnendpunkte für die Bahn j = 1..n für jede Lage i = 1..m. Das beispielhafte Verfahren beginnt zunächst in dem zweiten Schritt 302 mit der Eingabe bzw. dem Einlesen der ersten Parameter für die erste Bahn j der ersten Lage i.

In einem dritten Schritt 303 kann beispielsweise die Berechnung von bahnrelevanten Prozessparametern der Bahn j auf Basis der eingegebenen ersten Parameter, insbesondere der eingegebenen Bahnstart- und Bahnendpunkte, durchgeführt werden.

Prozessparameter können sowohl geschwindigkeitsabhängig als auch geschwindigkeitsunabhänig sein. Zu den Prozessparametern zählen beispielsweise Orte, an denen Ereignisse stattfinden können oder ausgelöst werden müssen. Prozessparameter können in Abhängigkeit von konstruktionsbedingten Maschinenkonstanten berechnet werden. Eine Maschinenkonstante kann beispielsweise die minimale Ablegelänge sein. Prozessparameter können geschwindigkeitsabhängige Distanzen (typischerweise in der Einheit [mm]) sein, oder geschwindigkeitsunabhängige prozessrelevante Orte (typischerweise in der Einheit [mm]) oder über den Verlauf einer Bahn konstante Parameter, wie beispielsweise der Winkel der Appliziereinheit um die Z-Achse.

Ein geschwindigkeitsabhängiger Prozessparameter kann beispielsweise die Vorlaufdistanz zum Starten des Halbzeugtransports sein, um zu gewährleisten, dass der Bahnstartpunkt mit dem geforderten Ablagestartpunkt exakt zusammenfällt.

Geschwindigkeitunabhängige Prozessparameter können beispielsweise sein die bahnbezogenen Orte des Trennvorgangs, Bahnstart- und Bahnendpunkte oder Start- und Endpunkte.

Ereignisse können beispielsweise sein:

- Schneiden des Halbzeugs
- Starten des Halbzeugtransports
- Stoppen des Halbzeugtransports
- Heizquelle an
- Heizquelle aus
- Zündung an
- Zündung aus
- Appliziereinheit absenken
- Appliziereinheit anheben
- Richtungswahl Halbzeug "duplex"

Alle Parameter können in einem Zwischenspeicher hinterlegt bzw. gespeichert werden.

In einem Schritt 305 erfolgt die Abfrage, ob eine weitere Bahn j+1 in der aktuellen Lage i appliziert werden soll. Sofern eine weitere Bahn j+1 oder weitere Bahnen j+n gelegt werden sollen, kann in einem Zwischenschritt 306 ein Ausgleichspfad der Appliziereinrichtung 50 vom Endpunkt EP der Bahn j zu dem Startpunkt SP der Bahn j+1 berechnet werden. Anschließend werden die Schritte 302, 303, 305 für alle Bahnen j der aktuellen Lage i wiederholt.

Sind alle Bahnen j der aktuellen Lage i berechnet, so erfolgt mit Schritt 307 eine weitere Abfrage, ob eine weitere Lage i+1 mit Halbzeug 20 auf dem Applikationsbereich 100 abgelegt werden soll. Falls ja, so können nun erneut die ersten Parameter der Bahnen j der weiteren Lage i+1 im Schritt 302 für die weitere Bahn i+1 eingegeben werden.

Sofern hernach alle Bahnen i=1..n aller Lagen j=1 ..m vorberechnet wurden, kann in einem Schritt 308 die Berechnung abgeschlossen werden. Alle bahn- und lagerelevanten Daten können in einem Zwischenspeicher hinterlegt bzw. gespeichert werden.

Die Vorberechnung 300 kann für die Ausführung 310 herangezogen werden, so dass während der Ausführung keine ggf. aufwändigen Berechnungen durchzuführen sind und der Ausführungsprozess schneller durchgeführt werden kann. Die Bestimmung der Ausführungsberechnung erfolgt typischerweise während einer Bewegung der Antriebseinheit 10.

In einem Schritt 311 der Ausführung 310 wird die Bewegung der Kompositionsanlage 1 gestartet.

Die Kompositionsanlage 1, bzw. die Appliziereinrichtung 50 fährt den Startpunkt SP der Bahn in Schritt 312 an; Ebenso wird die Anlage in Ausgangsstellung für die aktuelle Bahn j der Lage i gebracht. Alle Achsen können in Schritt 312 mittels elektronischer Präzisionssynchronisation aufeinander abgestimmt werden.

Gemäß Schritt 313 wird die Bahn j der Lage i abgefahren und Halbzeug 20 appliziert.

Gemäß Schritt 314 wird der Endpunkt EP der Bahn j der Lage i angefahren, nachdem die Applikation von Halbzeug 20 für die Lage i beendet wurde.

Gemäß Schritt 315 kann die elektronische Präzisionssynchronisation der Achsen deaktiviert werden.

Gemäß Schritt 316 erfolgt eine Abfrage, ob die letzte Bahn j der aktuellen Lage i appliziert wurde. Falls nein, d.h. falls eine weitere Bahn j+1 appliziert werden soll, wird die Ausführung 310 mit Schritt 317 fortgeführt. Mit Schritt 317 wird der Ausgleichspfad gefahren, insbesondere der mit Schritt 306 berechnete Ausgleichspfad. Gemäß Schritt 318 wird ferner hernach der Bahnindex um einen Zähler auf j+1 erhöht und gemäß Schritt 312 mit dem Anfahren des Startpunkts der Bahn j+1 begonnen.

Ist hingegen die letzte Bahn j der Lage i auf dem Applikationsbereich abgelegt, erfolgt gemäß Schritt 319 die Abfrage, ob auch die letzte Lage i abgelegt wurde, oder ob eine weitere Lage i+1 abzulegen ist. Für den Fall, dass eine weitere Lage abzulegen ist, wird mit Schritt 320 der Lageindex auf i+1 erhöht, die abgespeicherten Daten 300 aus dem Speicher ausgelesen und gemäß Schritt 310 der Startpunkt der Bahn j der nächsten Lage i+1 angefahren.

Ist nun die letzte Lage i abgelegt, so wird der Verarbeitungsprozess mit Schritt 321 beendet.

Die in Fig. 4 wiedergegebene Tabelle 1 zeigt im Rahmen der vorliegenden Erfindung für eine effektiv wirkende Heizlänge von 23 mm Messwerte und berechnete Temperaturverläufe mit den korrespondierenden Heizraten in Abhängigkeit der eingestellten Vorschubgeschwindigkeit, die in eigenen Testreihen ermittelt wurden.

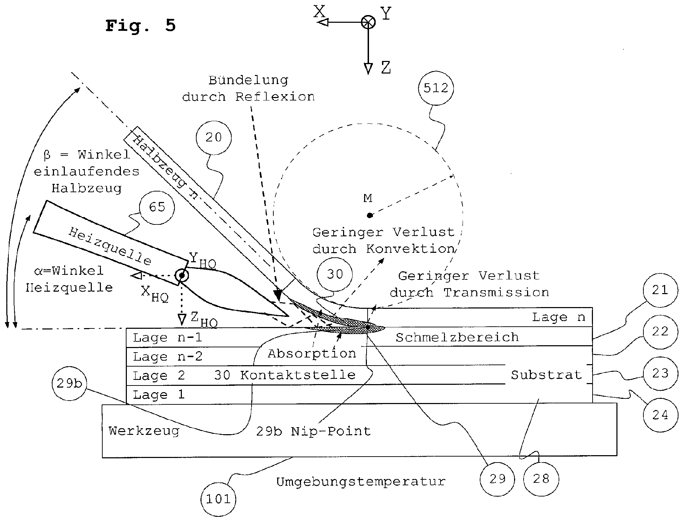

Fig. 5 zeigt schematisch die Einwirkung der Heizeinrichtung 65 auf das Substrat 28 aus miteinander verschmolzenen Lagen 21, 22, 23, 24, wobei das Halbzeug 20 mit der obersten Lage 21 im Nip-Point 29b verschmolzen wird. Es werden zwei schmelzflüssige Polymerphasen 29 in Kontakt gebracht. Sowohl die polymeren Anteile des Halbzeugs als auch die polymeren Anteile der obersten Lage 21 des Substrats sind bereits kurz vor dem Nip-Point 29b schmelzflüssig. Das "in Kontakt Bringen" an der Kontaktstelle 30 erfolgt in der schmelzflüssigen Phase.

Der Winkel der Heizquelle 65 zum Substrat 28 kann einstellbar sein; In der Ausführung der Fig. 5 ist $\alpha$ halb so groß wie der Winkel des Einlaufs des Halbzeugs $\beta$.

Durch eine Variation von $\alpha$ und $\beta$, d.h. durch eine Änderung des Winkels der Heizquelle 65, kann die Schmelzzone 29 zum Substrat 28 hin - d.h. typischerweise nach unten mit mehr Wärmeeinwirkung auf das Substrat 28 - oder zum Halbzeug 20 hin verschoben werden mit mehr Wärmeeinwirkung auf das anzubringende Halbzeug 20. Wenn $\beta - \alpha > 0,5\,\beta$, dann verstärkt sich die Schmelzzone im Halbzeug. Wenn $\beta - \alpha < 0,5\,\beta$, dann verstärkt sich die Schmelzzone im Substrat.

In einer bevorzugten Ausführung ist $\alpha = 22,5°$ und $\beta = 45°$.

Die Position der Heizquelle $X_{HQ}$, $Y_{HQ}$, $Z_{HQ}$ ist an der Appliziereinrichtung 50 einstellbar.

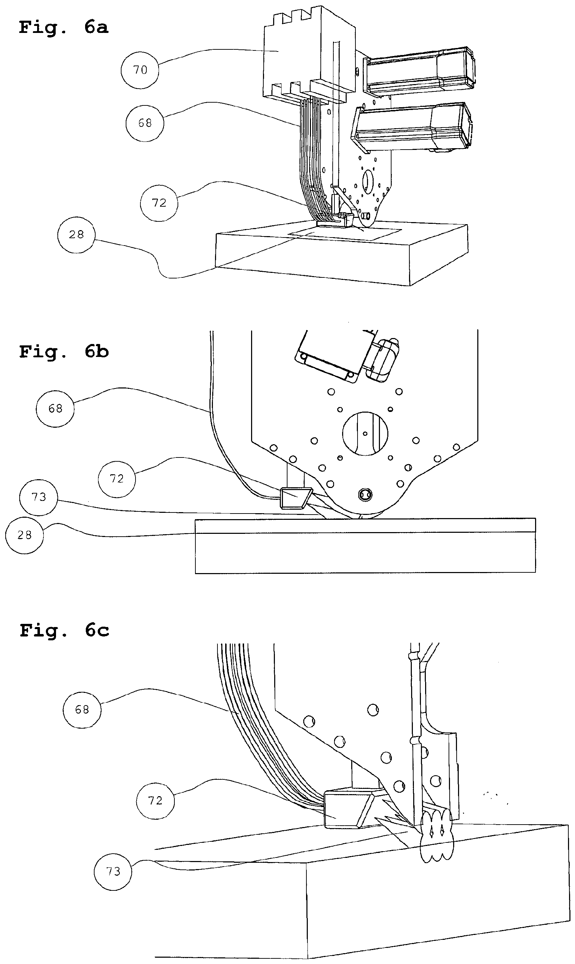

Fig. 6 zeigt eine schematische Seitenansicht der Appliziereinrichtung 50 oberhalb des Applikationsbereichs 100 mit aktivierter Heizeinrichtung 65.

Fig. 6a zeigt eine Totalansicht der Appliziereinrichtung 50. Gezeigt werden in einer Ausführungsform die Heizeinrichtung 65 mit mehreren Diodenlasermodulen 70 und gekoppelte Lichtwellenleiter 68. Es werden Diodenlasermodule 70 an einer Stelle der Anlage platziert, wo der benötigte Bauraum günstigerweise zur Verfügung steht. Die Ausgangsleistung der Diodenlasermodule 70 ist einstellbar. In einer Ausführungsform ist die Ausgangsleistung der Diodenlasermodule 70 steuer- bzw. regelbar. Es können z.B. Diodenlasermodule 70 eingesetzt und ggf. modifiziert werden, wie sie in Anlagen zur Laserbeschriftung verwendet werden. Die Lichtwellenleiter 68 können dann nahe der Schmelzzone 29, in einem Halter 72, beispielsweise spalten- und zeilenweise zusammengefasst werden. Die Module 70 können so ausgeführt und geometrisch aufgeteilt sein, dass die Leistungseinbringung und Aufteilung in Substrat 28 und Halbzeug 20 gesteuert und damit Ort und Ausprägung der Schmelzzone 29 beeinflusst werden kann.

Fig.6b zeigt die Seitenansicht einer Appliziereinrichtung 50. Die spalten- und zeilenweise zusammengefassten Lichtwellenleiter 68 sind mit einem Divergenzwinkel von ca. 25° und mit einem sich ergebenden Strahlkegel 73 dargestellt. Die Halterung 72 kann in der Position zur Appliziereinrichtung 50 in $X_{HQ}$, $Y_{HQ}$, $Z_{HQ}$ und im Winkel zum Substrat 28 oder im Winkel zur Appliziereinrichtung 50 eingestellt werden.

Fig.6c zeigt eine Schnittdarstellung der Appliziereinrichtung 50. Die spalten- und zeilenweise zusammengefassten Lichtwellenleiter 68 sind mit einem Divergenzwinkel von ca. 25° und mit einem sich ergebenden Strahlkegel 73 dargestellt. Über die geometrische Aufteilung der Lichtwellenleiter 68 in Halter 72 kann die Energiedichte angepasst werden.

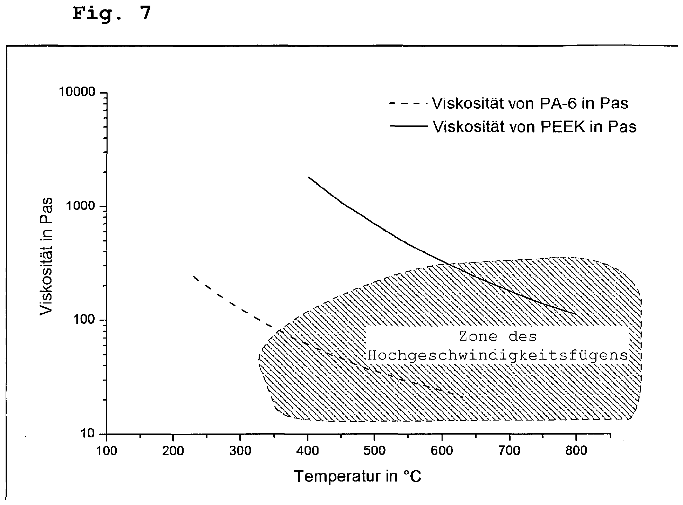

Fig. 7 zeigt das Viskositätsverhalten für PA-6 und PEEK. Das erfindungsgemäße Verfahren kann in einer Variante durch höhere Temperaturen ein geringeres Viskositätsniveau der Polymerschmelze nutzen. Im Vergleich zu etablierten Verfahren sinkt durch die höheren Verarbeitungstemperaturen die Viskosität um ein Vielfaches. Dies verbessert das Autohäsions-, Vernetzungs- und Adhäsionsverhalten.

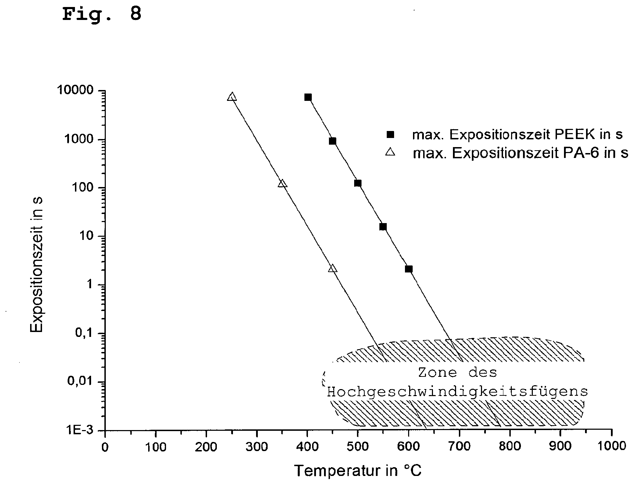

Fig. 8 zeigt den Zusammenhang zwischen der durch die Heizeinrichtung 65 erzeugte Hitze-Expositionszeit und der im Substrat 28 und/oder dem Halbzeug 20 eingestellten Temperatur für PEEK und PA-6. Der Fügeprozess kann in wenigen Millisekunden abgeschlossen werden. Bevorzugt werden die Parameter der Kompositionsanlage 1 so eingestellt, dass das Hochgeschwindigkeitsfügen für PA-6 oder PEEK, für eine effektive Wirklänge der Temperatur von 23 mm in einem Temperaturbereich zwischen etwa 450°C bis etwa 900°C und einer Expositionszeit bis etwa 0,06 Sekunden durchgeführt wird.

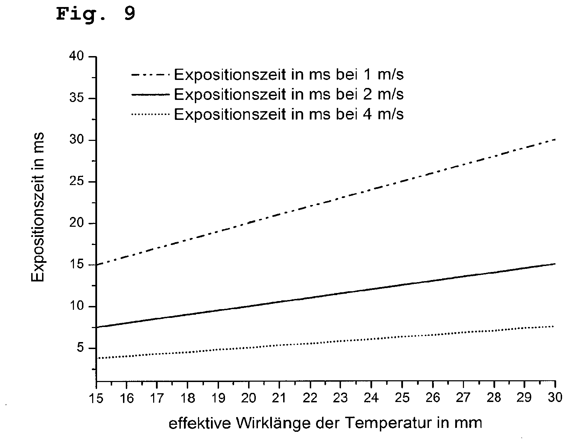

Fig. 9 zeigt die Expositionszeit für das Halbzeug 20 über der effektiven Wirklänge der Temperatur für eine als Parameter der Kompositionsanlage 1 einstellbare Vorschubgeschwindigkeit des Halbzeugs 20 und/oder einstellbare vTCP - mit anderen Worten, mit unterschiedlichen Verarbeitungsgeschwindigkeiten. Die effektive Wirklänge der Temperatur ist konstruktiv vorgegeben und kann gegebenenfalls angepasst werden. Dargestellt sind vTCP der Appliziereinrichtung 50 von 1m/s, 2m/s bzw. 4m/s. Bei einer effektiven Wirklänge von 23 mm und einer vTCP von 2 m/s entspricht die Expositionszeit ca. 12 ms.

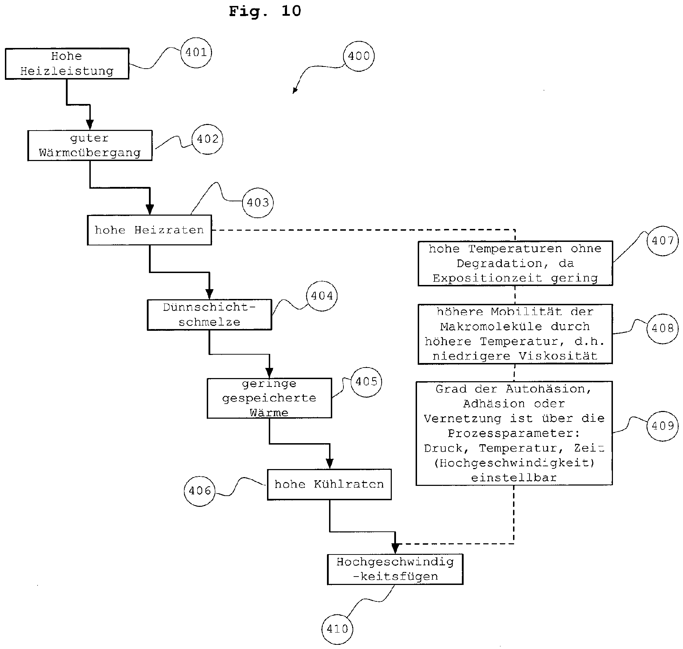

Fig. 10 zeigt das Funktionsprinzip und Elemente des Hochgeschwindigkeitsfügens 400. Grundlage der Funktionskette gemäß Fig. 10 ist eine durch die vorteilhafte Ausgestaltung der Heizeinrichtung 65 erzielbare hohe Heizleistung 401. Die hohe Heizleistung 401 kann durch die vorteilhafte Geometrieanordnung und Ausgestaltung der Heizeinrichtung 65 in einen guten Wärmeübergang 402 überführt werden, so dass hohe Heizraten 403 im Substrat 28 und/oder im Halbzeug 20 realisierbar sind. Dies wird insbesondere dadurch erwirkt, dass die Heizquelle, mit anderen Worten der Emittent der Heizleistung mit hoher Energiedichte, unmittelbar vor dem Nip-Point 29b ortsnah angebracht wird.

Die hohen Heizraten 403 würden per se zu einem hohen Energieeintrag in das Substrat führen. Es hat sich jedoch im Rahmen der vorliegenden Erfindung herausgestellt, dass es besonders bevorzugt ist, wenn - bspw. in Kombination mit einer hohen Vorschubgeschwindigkeit des Halbzeugs 20 und/oder einer hohen vTCP, und damit einhergehend einer nur geringen Expositionszeit 407 - eine Dünnschichtschmelze 404 angestoßen wird. Die dadurch realisierbare geringe gespeicherte Wärme 405 - die ggf. nur in der Oberfläche des Halbzeugs 20 bzw. des Substrats 28 gespeichert wird - führt bevorzugter Weise zu einem geringen Kühlbedarf. Anders ausgedrückt ermöglicht der geringe Wärmeeintrag, d.h. die niedrige applizierte gesamte Wärmeenergie pro Volumen (oder pro Masse) des Halbzeugs 20 eine Verteilung und Egalisierung der Wärmeenergie auf die gesamte Masse, und somit letztlich zu einer hohen Kühlrate 406 am Ort der Schmelze 29.

Die hohe lokale Temperatur am Ort der Schmelze 29 führt zu einer hohen Mobilität der Makromoleküle 408, d.h. einer niedrigen Viskosität am Ort der Schmelze 29. Der Grad der Autohäsion, Adhäsion oder Vernetzung ist gemäß Prinzipfigur 409 einstellbar über Druck, Temperatur und Zeit (Hochgeschwindigkeit). Die vorgenannten Faktoren führen - wie es im Rahmen der Erfindung herausgefunden wurde - zu einer Verbesserung der oder bilden die Grundlage der Realisierung des Hochgeschwindigkeitsfügens 410.

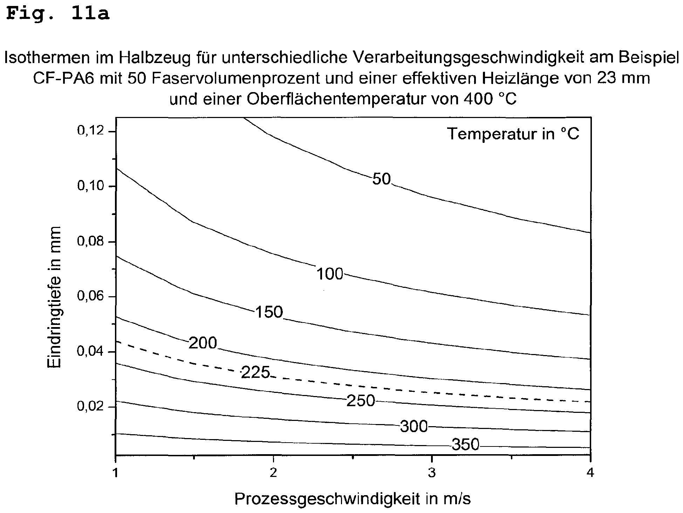

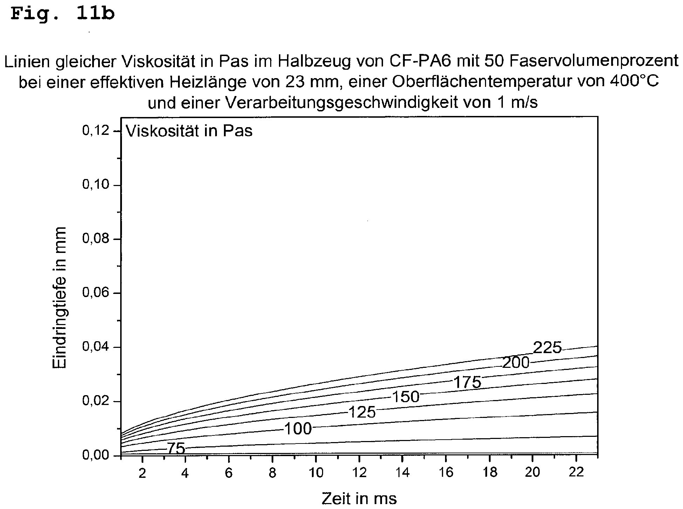

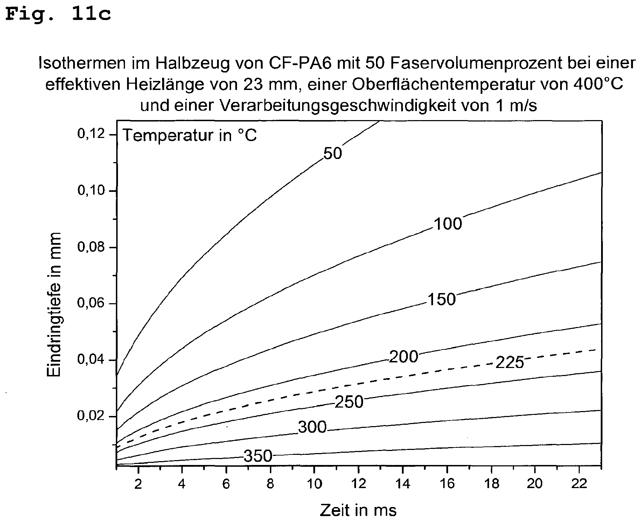

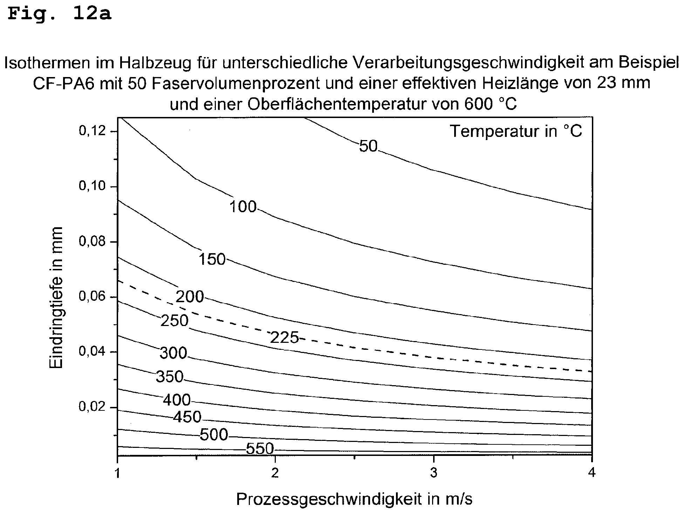

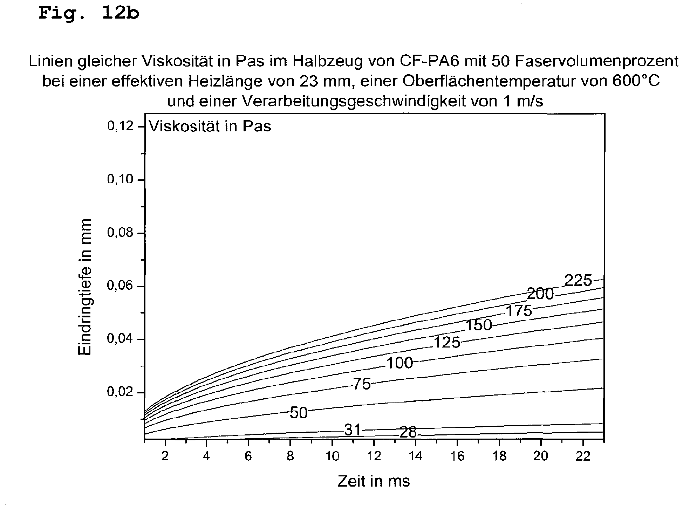

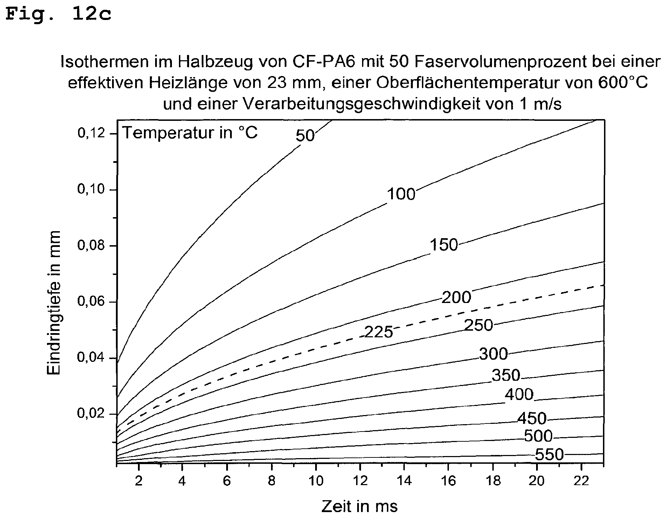

Fig. 11a, b, und c sowie Fig. 12a, b und c zeigen Messergebnisse und Berechnungen, die im Rahmen der vorliegenden Erfindung anhand des Halbzeugs 20 CF-PA6 mit 50 Faservolumenprozent und einer effektiven Heizlänge von 23 mm realisiert wurden. Bei den Figuren 11a, b, c wurde eine Oberflächentemperatur des Halbzeugs 20 von 400 °C eingestellt. Bei den Figuren 12a, b, c wurde hingegen eine Oberflächentemperatur des Halbzeugs 20 von 600 °C eingestellt. Der Schmelzpunkt von PA-6 liegt bei 225 °C und ist gestrichelt dargestellt.

Fig. 11a zeigt die Isothermen im Halbzeug 20 - d.h. die Eindringtiefe der Wärmeenergie im Halbzeug 20 - für unterschiedliche Verarbeitungs- bzw. Prozessgeschwindigkeiten. Fig. 11b zeigt die Linien gleicher Viskosität in Pas desselben Halbzeugs 20.

Fig. 11c schließlich zeigt den zeitlichen Verlauf der Isothermen über die Eindringtiefe im Halbzeug 20 bei einer Verarbeitungsgeschwindigkeit von 1 m/s und einer effektiven wirkenden Heizlänge von 23 mm.

Die Figuren 12a, b, c zeigen jeweils denselben Gegenstand wie die Figuren 11a, b, c wobei die Oberflächentemperatur bei dem Halbzeug 20 der Figuren 12a, b, c auf 600 °C eingestellt wurde.

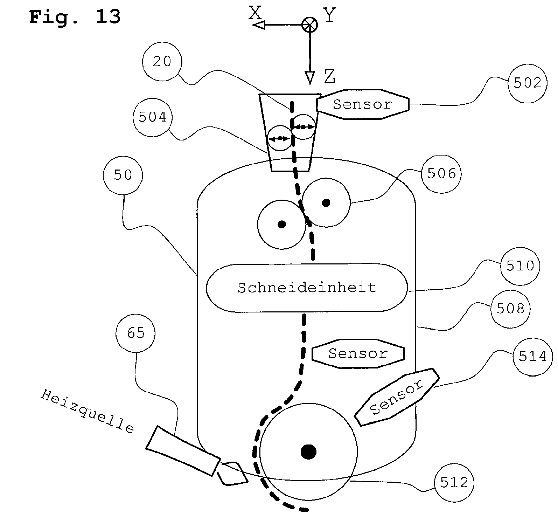

Fig. 13 zeigt eine erste Ausführung der Appliziereinrichtung 50 mit einer Variante der Halbzeugführung. Das Halbzeug 20 wird über eine durch einen Zuführsensor 502 überwachte Zuführeinrichtung 504 in die Fördereinheit 506 transportiert. Anschließend wird das Halbzeug 20 in die durch einen Schneidsensor 508 überwachte Schneideinheit 510 und unter die Konsolidierungsrolle 512 transportiert, wo das Halbzeug in den Grenzen des Applikationsbereichs 100 aufgebracht werden kann. Die Konsolidierungsrolle 512 wird in dieser Ausführungsform durch den Konsolidierungssensor 514 überwacht. Seitlich der Konsolidierungsrolle 512 ist die Heizquelle 65 angeordnet.

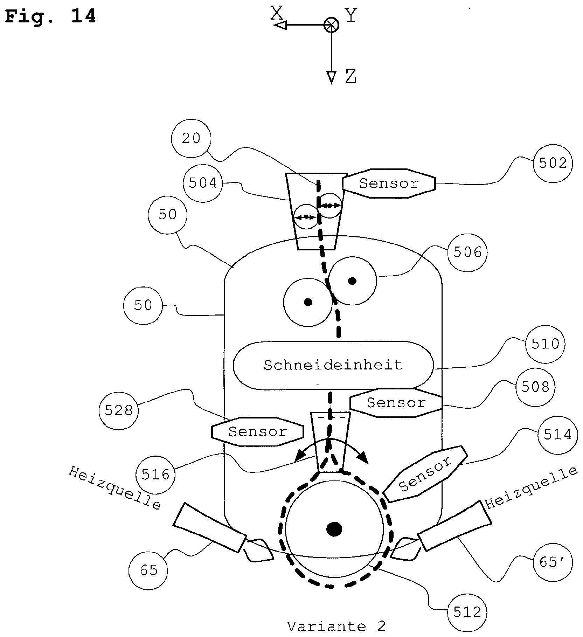

Fig. 14 zeigt eine weitere Ausgestaltung einer Appliziereinrichtung 50 mit einer "Duplex-Ausführung". Die Appliziereinrichtung 50 weist mindestens zwei Bandzuführungen an der Rolle sowie eine doppelte Heizeinrichtung 65, 65' - und ggf. doppelter Zündvorrichtung - auf.

In der Ausgestaltung der Fig. 14 kann die Applizierungsrichtung des Halbzeugs 20 und damit die Ablegerichtung 35 für die Appliziereinrichtung 50 gewählt werden, wodurch die Möglichkeit der Zykluszeiteinsparung durch Vermeidung von Leerfahrten oder Schwenkbewegungen bei der Anfahrt der Bahnstartpunkte geboten wird.

Das Halbzeug 20 wird durch einen Bandantrieb 506 der Schneide 510 zugeführt. Die Schneideinheit 510 wird in dieser Ausführungsform von einem ersten Schneidsensor 508 und einem Bandweichensensor 528 überwacht, so dass in beiden Ablegerichtungen 35 des Halbzeugs 20 eine optimale Überwachung des Schneidvorgangs sowie eine Richtungskontrolle gewährleistet ist. Hinter der Schneide 510 befindet sich eine Bandweiche 516, durch die eine der beiden Bandzuführungen 561 an der Rolle und damit die Ablegerichtung 35 des Halbzeug 20 gewählt werden kann.

In Fig. 14 wird mit anderen Worten über die überwachte Zuführeinrichtung 504 das Halbzeug 20 in die Fördereinheit 506, anschließend in die überwachte Schneideinheit 510, in eine überwachte Halbzeugweiche 516 zum links- oder rechtsseitigen Transport unter die Konsolidierungsrolle 512 geführt.

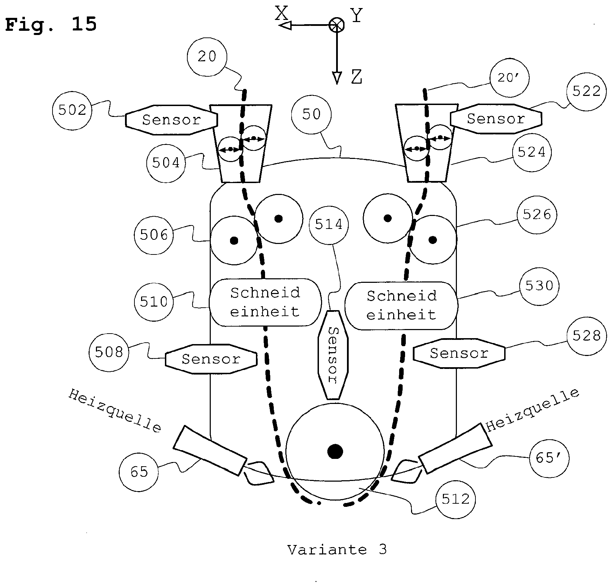

In Fig. 15 werden zwei Halbzeuge 20, 20' getrennt geführt. Das erste Halbzeug 20 wird über eine durch einen Zuführsensor 502 überwachte Zuführeinrichtung 504 in die Fördereinheit 506 transportiert, durch die überwachte Schneideinheit 510, die durch einen Schneidsensor 508 überwacht wird, und unter die Konsolidierungsrolle 512 geführt, wo das Halbzeug 20 in den Grenzen des Applikationsbereichs 100 aufgebracht werden kann. Die Konsolidierungsrolle 512 wird durch den Konsolidierungssensor 514 überwacht. Seitlich der Konsolidierungsrolle 512 ist die erste Heizquelle 65 für das erste Halbzeug 20 angeordnet.

Das zweite Halbzeug 20' wird über eine durch einen Zuführsensor 522 überwachte zweite Zuführeinrichtung 524 in die zweite Fördereinheit 506 transportiert. Anschließend wird das Halbzeug 20' in die durch einen zweiten Schneidsensor 528 überwachte zweite Schneideinheit 530 und unter die Konsolidierungsrolle 512 transportiert, wo das Halbzeug auf dem Applikationsbereich 100 aufgebracht werden kann. Die Konsolidierungsrolle 512 wird durch den Konsolidierungssensor 514 überwacht. Seitlich der Konsolidierungsrolle 512 ist auch die zweite Heizquelle 65' für das zweite Halbzeug 20' angeordnet.

Mit anderen Worten werden in der Ausführung der Fig. 15 das erste Halbzeug 20 und das zweite Halbzeug 20' über getrennte Fördereinheiten 504, 524 zwei überwachte und getrennte Schneideinheiten 510, 530 schließlich wahlweise rechts- oder linksseitig unter die gemeinsame Konsolidierungsrolle 512 geführt.

In dem Kopfbereich der Appliziereinrichtung 50 befinden sich also zwei komplette Führungsstränge für das erste und das zweite Halbzeug 20, 20', bestehend aus jeweils einem Bandantrieb 506, 526, Schneideinheit 510, 530 und Führungen. Das Halbzeug 20, 20' wird ebenfalls doppelt bereitgestellt.

Durch diese Variante lassen sich zusätzlich zu den vorherigen Ausführungen die Stillstandszeiten der Anlage, z.B. wegen Materialwechsel des Halbzeugs 20, 20' und/oder Wartung der Schneideinheit 510, 530 halbieren und die thermische Belastung der Antriebe im Kopfbereich der Appliziereinrichtung 50 reduzieren.

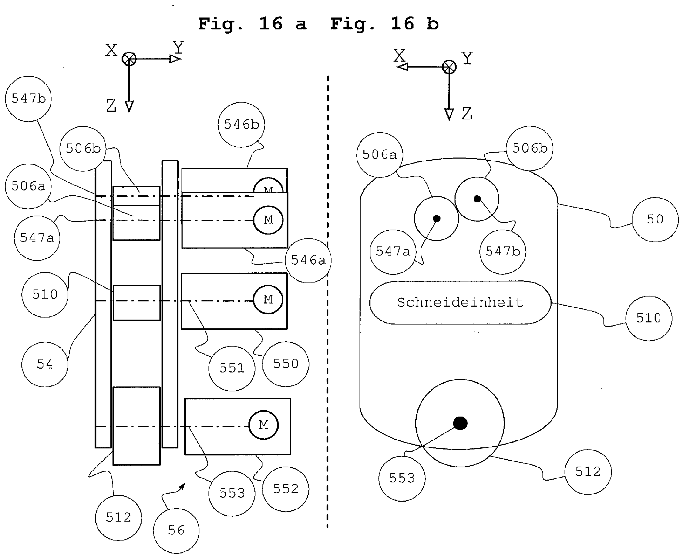

Fig. 16a, 16b zeigt eine Ausführungsform der Appliziereinrichtung 50 mit einem seitlich an einem Gestell 54 der Appliziereinrichtung 50 montierten und über eine Welle mit dem Fördermechanismus gekoppelten Antriebssystem 56. Die oberhalb der Teilfiguren Fig. 16a bzw. Fig. 16b gezeigten Koordinatensysteme verbildlichen, dass der Figurenteil der Fig. 16a eine erste Seitenansicht der Appliziereinrichtung 50 in der Perspektive, die aus den vorigen Figuren bekannt ist, zeigt. Die Fig. 16a dient daher lediglich zur Verdeutlichung der Lage der Antriebe an der Appliziereinrichtung 50. Der linke Figurenteil Fig. 16b zeigt eine dazu um 90° gedrehte zweite Seitenansicht der Appliziereinrichtung 50.

Die Fördereinheit 506 weist zwei angetriebene Rollen 506a, 506b auf. Die Rolle 506a wird von dem seitlich des Gestells 54 montierten Antrieb 546a über die Welle 547a angetrieben. Die Rolle 506b wird von dem seitlich des Gestells 54 montierten Antrieb 546b über die Welle 547b angetrieben.

Analog dazu wird die Schneideinheit 510 von dem seitlich montierten Antrieb 550 über die Welle 551 angetrieben; Die Konsolidierungsrolle 512 wird von dem seitlich montierten Antrieb 552 über die Welle 553 angetrieben.

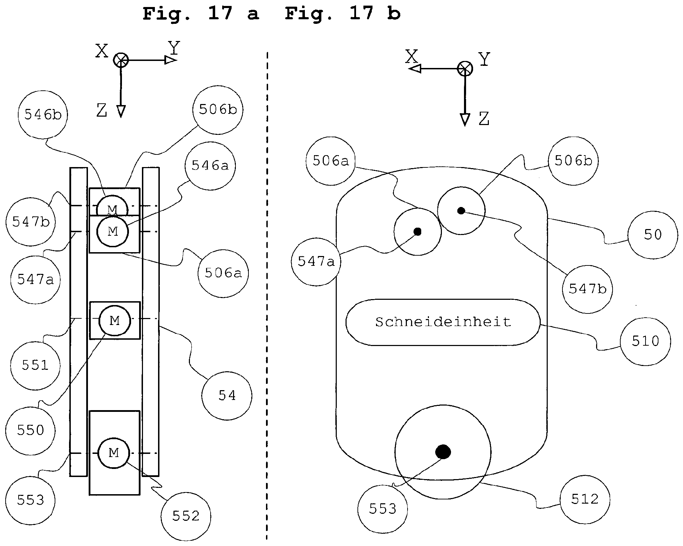

In einer weiteren Ausführungsform der Fig. 17a, 17b sind die Antriebe als Direktantrieb in einer kompletten Funktionseinheit in der Appliziereinrichtung integriert. Wie bei der vorigen Figur dient die Fig. 17a zur besseren Verdeutlichung der Position der Antriebe, da die relative Lage in z-Richtung in den Figs. 17a und 17b identisch ist.

Die angetriebenen Rollen 506a, 506b der Fördereinheit 506 werden von den jeweils in den Rollen integrierten Antrieben 546a, 546b angetrieben. Die Rollen sind jeweils mit einer Achse oder Welle 547a, 547b in dem Gestell 54 gelagert.

Die Schneideinheit 510 wird von dem in der Schneideinheit 510 integrierten Antrieb 550 angetrieben, wobei die Schneideinheit 510 mit der Achse oder Welle 551 gelagert ist. Die Konsolidierungsrolle 512 wird von dem integrierten Antrieb 552 angetrieben, wobei die Konsolidierungsrolle 512 über die Achse bzw. Welle 553 gelagert ist.

Beispielsweise können Anschlussleitungen für die Leistung und das Winkelmesssystem durch die jeweilige Welle bzw. Achse nach Außen geführt werden. Diese besonders kompakte Bauform ermöglicht eine weitere Miniaturisierung der Appliziereinrichtung 50. Ferner vereinfacht die Miniaturisierung der einzelnen Appliziereinrichtung 50 eine Parallelisierung bzw. ein Parallelbetrieb mehrerer Appliziereinrichtungen 50.

Der Fördermechanismus 506 kann zum Beispiel ein Antriebsrad 506a umfassen. Der Fördermechanismus kann alternativ oder kumulativ einen Riementrieb 506a und einen Gegenkörper 506b umfassen. Es ist vorteilhaft, die visko-elastischen Eigenschaften des Fördermechanismus der synchronisierten Förderung des Halbzeugs 20 zu evaluieren und in die Berechnung des Halbzeugvorschubs einfließen zu lassen, weil die möglichst exakte Bestimmung einer "neutralen Faser des Halbzeugs" für die Berechnung einer möglichst korrekten Fördergeschwindigkeit herangezogen werden kann. Dies kann auch für die im Rahmen der Fig. 13, 14, 15, 16a, 16b, 17a, 17b und 18 vorgestellten Ausführungsformen Berücksichtigung finden.

Eine weitere Funktion ist das elektronisch voll synchronisierte Schneiden der Halbzeuge. In einer bevorzugen Bauform wird ein servoelektrischer Antrieb mit Messsystem oder ein Direktantrieb mit Messsystem als Rotationsschneide verwendet. Während des Schneidvorgangs der geförderten Halbzeuge auf einem Gegenkörper hat die Schneidklinge elektronisch synchronisiert die möglichst gleiche, konstante Geschwindigkeit im Trennpunkt. Dies kann auch für die im Rahmen der Fig. 13, 14, 15, 16a, 16b, 17a, 17b und 18 vorgestellten Ausführungsformen Berücksichtigung finden.

Die Konsolidierungsrolle 512 kann optional elektronisch synchronisiert und servomotorisch oder über Direktantriebe angetrieben werden. Der Sensor 514 kann insbesondere die Temperatur der Konsolidierungsrolle 512 überwachen. Bei Bedarf wird die Konsolidierungsrolle 512 über ein Fluid von innen oder außen temperiert. Dies kann auch für die im Rahmen der Fig. 13, 14, 15, 16a, 16b, 17a, 17b und 18 vorgestellten Ausführungsformen Berücksichtigung finden.

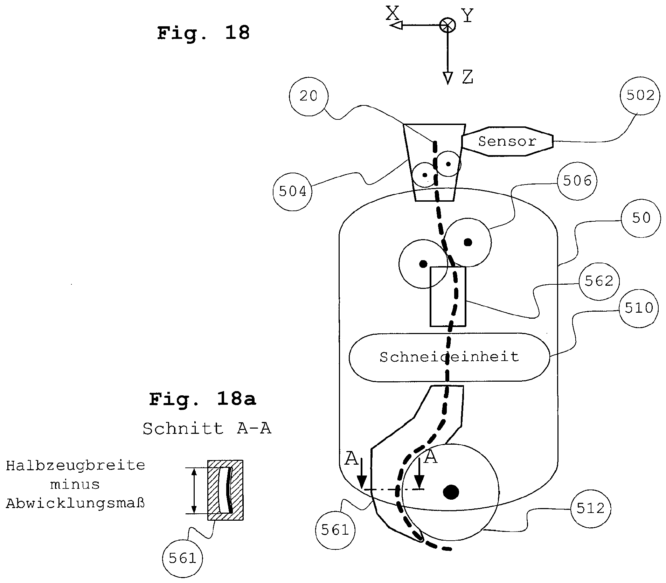

Fig. 18 zeigt eine weitere Ausführungsform der Appliziereinrichtung 50 mit Führungselementen 561 und 562. Das Halbzeug 20 wird über die Appliziereinrichtung 50, die gegenüber der Antriebseinheit 10 eine Bewegung in Z-Richtung durchführen kann, auf die Werkzeugoberfläche 101 oder die Trägermedien 102 oder 102b gelegt. Ein elektrischer, pneumatischer oder magnetischer Aktuator erzeugt die steuerbare und regelbare Konsolidierungskraft bei der Ablage des Halbzeugs 20.

Die Führungselemente 561, 562 für das Halbzeug 20 in der Appliziereinrichtung 50 sind in dieser Ausführungsform in einer quer zur Förderrichtung des Halbzeugs 20 konkav oder konvex gebogenen Ausführung gestaltet. Diese Gestaltungsform nutzt in vorteilhafter Weise einen Selbstzentrierungseffekt des Halbzeugs 20. Darüber hinaus kann dadurch die Applizierpräzision erhöht werden, da die Breitentoleranz gegenüber dem Halbzeug 20 in eine gleichmäßige Biegung des Halbzeugs 20 überführt wird und somit die absolute Breite der Führung nicht mit einer hohen Toleranz bedacht werden muss. Darüber hinaus wird durch eine Durchbiegung im Halbzeug 20 erreicht, dass bei nicht geführten, freien Passagen die Eigensteifigkeit des Halbzeugs 20 gegenüber Auslenkungen verbessert wird. Dies kann auch für die im Rahmen der Fig. 13, 14, 15, 16a, 16b, 17a, 17b und 18 vorgestellten Ausführungsformen Berücksichtigung finden.

Fig. 18a zeigt einen Schnitt entlang der Achse A-A der Fig. 18 zur Darstellung der Biegung des Halbzeugs 20.

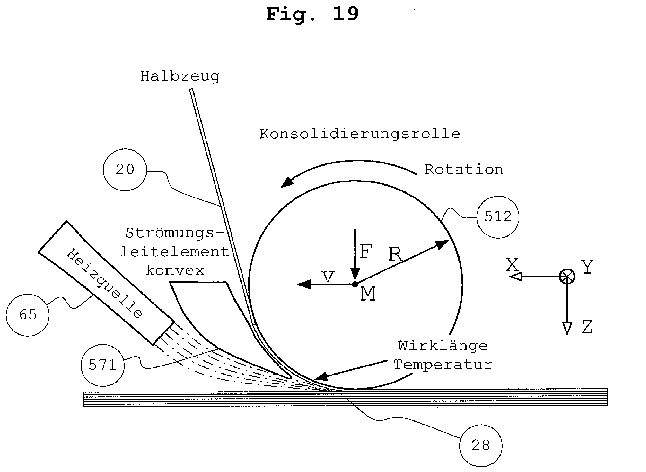

Fig. 19 zeigt eine weitere Ausgestaltung des Konsolidierungsbereiches mit Konsolidierungsrolle 512 und einlaufendem Halbzeug 20, wobei Anbauelemente 571 der Appliziereinrichtung 50 derart gestaltet sind, dass sie den Coandä-Effekt zur Unterstützung der Strömungsausbildung und somit der Temperaturführung für die Heizeinrichtung 65 nutzen. Damit wird der Energiefluss möglichst zentral in den Kontaktpunkt 30 geleitet. Durch die Ausgestaltung der Anbauelemente 571 wird die effektive Wirklänge der Heizquelle 65 und somit der effektive Wirkbereich der Temperatur modifiziert.

Beispielsweise können die Anbauelemente 571 einen Strömungskanal bilden, so dass beispielsweise ein gezündetes Brenngasgemisch der Heizeinrichtung 65 über den Strömungskanal zum Halbzeug 20 effizient geleitet wird. In einer bevorzugten Ausführungsform bestehen die den Strömungskanals bildenden Anbauelemente 571 aus keramischen Werkstoffen.

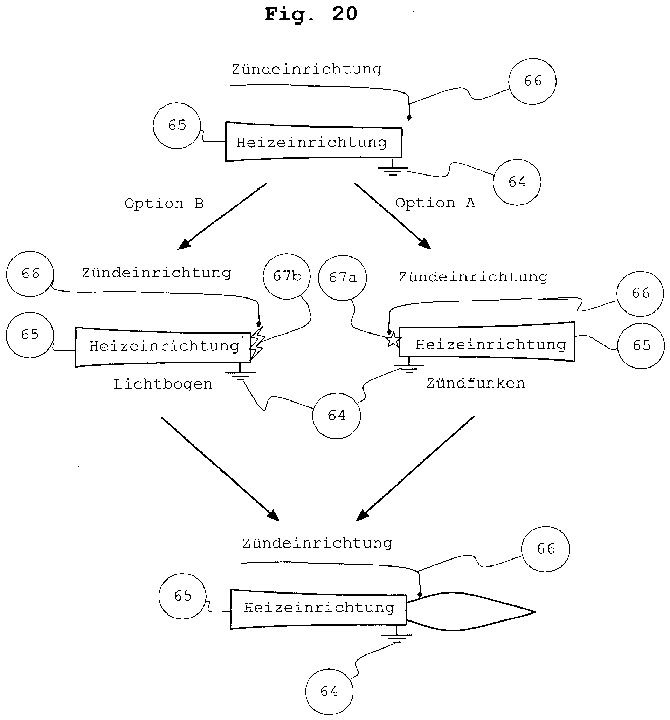

Fig. 20 zeigt eine bevorzugte Ausführungsform der Heizeinrichtung 65 mit einer optionalen Zündeinrichtung 66.

In dieser bevorzugten Version handelt es sich um eine Brenngasheizeinrichtung 65, die ein Brenngas zur Energieerzeugung verbrennt. Die Fluidmengen können beispielsweise elektronisch geregelt und in Temperatur und Leistung über die Variation der stöchiometrischen Verhältnisse und/oder dem Volumenstrom angepasst werden.

Zur Zündung des Gemisches weist die Brenngasheizeinrichtung 65 eine Zündeinrichtung 66 auf zur Zündung des Brenngases. Die Heizeinrichtung 65 weist in der gezeigten Ausführung eine Erdverbindung 64 auf. Die Zündeinrichtung 66 kann derart gesteuert werden, dass z.B. ein Zündfunken 67a oder ein Lichtbogen 67b erzeugt wird. Sobald der Zündfunken 67a oder der Lichtbogen 67b der Zündeinrichtung 66 anliegt, wird das bereits ausströmende Brenngas entzündet.

Beispielsweise bei einer Wasserstoff-Sauerstoff-Verbrennung entsteht ein stark überhitztes $H_2O$-Gemisch. Die Umströmung mit der Brenngas- und/oder Abgasatmosphäre kann in einer Ausführungsform die Degradation des Polymers durch hohe Temperaturen stark mindern, da die freien Sauerstoffatome für eine Oxidation gebunden sind. Es entsteht eine Schutzgasumgebung.

In einer Ausführungsform der Heizeinrichtung 65 wird also eine elektrische Zündeinrichtung 66 verwendet, welche das Brenngas mit einem Lichtbogen und/oder einem Zündfunken entzündet. Das Brenngas kann bahnbezogen wenige Millimeter vor dem Zündpunkt ausströmen, und exakt zum wegbezogenen Zündpunkt wird das Brenngasgemisch mit einer Präzision von beispielsweise +/- 0,001 mm, auf den Bahnpfad bezogen über alle Tool-Center-Point-Geschwindigkeiten vTCP gezündet. Selbstverständlich sind auch niedrigere, d.h. schlechtere, Präzisionen möglich.

Die Zündeinrichtung wird vorzugsweise mit 5 bis 30 kV betrieben.

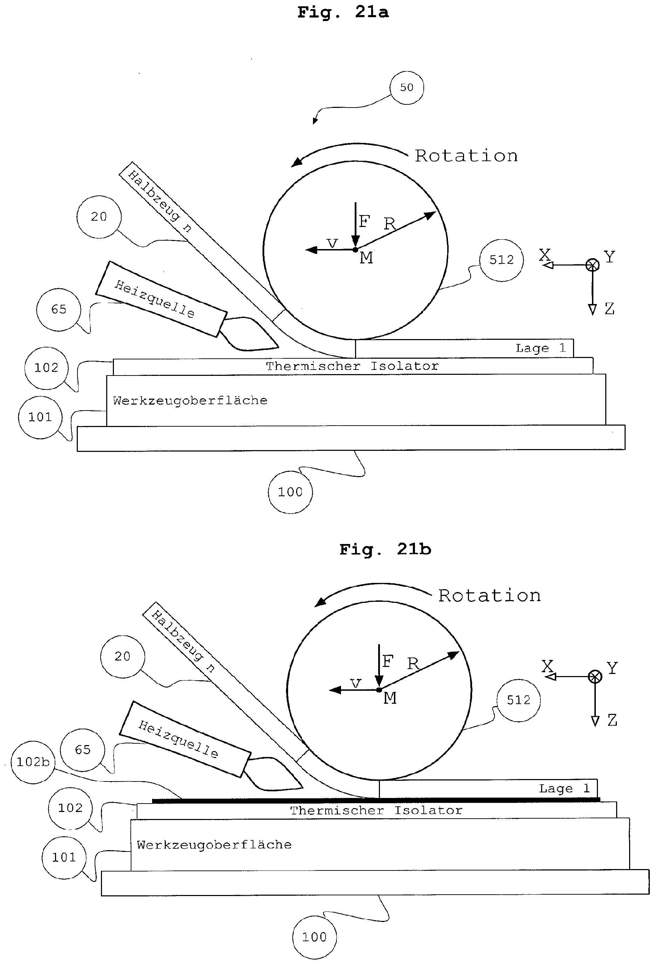

In der mit Fig. 21a gezeigten Ausführungsform umfasst der Applikationsbereich 100 ein Werkzeug 101 und ein thermisch isolierendes Trägermedium 102, das beispielsweise auf einem Aufnahmewerkzeug 101 liegt und eine Wärmeleitung von < 1 W/(m · K) für polymere Werkstoffe und < 3,5 W/(m · K) für anorganische Werkstoffe und eine Dichte von < 3,5 g/cm^3 aufweist. Das Trägermedium 102 weist eine flächige oder sphärische Ausdehnung mit einer Dicke von 0,05 mm bis 25 mm auf. Übrige, gleiche Gegenstände sind mit gleichen Bezugszeichen der vorherigen Figuren versehen, es erfolgt keine wiederholte Beschreibung. Das Trägermedium 102 kann z.B. mittels Unterdruck an der Bodengruppe 2 fixiert sein. Es kann auch kraft- oder formschlüssig oder elektrostatisch an der Bodengruppe 2 fixiert werden.

In der mit Fig. 21b gezeigten Ausführungsform umfasst der Applikationsbereich 100, ein Werkzeug 101 und ein thermisch isolierendes Trägermedium 102, das beispielsweise auf dem Aufnahmewerkzeug 101 liegt, sowie ein Trägermedium 102b, das beispielsweise auf dem thermisch isolierenden Trägermedium 102 liegt. Sowohl das thermisch isolierende Trägermedium 102 als auch das Trägermedium 102b besitzen eine Wärmeleitung von < 1 W/(m · K) für polymere Werkstoffe und < 3,5 W/(m · K) für anorganische Werkstoffe.

In einer bevorzugten Ausführungsform hat das Trägermedium 102 eine flächige oder sphärische Ausdehnung mit einer Dicke von 0,05 mm bis 25 mm. Das Trägermedium 102b weist in einer bevorzugten Ausführung eine Dicke von 0,025 bis 1 mm auf.

Die Trägermedien 102 bzw. 102b können vom Applikationsbereich 100 bzw. dem Werkzeug 101 rückstandslos entnommen werden. Das Trägermedium 102 kann vom Trägermedium 102b ebenfalls rückstandslos entnommen werden. Diese Entnahmeprozesse sind automatisierbar.

Übrige, gleiche Gegenstände sind mit gleichen Bezugszeichen der vorherigen Figuren versehen, es erfolgt keine wiederholte Beschreibung. Das Trägermedium 102 und das Trägermedium 102b können z.B. mittels Unterdruck an der Bodengruppe 2 fixiert sein. Es kann auch kraft- oder formschlüssig oder elektrostatisch fixiert werden.

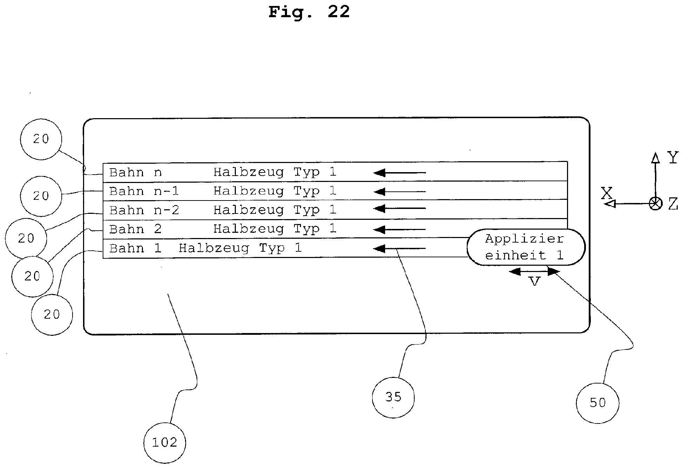

Fig. 22 zeigt ein erstes Beispiel eines Ablegeverfahrens des Halbzeugs 20 auf beispielsweise einem Trägermedium 102. Es wird eine einzelne Appliziereinrichtung 50 eingesetzt, beispielsweise die in Fig. 13 gezeigte Appliziereinrichtung 50. Alle Bahnen werden in derselben Ablegerichtung 35 abgelegt. Eine Komposition der gezeigten Art ist jedoch selbstverständlich auch mit den in Fig. 14 oder Fig. 15 gezeigten Bauformen der Appliziereinrichtung 50 möglich.

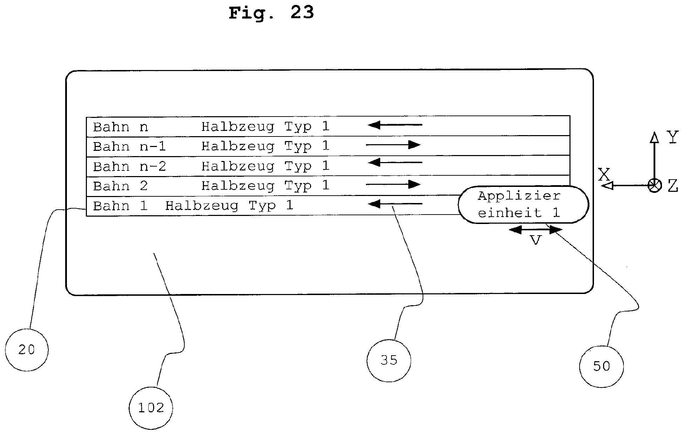

Fig. 23 zeigt ein zweites Beispiel eines Ablegeverfahrens des Halbzeugs 20 auf beispielsweise einem Trägermedium 102. Es wird eine duplexfähige Appliziereinrichtung 50 eingesetzt, beispielsweise die in Fig. 14 gezeigte Appliziereinrichtung 50. Die Bahnen werden sukzessiv abwechselnd abgelegt. Eine Wegersparnis für die Appliziereinrichtung 50 tritt auf, somit eine Zeitersparnis für das gesamte Applizierverfahren. Diese Komposition ist auch mit den in Fig. 15 und Fig. 13 gezeigten Bauformen möglich, wobei bei einer Applikation mit der Bauform der Fig. 13 eine 180°-Drehung der Appliziereinrichtung 50 gegenüber der Antriebseinheit 10 ermöglicht sein muss.

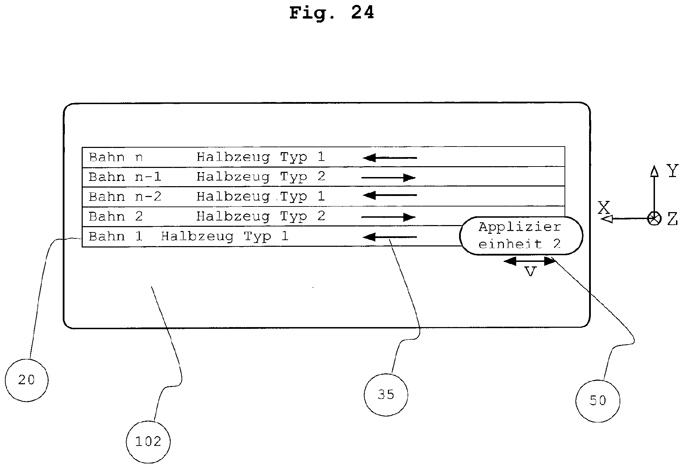

Fig. 24 zeigt ein drittes Beispiel eines Ablegeverfahrens von verschiedenen Halbzeugen 20, 20' auf beispielsweise einem Trägermedium 102. Es wird bevorzugt eine duplexfähige Appliziereinrichtung 50 eingesetzt, beispielsweise die in Fig. 15 gezeigte Appliziereinrichtung 50. Die Bahnen werden sukzessiv abwechselnd abgelegt, wobei das Halbzeug 20 vom Typ 1 in einer ersten Richtung abgelegt wird, das Halbzeug 20' vom Typ 2 in der entgegengesetzten Richtung abgelegt wird. Die Ablage dieses Musters ist auch mit den übrigen Ausführungsbeispielen der Appliziereinrichtung 50 möglich, wenngleich somit unter Umständen ein Halbzeugwechsel für jede Bahn erforderlich sein kann.

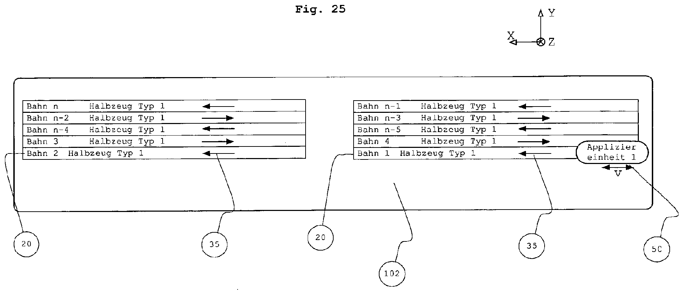

Fig. 25 zeigt ein viertes Beispiel eines Ablegeverfahrens eines Halbzeugs 20 auf beispielsweise einem Trägermedium 102 bezüglich einer Kompositionsmöglichkeit zur Herstellung von unterbrochenen Faser-Kunststoff-Verbunden 28. Die Bahnen werden in diesem Beispiel sukzessiv jede zweite Bahn abwechselnd abgelegt.

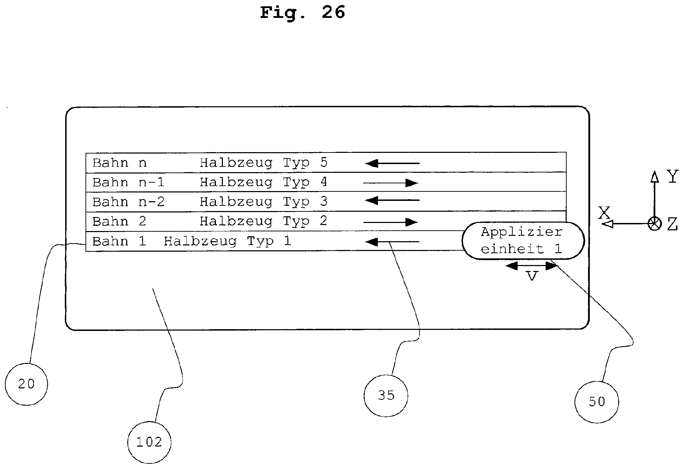

Fig. 26 zeigt ein fünftes Beispiel eines Ablegeverfahrens von Halbzeugen 20 auf beispielsweise einem Trägermedium 102 bezüglich einer Kompositionsmöglichkeit zur Herstellung von Faser-Kunststoff-Verbunden 28 mit bahnweisem Wechsel des Halbzeugs unter Verwendung von Halbzeugen verschiedener Typen. Gezeigt sind die Typen Typ 1, Typ 2, Typ 3, Typ 4, Typ 5 die bahnweise oder lagenweise abwechselnd abgelegt werden können. Der Einsatz aller gezeigten Varianten der Appliziereinrichtung 50 ist möglich.

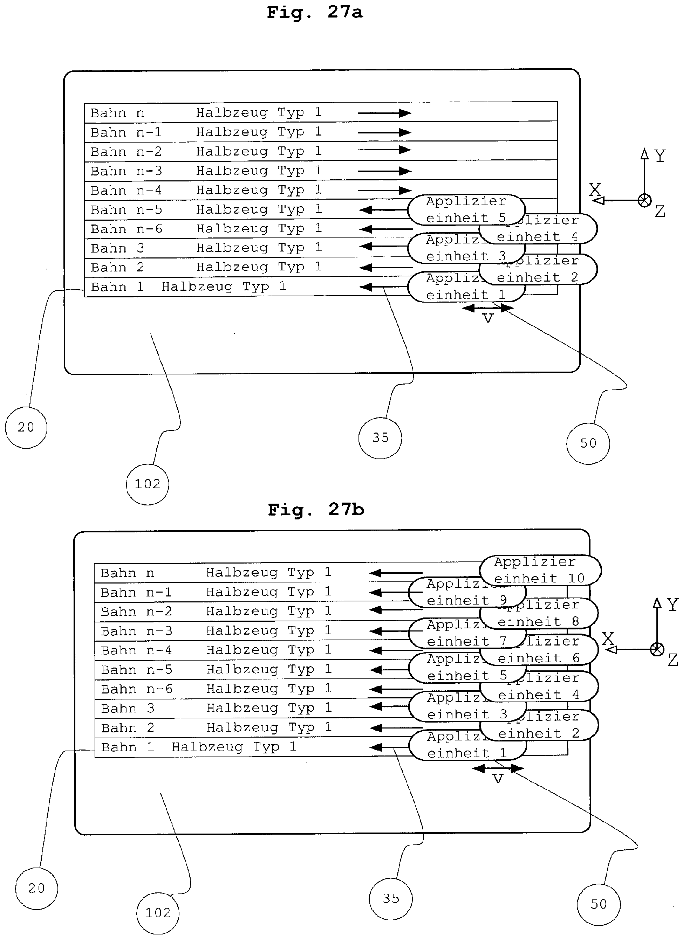

Fig. 27a zeigt ein sechstes Beispiel eines Ablegeverfahrens eines Halbzeugs 20 auf beispielsweise einem Trägermedium 102 bezüglich einer Kompositionsmöglichkeit zur Herstellung von Faser-Kunststoff-Verbunden 28 mit mehreren Appliziereinrichtungen 50 in einer Kompositionsanlage 1. Beispielsweise können die Bahnen 1, 2, 3, n-6 und n-5 in einem einzigen Schritt nebeneinander in einer Lage des Substrats 28 von mehreren simultan betriebenen Appliziereinrichtungen 50 abgelegt werden. Ferner beispielsweise können dann die Bahnen n-4, n-3, n-2, n-1 und n gleichzeitig daran anschließend abgelegt werden, vorzugsweise bereits in Gegenrichtung zur Ablage der vorigen Bahnen.

Fig. 27b zeigt eine weitere Ausführungsform des vorigen Beispiels eines Ablegeverfahrens eines Halbzeugs 20 auf beispielsweise einem Trägermedium 102 bezüglich einer Kompositionsmöglichkeit zur Herstellung von Faser-Kunststoff-Verbunden 28 mit mehreren Appliziereinrichtungen 50 in einer Kompositionsanlage 1. Beispielsweise können alle Bahnen in einem einzigen Schritt nebeneinander in einer Lage des Substrats 28 von mehreren simultan betriebenen Appliziereinrichtungen 50 abgelegt werden.

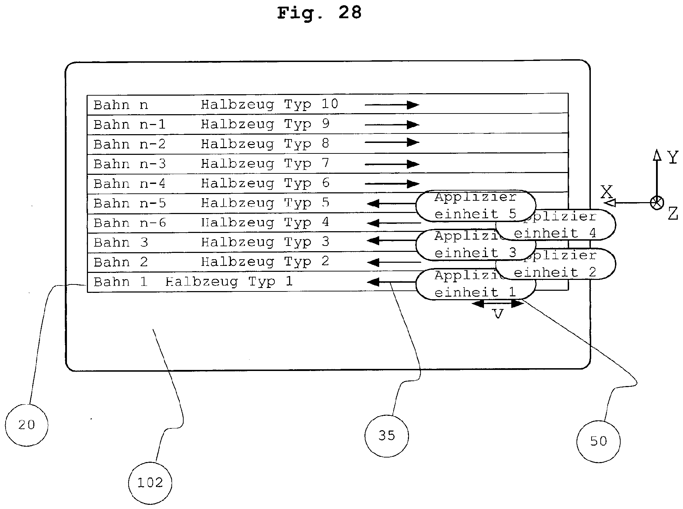

Fig. 28 zeigt schließlich noch ein Beispiel eines Ablegeverfahrens eines Halbzeugs 20 auf beispielsweise einem Trägermedium 102 bezüglich einer Kompositionsmöglichkeit zur Herstellung von Faser-Kunststoff-Verbunden 28 mit mehreren Appliziereinrichtungen 50 mit bahnweiser Halbzeugzuordnung.

Selbstverständlich können alle vorherigen gezeigten Beispiele des Ablegeverfahrens in der Materialwahl und in der richtungs- und positionsvariabel Ablage frei gewählt werden.

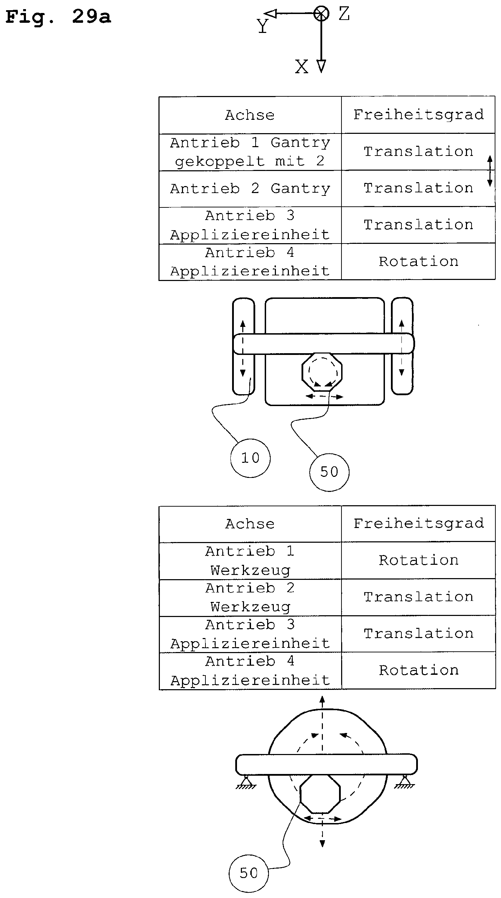

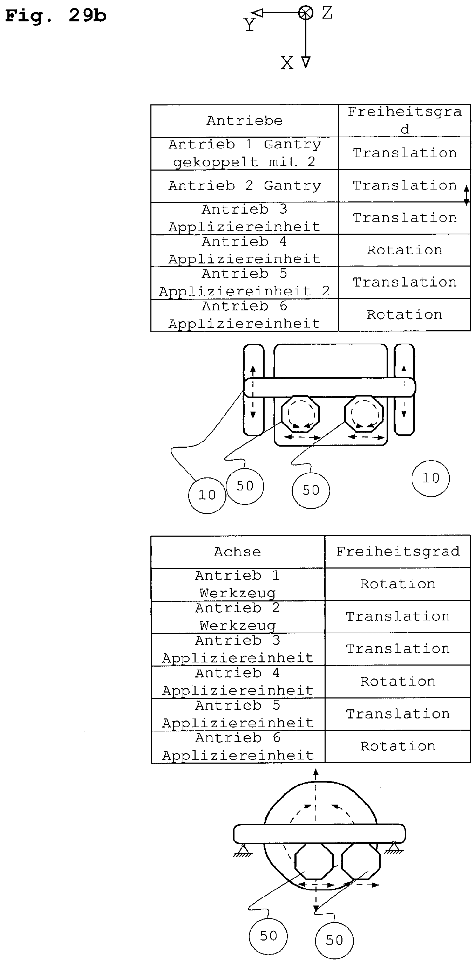

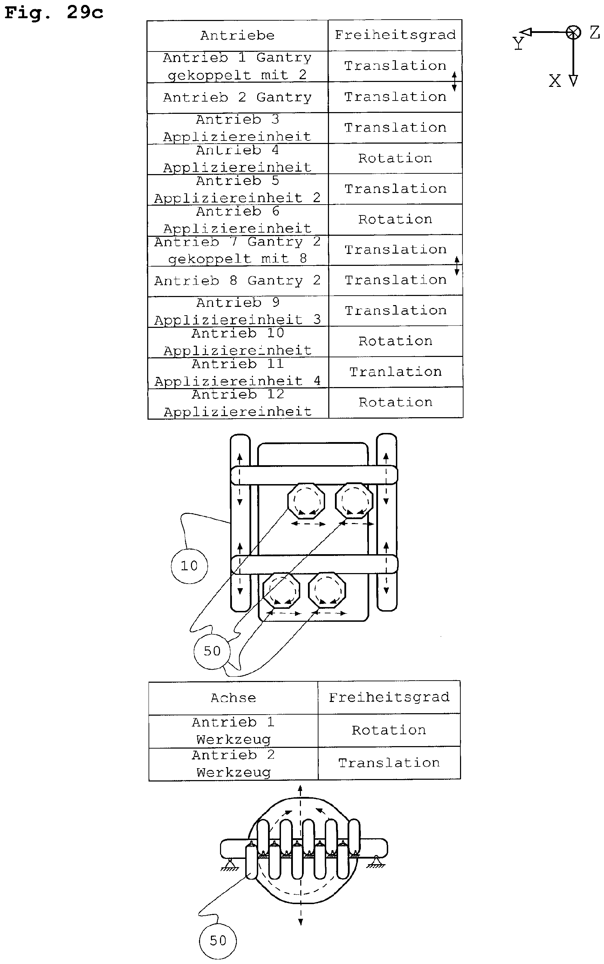

Fig. 29 zeigt einen Auszug aus verschiedenen Antriebskonfigurationen für die Antriebseinheit 10 und/oder die Appliziereinrichtung 50 hinsichtlich der möglichen Freiheitsgrade. Im unteren Bereich der Fig. 29 ist ein weiteres Ausführungsbeispiel des Applikationsbereiches 100 dargestellt, wobei der Applikationsbereich 100 drehbar gelagert ist und eine Translation auf der Bodengruppe 2 durchführen kann, so dass eine Bewegung des Applikationsbereiches 100 ermöglicht ist und die Appliziereinrichtung 50 durch das Zusammenwirken einer Bewegung des Applikationsbereiches 100 mit der Antriebseinheit 10 alle Positionen auf dem Applikationsbereich 100 erreichen kann. In einer weiteren Ausführungsform ist der Applikationsbereich 100 drehbar gelagert und kann eine Translation auf der Bodengruppe 2 durchführen, so dass über eine Parallelisierung von Appliziereinheiten 50 eine volle Bedeckung des Applikationsbereiches möglich ist.

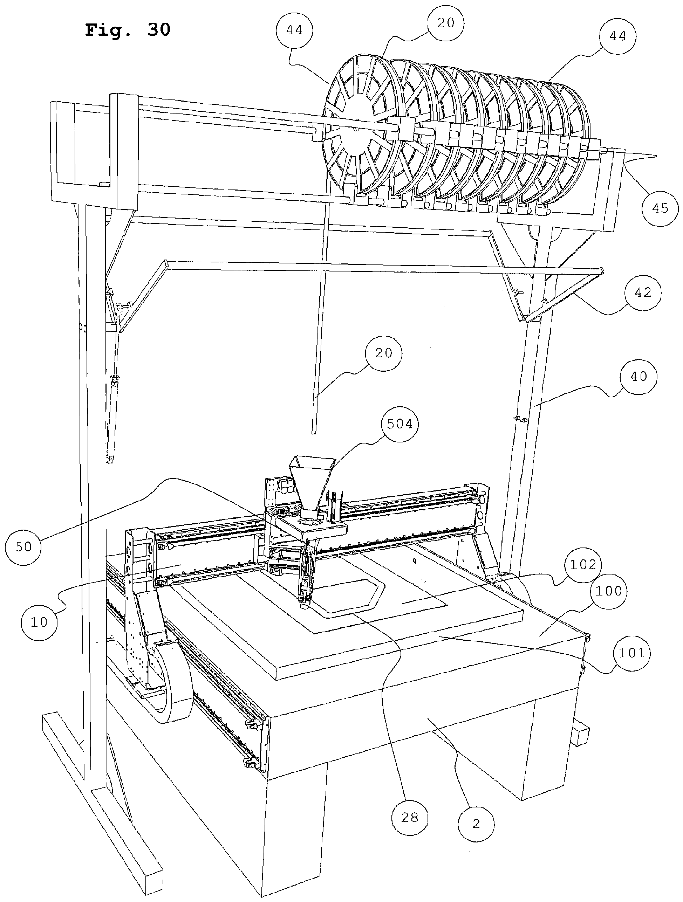

Fig. 30 zeigt eine schematische Zeichnung in einer Totalansicht einer Kompositionsanlage 1 mit einer Bodengruppe 2, an welcher seitlich die Antriebseinheit 10 gelagert ist. Die Antriebseinheit 10 weist mehrere Führungsschienen auf unter anderem zur Führung und Bewegung der Appliziereinrichtung 50. Die Appliziereinrichtung 50 ist somit mittels der Antriebseinheit 10 frei oberhalb des Applikationsbereiches 100 bewegbar.

Verschiedene Halbzeuge 20 stehen oberhalb der Appliziereinrichtung 50 auf einer Halbzeughalterung 40 bevorratet zur Verfügung, so dass das jeweils einzusetzende Halbzeug in eine Zuführeinrichtung 504 eingesenkt und der Appliziereinrichtung 50 zugeführt werden kann. Ein Substrat 28 ist in der Komposition befindlich dargestellt, welches auf einem Trägermedium 102 aufgebracht wird, wobei das Trägermedium 102 auf einem Werkzeug 101 fixiert ist. Das Werkzeug 101 ist wiederum an der Bodengruppe 2 fixiert.

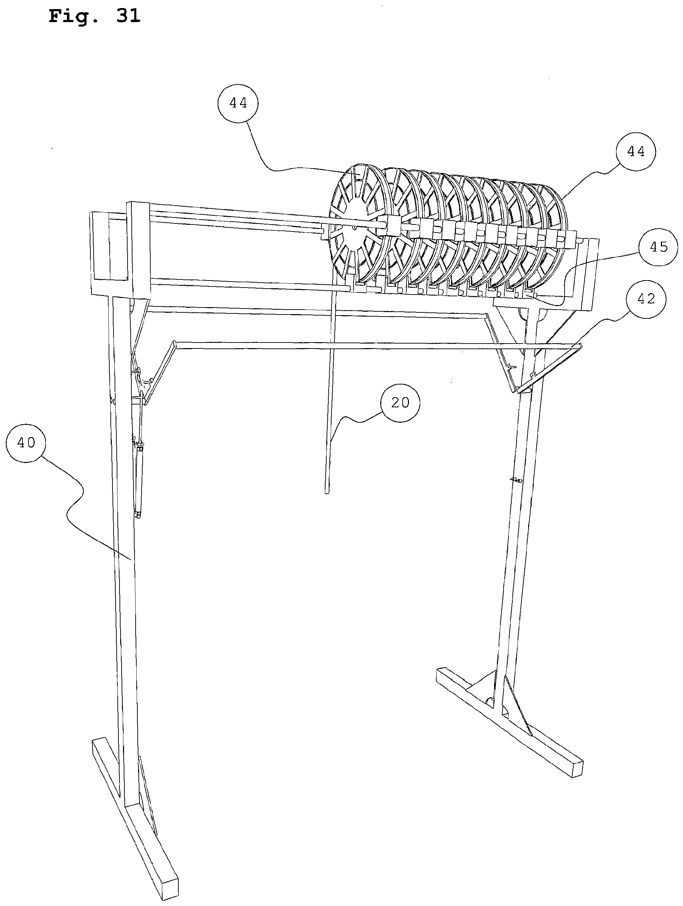

Fig. 31 zeigt eine schematische Zeichnung der Halbzeughalterung 40 bzw. der Vorrichtung 40 für die Bereitstellung der Halbzeuge 20. Die Halbzeughalterung 40 weist eine Fangvorrichtung 42 auf. Die Fangvorrichtung 42 zentriert die Halbzeuge 20 oberhalb der Einführung bzw. der Zuführeinrichtung 504 der Appliziereinrichtung 50 während ein anderes, ggf. neues oder unterschiedliches Halbzeug 20, in die Appliziereinrichtung 50 transportiert bzw. eingeführt wird. Durch das Zusammenwirken von Spulen 44 (oder Magazinen), in welchen die Halbzeuge 20 bevorratet werden, Fangvorrichtung 42 und Appliziereinrichtung 50 können schnelle Halbzeugwechsel durchgeführt werden oder eine kontinuierliche Produktion gewährleistet werden. Die Spulen 44 sind individuell über die Antriebe der Spulen oder Magazine 45 ansteuerbar.

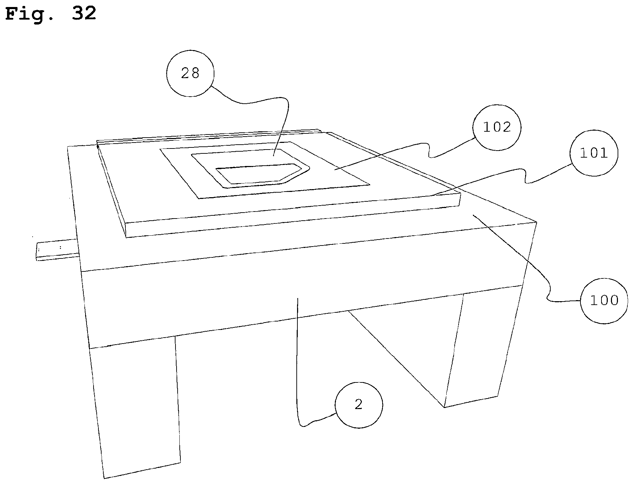

Fig. 32 zeigt eine Ausführungsform einer Bodengruppe 2 mit Werkzeug 101 und einem fixierten Trägermedium 102, mit bereits appliziertem Substrat 28, die auf dem Applikationsbereich 100 angeordnet sind.

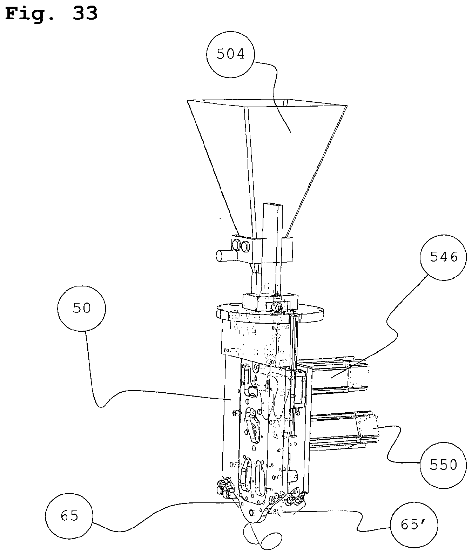

Fig. 33 zeigt eine Skizze einer Detailansicht einer Appliziereinrichtung 50 mit Zuführeinrichtung 504, Antrieben 546 und 550 und Heizeinrichtungen 65, 65'. Es wird auf die Ausführungen zu den vorherigen Beispielen der Appliziereinrichtung 50 Bezug genommen.

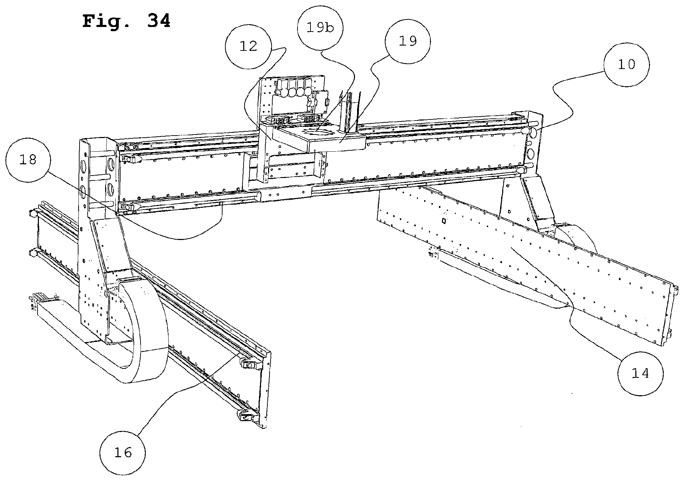

Fig. 34 zeigt ein Beispiel einer Antriebseinheit 10 in "Gantry-Ausführung". Eine Appliziereinrichtungs-Halterung 12 dient zur Aufnahme der Appliziereinrichtung 50. Die Antriebseinheit weist seitliche Montageflächen 14 auf, die zur seitlichen Montage an der Bodengruppe 2 vorgesehen sind. Eine erste Linearführung 16 ermöglicht die Translation der Antriebseinheit 10 bzw. der Appliziereinrichtung 50 in einer ersten horizontalen Richtung; Eine zweite Linearführung 18 ermöglicht die Translation der Appliziereinrichtung 50 in einer zu der ersten horizontalen Richtung senkrechten zweiten horizontalen Richtung. Eine Rotationseinheit 19, bestehend aus Lagerung und Antrieb, mit zentraler Halbzeugzuführung 20 durch eine Hohlwelle 19b ermöglicht die freie Drehung der Appliziereinheit 50.

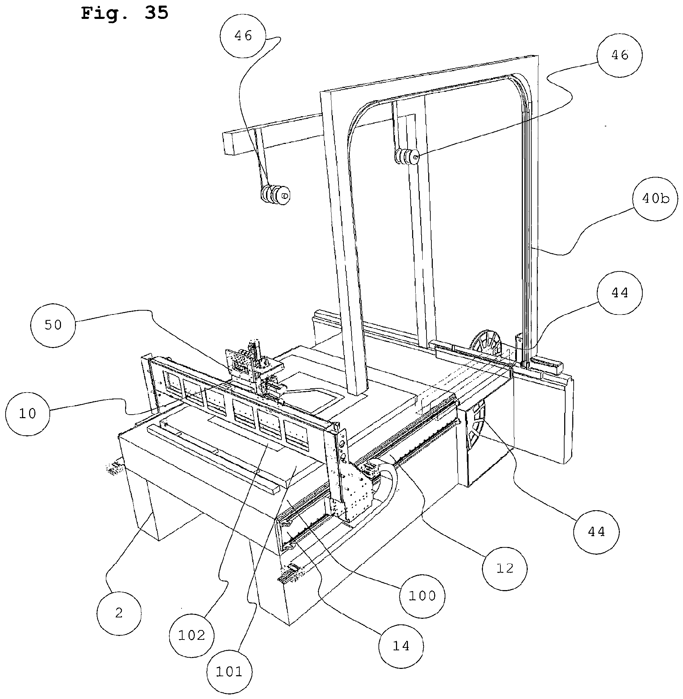

Fig. 35 zeigt eine Variante der Kompositionsanlage 1. Die Spulen oder Magazine 44 für das Halbzeug 20 können seitlich der Bodengruppe 2 vorgehalten werden und mittels der Vorrichtung 40b der Appliziereinrichtung 50 zugeführt werden.

Für einen Materialwechsel des Halbzeugs 20 platziert die Antriebseinheit 10 die Appliziereinrichtung 50 sowie der Bandzuführmechanismus 40 sich jeweils an einem Übergabepunkt, das Halbzeug 20 kann z.B. von einem Greiferkopf am Zuführarm automatisch gegriffen und über die Umlenkrollen 46 in die Zuführeinrichtung 504 der Applizieeinheit 50 geschoben werden. Erkennt der Bandsensor 502 in der Appliziereinrichtung 50, dass das Halbzeug 20 eingeführt wurde, wird der Greifer gelöst. Auf einen zweiten Fördermechanismus in der Zuführeinrichtung 504 kann damit verzichtet werden und die Appliziereinrichtung 50 noch kompakter gebaut werden.

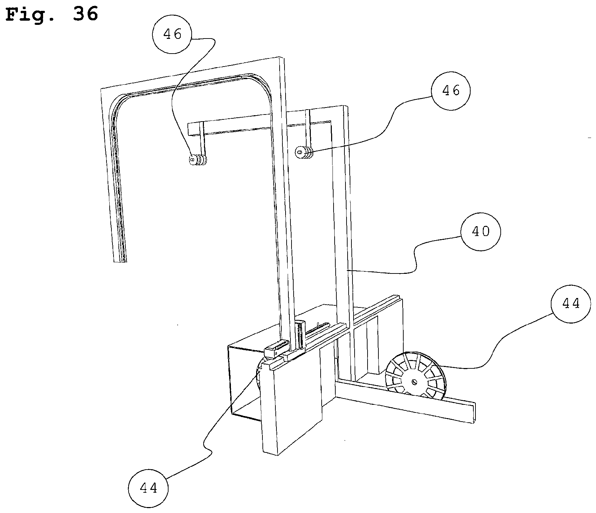

Fig. 36 zeigt die Ausführungsform der Fig. 35 von einer weiteren Ansichtsseite, wobei die Bevorratung des Halbzeugs 20 in der Rolle 44 besser sichtbar ist. Die Spulen 44 sind individuell über die Antriebe der Spulen oder Magazine 45 ansteuerbar.

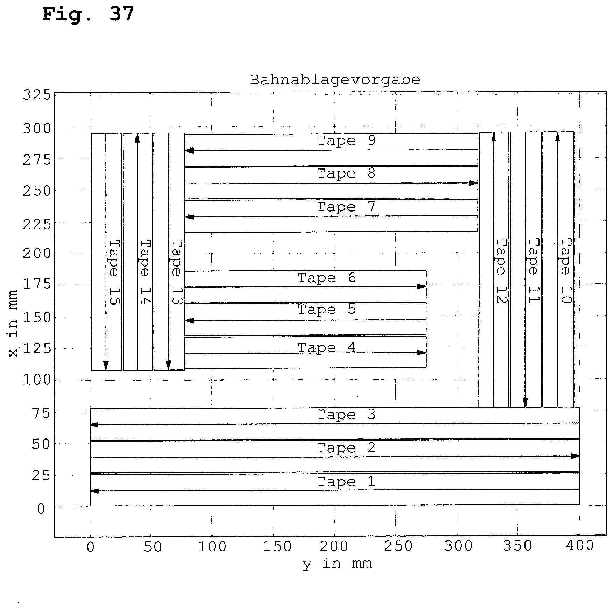

Fig. 37 zeigt einen beispielhaft mit der Kompositionsanlage 1 erzielbaren Bahnaufbau mit gleichen Halbzeugtypen 20.

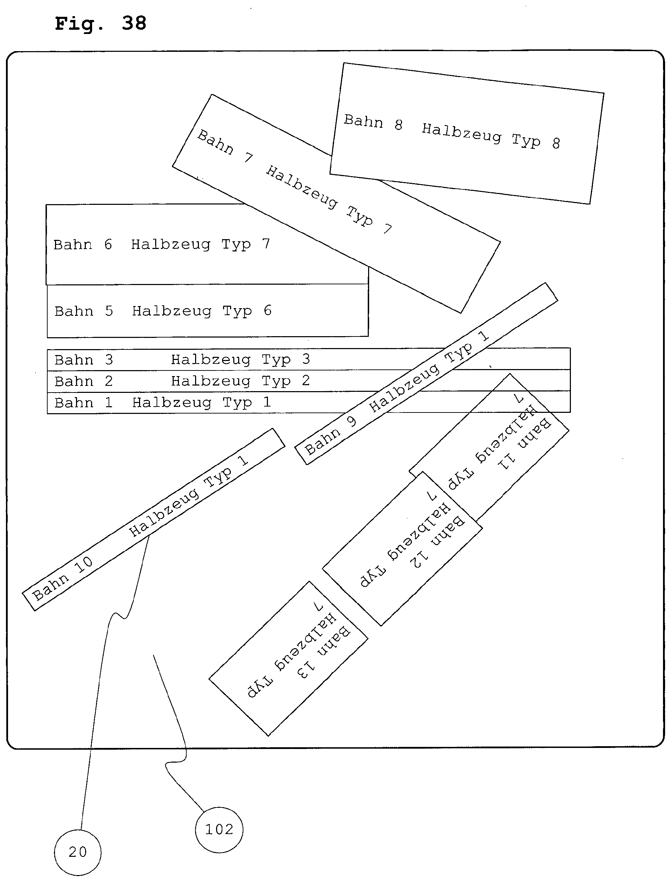

Fig. 38 zeigt schließlich einen beispielhaft mit der Kompositionsanlage 1 erzielbaren Bahnaufbau verschiedener Halbzeugtypen 20, 20' mit unterschiedlichem richtungs- und positionsvariablem Aufbau. Die Halbzeugtypen 20, 20' können beispielsweise in der materiellen Beschaffenheit und in den Dimensionen Breite, Dicke und Querschnittsgeometrie variieren. Diese Variabilität ist mit der Kompositionsanlage 1 auch auf einen Lagenaufbau aus mehreren übereinander angeordneten Bahnen übertragbar.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne den Schutzbereich der Ansprüche zu verlassen.

Bezugszeichenliste:

| | |
|---|---|
| 1 | Kompositionsanlage |
| 2 | Bodengruppe |
| 10 | Antriebseinheit |
| 12 | Appliziereinrichtungshalterung |
| 14 | seitliche Montagefläche |
| 16 | erste Linearführung |
| 18 | zweite Linearführung |
| 19 | Rotationseinheit |
| 19b | Hohlwelle der Rotationseinheit |
| 20 | Halbzeug |

| 21 | oberste Lage des Substrats |
|---|---|
| 22 | zweite Lage des Substrats |
| 23 | dritte Lage des Substrats |
| 24 | vierte Lage des Substrats |
| 25 | unterste Lage des Substrats |
| 28 | Substrat |
| 29 | Schmelzzone |
| 29b | Nip-Point |
| 30 | Kontaktstelle |
| 35 | Ablegerichtung |
| 40 | Halbzeughalterung bzw. Vorrichtung zur Bevorratung der Halbzeuge |
| 40b | Variante der Halbzeughalterung bzw. Vorrichtung zur Bevorratung der Halbzeuge |
| 42 | Fangvorrichtung |
| 44 | Spule oder Magazin |
| 45 | Antrieb Spule oder Magazin |
| 46 | Umlenkrolle |
| 50 | Appliziereinrichtung |
| 54 | Gestell |
| 56 | Antriebssystem |
| 64 | Erdverbindung |
| 65 | Heizeinrichtung |
| 66 | Zündeinrichtung |
| 67a | Zündfunke |
| 67b | Lichtbogen |
| 68 | Faserkopplung, Lichtwellenleiter |
| 70 | Lasermodule |
| 72 | Halter |
| 73 | Strahlkegel |
| 100 | Applikationsbereich |
| 101 | Werkzeug |
| 102 | Trägermedium |
| 102b | Trägermedium |
| 300 | Berechnungsphase |
| 301 | erster Schritt der Berechnungsphase |
| 302 | zweiter Schritt der Berechnungsphase |
| 303 | dritter Schritt der Berechnungsphase |
| 304 | vierter Schritt der Berechnungsphase |
| 305 | fünfter Schritt der Berechnungsphase |
| 306 | Zwischenschritt |
| 307 | Schritt der Berechnungsphase |
| 308 | Schritt der Berechnungsphase |
| 310 | Ausführungsphase |
| 311 bis 321 | Schritte der Ausführungsphase |
| 400 | Hochgeschwindigkeitsfügen |
| 401 | Heizleistung |
| 402 | Wärmeübergang |
| 403 | Heizrate |
| 404 | Dünnschichtschmelze |
| 405 | gespeicherte Wärme |
| 406 | Kühlrate |
| 407 | Expositionszeit |
| 408 | Mobilität der Makromoleküle |
| 409 | Prinzipfigur |
| 410 | Hochgeschwindigkeitsfügen |
| 502 | Zuführsensor |
| 504 | Zuführeinrichtung |
| 506 | Fördereinheit, Bandantrieb |
| 508 | Schneidsensor |

| 510 | Schneideinheit |
| 512 | Konsolidierungsrolle |
| 514 | Konsolidierungssensor |
| 516 | Bandweiche |
| 522 | zweiter Zuführsensor |
| 524 | zweite Zuführeinrichtung |
| 526 | zweite Fördereinheit, Bandantrieb |
| 528 | Bandweichensensor |
| 530 | zweite Schneideinheit |
| 546 | Antrieb |
| 546a | Antrieb |
| 546b | Antrieb |
| 547a | Welle |
| 547b | Welle |
| 550 | Antrieb |
| 551 | Welle |
| 552 | Antrieb |
| 553 | Welle |
| 561 | Führungselement |
| 562 | Führungselement |
| 571 | Anbauelement |

**Patentansprüche**

1. Verfahren zur Komposition von Faser-Kunststoff-Verbunden mit den Schritten:

   - Bereitstellen eines Halbzeugs (20, 20') in einer Vorratseinrichtung (40, 40b, 44),
   - Zuführen des Halbzeugs zu einer Appliziereinrichtung (50),
   - Erhitzen des Halbzeugs (20, 20') mittels einer Heizeinrichtung, so dass eine lokale Phasenänderung des Halbzeugs (20, 20') in einen zumindest teilweise plastischen Zustand induziert wird,
   - Ausführen einer Relativbewegung zwischen der Appliziereinrichtung (50) und einem Applikationsbereich (100), und
   - richtungs- und positionsvariable Applikation des Halbzeugs (20) auf den Applikationsbereich (100) mittels der Appliziereinrichtung (50) während des Ausführens der Relativbewegung zwischen der Appliziereinrichtung (50) und dem Applikationsbererich (10),

   wobei die Relativbewegung zwischen der Appliziereinrichtung (50) und dem Applikationsbereich (100) mit einer Tool-Center-Point-Geschwindigkeit (vTCP) von größer oder gleich 0,5 m/s ausgeführt wird.

2. Verfahren zur Komposition von Faser-Kunststoff-Verbunden nach Anspruch 1, wobei während der Applikation des Halbzeugs (20, 20') auf den Applikationsbereich (100) mittels einer Heizeinrichtung (65) ein Temperaturgradient der Wärmeverteilung über eine Dicke des Halbzeugs so eingestellt wird,

   - dass das Halbzeug nur teilweise aufgeschmolzen wird und/oder,
   - dass die im Halbzeug gespeicherte Wärmeenergie kleiner als 40%, bevorzugt kleiner als 20%, bezogen auf die vom Halbzeug zum vollständigen Aufschmelzen benötigte Wärmeenergie, eingestellt ist.

3. Verfahren zur Komposition von Faser-Kunststoff-Verbunden nach Anspruch 2, wobei eine sich einstellende Phasenänderung im Halbzeug (20, 20') die Morphologie eines Polymers des Halbzeugs nur in der Randzone verändert.

4. Kompositionsanlage (1) für Verbundwerkstoffe (28), insbesondere zur Ausführung des Verfahrens nach einem der Ansprüche1 bis 3, umfassend:

   - eine Bodengruppe (2) zum Bereitstellen eines Applikationsbereiches (100);
   - eine Vorratseinrichtung (40, 40b, 44) für die Bereitstellung eines Halbzeugs (20, 20') zur Weiterverarbeitung in der Kompositionsanlage;
   - eine elektronische Steuerung (400) zur integrierten Steuerung aller Systeme;

- eine Appliziereinrichtung (50) zum Auftragen des Halbzeugs (20, 20') auf den Applikationsbereich (100), umfassend

- eine Heizeinrichtung (65) zum Erhitzen des Halbzeugs (20, 20'), die dazu gesteuert ist, eine lokale Phasenänderung des Halbzeugs (20, 20') in einen zumindest teilweise plastischen Zustand zu induzieren;

- eine Antriebseinheit (10) zur Veränderung der Position der Appliziereinrichtung (50) relativ zu dem Applikationsbereich (100);

wobei die Antriebseinheit (10) gesteuert ist, für die Zeitphase während des Auftrags des Halbzeugs (20, 20') auf den Applikationsbereich (100) eine Tool-Center-Point-Geschwindigkeit (vTCP) für die Appliziereinrichtung (50) bereitzustellen, und mit der Appliziereinrichtung (50) derart zusammenwirkt, dass das Halbzeug (20, 20') richtungs- und positionsvariabel auf den Applikationsbereich (100) mit der Tool-Center-Point-Geschwindigkeit (vTCP) von größer oder gleich 0,5 m/s aufgetragen wird.

5. Kompositionsanlage (1) nach dem vorstehenden Anspruch, wobei die Antriebseinheit (10) hergerichtet ist, die Tool-Center-Point-Geschwindigkeit (vTCP) für den Zeitbereich während der Auftragung des Halbzeugs (20, 20') auf den Applikationsbereich konstant oder im Wesentlichen konstant zu halten.

6. Kompositionsanlage (1) nach dem vorstehenden Anspruch,

- wobei die Heizeinrichtung (65) hergerichtet ist, beim Erhitzen des Halbzeugs (20, 20') einen Temperaturgradienten der Wärmeverteilung über eine Dicke des Halbzeugs einzustellen, und/oder
- wobei die Heizeinrichtung (65) hergerichtet ist, die Schmelzzone bei dem Erhitzen des Halbzeugs auf die Fügeflächen (29, 29b, 30) zu konzentrieren und/oder
- wobei die Heizeinrichtung (65) für eine Phasenänderung in einen teilweise plastischen Zustand der Polymerkomponenten des Halbzeugs (20, 20') geregelt werden kann, und/oder
- wobei die Heizeinrichtung (65) bevorzugt eine Brennerdüse, Plasma, Halogen, Laser oder eine LED-Quelle umfasst.

7. Kompositionsanlage (1) nach einem der Ansprüche 4 bis 6,

- wobei die Antriebseinheit (10) dazu hergerichtet ist, die Appliziereinrichtung (50) mit einer Beschleunigung von größer oder gleich 8 m/s$^2$, bevorzugt größer oder gleich 20 m/s$^2$, weiter bevorzugt größer oder gleich 50 m/s$^2$, zu beschleunigen und/oder
- wobei die Summe der bewegten Massen der Appliziereinrichtung (50) und der Antriebseinheit (10) zusammen weniger als 750kg, bevorzugt gleich oder weniger als 250kg und weiter bevorzugt gleich oder weniger als 75kg beträgt.

8. Kompositionsanlage (1) nach einem der Ansprüche 4 bis 7, wobei das Halbzeug (20, 20') ein Faserhalbzeug, ein Polymerhalbzeug und/oder ein eigenverstärktes Polymer oder Kombinationen daraus umfasst, wobei insbesondere vollkonsolidierte, teilkonsolidierte, behinderte, benetzte Halbzeuge oder deren Kombinationen und/oder Halbzeuge umfassend Duroplaste, Thermoplaste, Elastomere, deren Derivate und/oder Kombinationen daraus umfasst sind.

9. Kompositionsanlage (1) nach einem der Ansprüche 4 bis 8, wobei die Komposition von Faser-Kunststoff-Verbunden (28) auf dem Applikationsbereich (100) aus Halbzeugen (20, 20') sukzessive entlang von vorgegebenen Bahnpfaden stattfindet und wobei die Komposition von Faser-Kunststoff-Verbunden für jeden Bahnpfad individuell ermöglicht ist.

10. Kompositionsanlage (1) nach einem der Ansprüche 4 bis 9, ferner umfassend zumindest ein weiteres Halbzeug (20'), welches sich von dem Halbzeug (20) unterscheidet, wobei die Vorratseinrichtung (40, 40b, 44) dazu hergerichtet ist, das Halbzeug (20) und das weitere Halbzeug (20') wechselweise zu der Appliziereinrichtung (50) zuzuführen, so dass Faser-Kunststoff-Verbunde (28) aus verschiedenen Halbzeugen hergestellt werden können.

11. Kompositionsanlage (1) nach einem der Ansprüche 4 bis 10, wobei die Heizeinrichtung (65) eine Brenngasdüse und ferner eine Zündeinrichtung (66) umfasst, wobei die Zündeinrichtung (66) das Brenngas mit einem Lichtbogen (67b) und/oder einem Zündfunken (67a) entzündet.

12. Kompositionsanlage (1) nach einem der Ansprüche 4 bis 11, wobei die elektronische Steuerung (400) bevorzugt eine Zykluszeit von kleiner oder gleich 1000 μs bereitstellt zur elektronischen Synchronisation der Geschwindigkeit des Antriebssystems (Tool-Center-Point-Geschwindigkeit vTCP) und der Vorschubgeschwindigkeit des Halbzeugs (20, 20') der Appliziereinrichtung (50).

13. Kompositionsanlage (1) nach einem der Ansprüche 4 bis 12, wobei die Tool-Center-Point Geschwindigkeit (vTCP) größer oder gleich 1 m/s, bevorzugt größer oder gleich 2 m/s, weiter bevorzugt größer oder gleich 5 m/s und ferner bevorzugt größer oder gleich 10 m/s beträgt.

14. Kompositionsanlage (1) nach einem der Ansprüche 4 bis 13, wobei die Appliziereinrichtung (50) zum Auftragen des Halbzeugs (20, 20') im Applikationsbereich (100) inklusive der Heizeinrichtung (65) eine Masse von weniger als 40 kg, bevorzugt von weniger als 25 kg aufweist.

15. Kompositionsanlage (1) nach einem der Ansprüche 4 bis 14, ferner umfassend eine Halbzeugwechseleinrichtung zum automatischen Wechsel des Halbzeugs (20, 20').

**Claims**

1. Method for the composition of fibre/plastics composites, comprising the steps of:

   - providing a semi-finished product (20, 20') in a supply device (40, 40b, 44),
   - feeding the semi-finished product to an application device (50),
   - heating the semi-finished product (20, 20') by means of a heating device such that a local phase change of the semi-finished product (20, 20') into an at least partially plastic state is induced,
   - performing a relative movement between the application device (50) and an application region (100), and
   - applying the semi-finished product (20), in a manner variable in terms of direction and position, to the application region (100) by means of the application device (50) while the relative movement between the application device (50) and the application region (10) is being performed,

   wherein the relative movement between the application device (50) and the application region (100) is performed at a tool centre point velocity (vTCP) of greater than or equal to 0.5 m/s.

2. Method for the composition of fibre/plastics composites according to claim 1, wherein during the application of the semi-finished product (20, 20') to the application region (100) by means of a heating device (65) a temperature gradient of the heat distribution over the thickness of the semi-finished product is set in such a way that

   - the semi-finished product is melted on only in part, and/or
   - the heat energy stored in the semi-finished product is set to less than 40%, preferably less than 20%, based on the heat energy required by the semi-finished product for complete melting on.

3. Method for the composition of fibre/plastics composites according to claim 2, wherein a phase change appearing in the semi-finished product (20, 20') changes the morphology of a polymer of the semi-finished product only in the edge region.

4. Composition facility (1) for composite materials (28), in particular for carrying out the method according to any of claims 1 to 3, comprising:

   - a base group (2) for providing an application region (100);
   - a supply device (40, 40b, 44) for providing a semi-finished product (20, 20') for further processing in the composition facility;
   - an electronic controller (400) for integrated control of all the systems;
   - an application device (50) for applying the semi-finished product (20, 20') to the application region (100), comprising
   - a heating device (65) for heating the semi-finished product (20, 20'), which is controlled so as to induce a local phase change of the semi-finished product (20, 20') into an at least partially plastic state;
   - a drive unit (10) for changing the position of the application device (50) relative to the application region (100);

   wherein the drive unit (10) is controlled to provide a tool centre point velocity (vTCP) for the application device (50) for the time phase during the application of the semi-finished product (20, 20') onto the application region (100), and interacts with the application device (50) in such a way that the semi-finished product (20, 20') is applied to the application region (100), in a manner variable in terms of direction and position, at the tool centre point velocity (vTCP) of greater than or equal to 0.5 m/s.

5. Composition facility (1) according to the preceding claim, wherein the drive unit (10) is designed to keep the tool centre point velocity (vTCP) constant or substantially constant for the time range during the application of the semi-finished product (20, 20') onto the application region.

6. Composition facility (1) according to the preceding claim,

   - wherein the heating device (65) is designed to set a temperature gradient of the heat distribution over the thickness of the semi-finished product during heating of the semi-finished product (20, 20'), and/or
   - wherein the heating device (65) is designed to concentrate the melting zone, during heating of the semi-finished product, on the joint surfaces (29, 29b, 30), and/or
   - wherein the heating device (65) can be controlled for a phase change into a partially plastic state of the polymer components of the semi-finished product (20, 20'), and/or
   - wherein the heating device (65) preferably comprises a burner nozzle, plasma, halogen, laser or an LED source.

7. Composition facility (1) according to any of claims 4 to 6,

   - wherein the drive unit (10) is designed to accelerate the application device (50) at an acceleration of greater than or equal to 8 m/s$^2$, preferably greater than or equal to 20 m/s$^2$, more preferably greater than or equal to 50 m/s$^2$, and/or
   - wherein the sum of the moving masses of the application device (50) and the drive unit (10) together is less than 750 kg, preferably less than or equal to 250 kg, and more preferably less than or equal to 75 kg.

8. Composition facility (1) according to any of claims 4 to 7, wherein the semi-finished product (20, 20') includes a semi-finished fibre product, a semi-finished polymer product, and/or a self-reinforced polymer, or combinations thereof, wherein in particular fully consolidated, partially consolidated, bonded, wetted semi-finished products or the combinations thereof, and/or semi-finished products comprising thermosetting plastics, thermoplastics, elastomers, the derivatives thereof, and/or combinations thereof are included.

9. Composition facility (1) according to any of claims 4 to 8, wherein the composition of fibre/plastics composites (28) on the application region (100) takes place from semi-finished products (20, 20') successively along predetermined orbital paths and wherein the composition of fibre/plastics composites is possible individually for each orbital path.

10. Composition facility (1) according to any of claims 4 to 9, further comprising at least one further semi-finished product (20') which differs from the semi-finished product (20), wherein the supply device (40, 40b, 44) is designed to feed the semi-finished product (20) and the further semi-finished product (20') to the application device (50) alternately, such that it is possible to produce fibre/plastics composites (28) from different semi-finished products.

11. Composition facility (1) according to any of claims 4 to 10, wherein the heating device (65) comprises a combustion gas nozzle and further comprises an ignition device (66), wherein the ignition device (66) ignites the combustion gas with an electric arc (67b) and/or an ignition spark (67a).

12. Composition facility (1) according to any of claims 4 to 11, wherein the electronic controller (400) preferably provides a cycle time of less than or equal to 1000 μs for electronic synchronisation of the velocity of the drive system (tool centre point velocity, vTCP) and the feed rate of the semi-finished product (20, 20') to the application device (50).

13. Composition facility (1) according to any of claims 4 to 12, wherein the tool centre point velocity (vTCP) is greater than or equal to 1 m/s, preferably greater than or equal to 2 m/s, more preferably greater than or equal to 5 m/s, and further preferably greater than or equal to 10 m/s.

14. Composition facility (1) according to any of claims 4 to 13, wherein the application device (50) for applying the semi-finished product (20, 20') in the application region (100), including the heating device (65), is of a mass of less than 40 kg, preferably of less than 25 kg.

15. Composition facility (1) according to any of claims 4 to 14, further comprising a semi-finished product changing device for automatically changing the semi-finished product (20, 20').

**Revendications**

1. Procédé de composition de composites à base de fibres et de matière plastique, avec les étapes :

   - de fourniture d'un produit semi-fini (20, 20') dans un système de stockage (40, 40b, 44),
   - d'amenée du produit semi-fini à un système d'application (50),
   - de chauffage du produit semi-fini (20, 20') au moyen d'un système de chauffage de telle sorte qu'un changement local de phase du produit semi-fini (20, 20') dans un état au moins en partie plastique est induit,
   - d'exécution d'un déplacement relatif entre le système d'application (50) et une zone d'application (100), et
   - d'application variable en termes de direction et de position du produit semi-fini (20) sur la zone d'application (100) au moyen du système d'application (50) au cours l'exécution du déplacement relatif entre le système d'application (50) et la zone d'application (10),

   dans lequel le déplacement relatif entre le système d'application (50) et la zone d'application (100) est exécuté à une vitesse de point d'outil (vTCP) supérieure ou égale à 0,5 m/s.

2. Procédé de composition de composites à base de fibres et de matière plastique selon la revendication 1, dans lequel au cours l'application du produit semi-fini (20, 20') sur la zone d'application (100), un gradient de température de la répartition de chaleur sur une épaisseur du produit semi-fini est réglé au moyen d'un système de chauffage (65) de telle sorte

   - que le produit semi-fini est fondu seulement en partie, et/ou
   - que l'énergie thermique stockée dans le produit semi-fini est réglée de manière à être inférieure à 40 %, de manière préférée inférieure à 20 %, par rapport à l'énergie thermique requise par le produit semi-fini pour la fusion complète.

3. Procédé de composition de composites à base de fibres et de matière plastique selon la revendication 2, dans lequel un changement de phase se réglant dans le produit semi-fini (20, 20') modifie la morphologie d'un polymère du produit semi-fini seulement dans la zone de bord.

4. Installation de composition (1) pour des matériaux composites (28), en particulier destinée à exécuter le procédé selon l'une quelconque des revendications 1 à 3, comprenant :

   - un groupe de fond (2) destiné à fournir une zone d'application (100) ;
   - un système de stockage (40, 40b, 44) pour la fourniture du produit semi-fini (20, 20') pour le traitement ultérieur dans l'installation de composition ;
   - une commande électronique (400) destinée à commander de manière intégrée tous les systèmes ;
   - un système d'application (50) destiné à appliquer le produit semi-fini (20, 20') sur la zone d'application (100), comprenant
   - un système de chauffage (65) destiné à chauffer le produit semi-fini (20, 20'), qui est commandé pour induire un changement local de phase du produit semi-fini (20, 20') dans un état au moins en partie plastique ;
   - une unité d'entraînement (10) destinée à modifier la position du système d'application (50) par rapport à la zone d'application (100) ;

   dans laquelle l'unité d'entraînement (10) est commandée pour fournir une vitesse de point d'outil (vTCP) pour le système d'application (50) pendant la phase temporelle au cours de l'application du produit semi-fini (20, 20') sur la zone d'application (100), et coopère de telle manière avec le système d'application (50) que le produit semi-fini (20, 20') est appliqué de manière variable en termes de direction et de position sur la zone d'application (100) à la vitesse de point d'outil (vTCP) supérieure ou égale à 0,5 m/s.

5. Installation de composition (1) selon la revendication précédente, dans laquelle l'unité d'entraînement (10) est mise au point pour maintenir constante ou sensiblement constante la vitesse de point d'outil (vTCP) pendant la plage temporelle au cours de l'application du produit semi-fini (20, 20') sur la zone d'application.

6. Installation de composition (1) selon la revendication précédente,

   - dans laquelle le système de chauffage (65) est mis au point pour régler un gradient de température de la répartition de chaleur sur une épaisseur du produit semi-fini lors du chauffage du produit semi-fini (20, 20'), et/ou

- dans laquelle le système de chauffage (65) est mis au point pour concentrer la zone de fusion lors du chauffage du produit semi-fini sur les surfaces d'assemblage (29, 29b, 30) et/ou

- dans laquelle le système de chauffage (65) peut être réglé pour un changement de phase dans un état au moins en partie plastique des composants polymères du produit semi-fini (20, 20'), et/ou

- dans laquelle le système de chauffage (65) comprend de manière préférée une buse de brûleur, du plasma, un halogène, un laser ou une source à LED.

**7.** Installation de composition (1) selon l'une quelconque des revendications 4 à 6,

- dans laquelle l'unité d'entraînement (10) est mise au point pour accélérer le système d'application (50) avec une accélération supérieure ou égale à 8 m/s$^2$, de manière préférée supérieure ou égale à 20 m/s$^2$, de manière davantage préférée supérieure ou égale à 50 m/s$^2$, et/ou

- dans laquelle la somme des poids déplacés du système d'application (50) et de l'unité d'entraînement (10) conjointement est inférieure à 750 kg, de manière préférée est inférieure ou égale à 250 kg et de manière davantage préférée est inférieure ou égale à 75 kg.

**8.** Installation de composition (1) selon l'une quelconque des revendications 4 à 7, dans laquelle le produit semi-fini (20, 20') comprend un produit semi-fini à base de fibres, un produit semi-fini à base de polymère et/ou un polymère autorenforcé ou des combinaisons de ceux-ci, dans laquelle en particulier des produits semi-finis mouillés, entravés, partiellement solidifiés, totalement solidifiés ou des combinaisons de ceux-ci et/ou des produits semi-finis comprenant des matières thermodurcissables, des matières thermoplastiques, leurs dérivés et/ou des combinaisons de ceux-ci sont compris.

**9.** Installation de composition (1) selon l'une quelconque des revendications 4 à 8, dans laquelle la composition de composites à base de fibres et de matières plastiques (28) a lieu sur la zone d'application (100) à partir de produits semi-finis (20, 20') de manière successive le long de trajectoires prédéfinies et dans laquelle la composition de composites à base de fibres et de matière plastique est rendue possible individuellement pour chaque trajectoire.

**10.** Installation de composition (1) selon l'une quelconque des revendications 4 à 9, comprenant en outre au moins un autre produit semi-fini (20'), lequel se distingue du produit semi-fini (20), dans laquelle le système de stockage (40, 40b, 44) est mis au point pour amener le produit semi-fini (20) et l'autre produit semi-fini (20') au choix au système d'application (50) de telle sorte que des composites à base de fibres et de matière plastique (28) peuvent être fabriqués à partir de différents produits semi-finis.

**11.** Installation de composition (1) selon l'une quelconque des revendications 4 à 10, dans laquelle le système de chauffage (65) comprend une buse de gaz de combustion et en outre un système d'allumage (66), dans laquelle le système d'allumage (66) enflamme le gaz de combustion avec un arc électrique (67b) et/ou une étincelle d'allumage (67a).

**12.** Installation de composition (1) selon l'une quelconque des revendications 4 à 11, dans laquelle la commande électronique (400) fournit de manière préférée une durée de cycle inférieure ou égale à 1000 ps pour la synchronisation électronique de la vitesse du système d'entraînement (point de vitesse d'outil vTCP) et de la vitesse d'avancement du produit semi-fini (20, 20') du système d'application (50).

**13.** Installation de composition (1) selon l'une quelconque des revendications 4 à 12, dans laquelle la vitesse de point d'outil (vTCP) est supérieure ou égale à 1 m/s, de manière préférée est supérieure ou égale à 2 m/s, de manière davantage préférée est supérieure ou égale à 5 m/s et en outre de manière préférée est supérieure ou égale à 10 m/s.

**14.** Installation de composition (1) selon l'une quelconque des revendications 4 à 13, dans laquelle le système d'application (50) destiné à appliquer le produit semi-fini (20, 20') dans la zone d'application (100) y compris le système de chauffage (65) présente un poids inférieur à 40 kg, de manière préférée inférieur à 25 kg.

**15.** Installation de composition (1) selon l'une quelconque des revendications 4 à 14, comprenant en outre un système de changement de produit semi-fini pour changer automatiquement le produit semi-fini (20, 20').

**Fig. 1**

X ⊗ Y

↓ Z

Endpunkt
EP

Bahnendpunkt
BEP

Bahnstartpunkt
BSP

Startpunkt
SP

50

50

50

50

20

Koordinate
X4,Y4,Z4

Koordinate
X3,Y3,Z3

Koordinate
X2,Y2,Z2

Koordinate
X1,Y1,Z1

v

vTCP=konst.

s

**Fig. 2**

X    Y

Z

50

elektronische
Synchronisation

Rotation

512

$v_{TCP}$   M

$v_{Halbzeug}$

20

101

Lage 1

Werkzeugoberfläche

relative Kraft zwischen
Halbzeug und Werkzeug < +/-0,1 N

**Fig. 3a**

Start    (301)

(302)

Eingabe/Einlesen
der Bahnstart- und
Bahnendpunkte für
Lage i

(300)

Bestimmung vor
jeder Bewegung

Daten werden
in den
Zwischenspeicher
geschrieben

Prozess kann
offline oder
auf externer
CPU erfolgen

Berechnung von Prozessparametern, welche sowohl
geschwindigkeitsabhängig als auch
geschwindigkeitsunabhänig sein können.

Zu den Prozessparametern zählen beispielsweise Orte,
an denen Ereignisse stattfinden können oder ausgelöst
werden müssen.

Prozessparameter können in Abhängigkeit von
konstruktionsbedingten Maschinenkonstanten berechnet
werden.
Eine Maschinenkonstante kann beispielsweise die
minimale Ablegelänge sein.

Prozessparameter können geschwindigkeitsabhängige
Distanzen in der Einheit [mm] sein, oder
geschwindigkeitsunabhänige prozessrelevante Orte in
der Einheit[mm] oder über den Verlauf einer Bahn
konstante Parameter, wie beispielsweise der Winkel
der Appliziereinheit um die Z-Achse.

Ein geschwindigkeitsabhängiger Prozessparameter kann
die Vorlaufdistanz zum Starten des Halbzeugtransports
sein, um zu gewährleisten, dass der Bahnstartpunkt
mit dem geforderten Ablagestartpunkt exakt
zusammenfällt.

Geschwindigkeitunabhängige Prozessparameter können
sein die bahnbezogenen Orte des Trennvorgangs,
Bahnstart- und Bahnendpunkte oder Start- und
Endpunkte.

Ereignisse können sein:
- Schneiden des Halbzeugs
- Starten des Halbzeugtransports
- Stoppen des Halbzeugtransports
- Heizquelle an
- Heizquelle aus
- Zündung an
- Zündung aus
- Appliziereinheit absenken
- Appliziereinheit anheben
- Richtungswahl Halbzeug „duplex"
- …

(303)

Berechnung von
Ausgleichspfaden
von Bahn i zu
Bahn i+1

(306)

Schleife
über alle
Bahnen

letzte Bahn
der Lage?    nein

(305)

ja

letzte Lage?    nein

(307)

ja

Schleife
über alle
Lagen

Ende
Berechnung

(308)

**Fig. 3b**

310

Bestimmung
während einer
Bewegung.
Daten werden
aus dem
Zwischenspeicher
gelesen und
hoch präzise
ausgelöst.
Die Bahn-istposition wird
aus den ist-
Daten der
Positionsgeber der
Achsen
ermittelt.

Start
Bewegung

311

312

Anfahren des Startpunktes der
Bahn und Maschine in
Ausgangsstellung für
aktuelle Bahn bringen
elektronische
Präzisionssynchronisation
aller Achsen an

Ablauf der Bahn:
Ereignis 1 in Verbindung mit Prozessparameter 1
am Ort $x_1, y_1, z_1$

Ereignis 2 in Verbindung Prozessparameter 2
am Ort $x_2, y_2, z_2$

Ereignis … in Verbindung Prozessparameter …
am Ort $x_{…}, y_{…}, z_{…}$

Ereignis $_{n-1}$ in Verbindung Prozessparameter n-1
am Ort $x_{n-1}, y_{n-1}, z_{n-1}$

Ereignis $_n$ in Verbindung Prozessparameter n
am Ort $x_n, y_n, z_n$

313

320

Anfahren des Endpunktes

314

Lagenindex
erhöhen

elektronische
Präzisionssynchronisation
aller Achsen aus

315

Bahnindex
erhöhen

318

Letzte
Bahn?

nein

Ausgleichspfad
fahren

316

ja

317

Letzte
Lage?

nein

319

ja

Ende

321

## Fig. 4

Heizraten zur Erwärmung der polymeren Anteile
für ausgewählte Halbzeuge bei einer wirkenden
Heizlänge von 23 mm

| Matrixkomponente | Schmelz bzw. Erweichungs-temperatur in [°C] | Faserkomponente | Heizrate in [K/s] bei einer Geschwindigkeit von 1 m/s | Heizrate in [K/s] bei einer Geschwindigkeit von 2 m/s | Heizrate in [K/s] bei einer Geschwindigkeit von 4 m/s |
|---|---|---|---|---|---|
| Polypropylen | 130 | Glasfaser | 500 bis 10000 | 1000 bis 20000 | 2000 bis 41000 |
| Polyamid 6 | 230 | Kohlenstofffaser | 500 bis 19000 | 1000 bis 38000 | 2000 bis 76000 |
| Polyetherehterketon | 340 | Kohlenstofffaser | 500 bis 29000 | 1000 bis 57000 | 2000 bis 120000 |
| Bindersystem XB 3366 von Huntsman Advanced Materials, Schweiz | 150 | Kohlenstofffaser | 500 bis 12000 | 1000 bis 25000 | 2000 bis 49000 |
| EPIKOTE™ Resin 05311 von Momentive Specialty Chemicals, Deutschland | 102 | Kohlenstofffaser | 500 bis 8000 | 1000 bis 17000 | 2000 bis 33000 |

**Fig. 5**

X ◁— ⊗ Y

↓ Z

Bündelung
durch Reflexion

512

β = Winkel
einlaufendes
Halbzeug

Halbzeug n

20

65

Heizquelle

α=Winkel
Heizquelle

$Y_{HQ}$

$X_{HQ}$

↓ $Z_{HQ}$

M

Geringer Verlust
durch Konvektion

30

Geringer Verlust
durch Transmission

Lage n                      21

Schmelzbereich              22

Lage n-1

Lage n-2        Absorption

Lage 2    30 Kontaktstelle        Substrat      23

Lage 1                              24

29b

Werkzeug        29b Nip-Point

29    28

Umgebungstemperatur

101

Fig. 6a

⑦⓪

⑥⑧

⑦②

②⑧

Fig. 6b

⑥⑧

⑦②

⑦③

②⑧

Fig. 6c

⑥⑧

⑦②

⑦③

## Fig. 7

Fig. 8

## Fig. 9

effektive Wirklänge der Temperatur in mm

**Fig. 10**

```
┌──────────────┐
│    Hohe      │─────⟨401⟩              ⟨400⟩
│ Heizleistung │
└──────┬───────┘
       │
       ▼
┌──────────────┐
│    guter     │─────⟨402⟩
│ Wärmeübergang│
└──────┬───────┘
       │      ╮
       │   ⟨403⟩
       ▼
┌──────────────┐                    ┌─────────────────────────┐
│ hohe Heizraten│- - - - - - - - - - │ hohe Temperaturen ohne  │─⟨407⟩
└──────┬───────┘                    │     Degradation, da     │
       │                            │  Expositionzeit gering  │
       │                            └─────────────────────────┘
       ▼                            ┌─────────────────────────┐
┌──────────────┐   ⟨404⟩            │  höhere Mobilität der   │
│ Dünnschicht- │                    │   Makromoleküle durch   │─⟨408⟩
│   schmelze   │                    │  höhere Temperatur, d.h.│
└──────┬───────┘                    │  niedrigere Viskosität  │
       │                            └─────────────────────────┘
       │                            ┌─────────────────────────┐
       ▼                            │  Grad der Autohäsion,   │
┌──────────────┐   ⟨405⟩            │    Adhäsion oder        │
│   geringe    │                    │ Vernetzung ist über die │─⟨409⟩
│ gespeicherte │                    │   Prozessparameter:     │
│    Wärme     │                    │ Druck, Temperatur, Zeit │
└──────┬───────┘                    │  (Hochgeschwindigkeit)  │
       │                            │      einstellbar        │
       ▼                            └─────────────────────────┘
⟨406⟩─┌──────────────┐
      │hohe Kühlraten│
      └──────┬───────┘
             │
             ▼
      ┌──────────────┐
      │Hochgeschwindig│- - - - - - - - -
      │ -keitsfügen  │
      └──────────────┘
             │
           ⟨410⟩
```

43

# Fig. 11a

Isothermen im Halbzeug für unterschiedliche Verarbeitungsgeschwindigkeit am Beispiel CF-PA6 mit 50 Faservolumenprozent und einer effektiven Heizlänge von 23 mm und einer Oberflächentemperatur von 400 °C

## Fig. 11b

Linien gleicher Viskosität in Pas im Halbzeug von CF-PA6 mit 50 Faservolumenprozent bei einer effektiven Heizlänge von 23 mm, einer Oberflächentemperatur von 400°C und einer Verarbeitungsgeschwindigkeit von 1 m/s

## Fig. 11c

Isothermen im Halbzeug von CF-PA6 mit 50 Faservolumenprozent bei einer effektiven Heizlänge von 23 mm, einer Oberflächentemperatur von 400°C und einer Verarbeitungsgeschwindigkeit von 1 m/s

Fig. 12a

Isothermen im Halbzeug für unterschiedliche Verarbeitungsgeschwindigkeit am Beispiel
CF-PA6 mit 50 Faservolumenprozent und einer effektiven Heizlänge von 23 mm
und einer Oberflächentemperatur von 600 °C

## Fig. 12b

Linien gleicher Viskosität in Pas im Halbzeug von CF-PA6 mit 50 Faservolumenprozent
bei einer effektiven Heizlänge von 23 mm, einer Oberflächentemperatur von 600°C
und einer Verarbeitungsgeschwindigkeit von 1 m/s

## Fig. 12c

Isothermen im Halbzeug von CF-PA6 mit 50 Faservolumenprozent bei einer
effektiven Heizlänge von 23 mm, einer Oberflächentemperatur von 600°C
und einer Verarbeitungsgeschwindigkeit von 1 m/s

Fig. 13

X ⟵    ⊗ Y

↓ Z

20

502

Sensor

504

50

506

Schneideinheit

510

508

65

Sensor

514

Heizquelle

Sensor

512

**Fig. 14**

Variante 2

Fig. 15

X Y
Z

20 20'

502 Sensor 522
Sensor

504 524

50

506 526

514

510 Schneid
einheit Schneid
einheit 530

508 Sensor 528
Sensor

Heizquelle Heizquelle

65 65'

512

Variante 3

Fig. 16 a   Fig. 16 b

Fig. 17 a   Fig. 17 b

**Fig. 18**

X    Y

Z

20

502

Sensor

504

506

50

562

510

Schneideinheit

**Fig. 18a**

Schnitt A-A

Halbzeugbreite
minus
Abwicklungsmaß

A    A

512

561

561

**Fig. 19**

Halbzeug

Konsolidierungsrolle

Rotation

20

512

Strömungsleitelement
konvex

F R

V

M

X Y

Z

65

Heizquelle

571

Wirklänge
Temperatur

28

# Fig. 20

Zündeinrichtung

66

65

Heizeinrichtung

64

Option B

Option A

66  Zündeinrichtung  67b  67a  Zündeinrichtung  66

65

Heizeinrichtung

65

Heizeinrichtung

65

Lichtbogen

64

Zündfunken

Zündeinrichtung

66

65

Heizeinrichtung

64

## Fig. 21a

## Fig. 21b

**Fig. 22**

| 20 | Bahn n | Halbzeug Typ 1 | ← |
| 20 | Bahn n-1 | Halbzeug Typ 1 | ← |
| 20 | Bahn n-2 | Halbzeug Typ 1 | ← |
| 20 | Bahn 2 | Halbzeug Typ 1 | ← |
| 20 | Bahn 1 | Halbzeug Typ 1 | ← |

Applizier einheit 1

V

X Y Z

102   35   50

Fig. 23

| Bahn n | Halbzeug Typ 1 | ← |
| Bahn n-1 | Halbzeug Typ 1 | → |
| Bahn n-2 | Halbzeug Typ 1 | ← |
| Bahn 2 | Halbzeug Typ 1 | → |
| Bahn 1 | Halbzeug Typ 1 | ← |

Applizier
einheit 1

V

Y
X Z

20

102

35

50

**Fig. 24**

| | | |
|---|---|---|
| Bahn n | Halbzeug Typ 1 | ← |
| Bahn n-1 | Halbzeug Typ 2 | → |
| Bahn n-2 | Halbzeug Typ 1 | ← |
| Bahn 2 | Halbzeug Typ 2 | → |
| Bahn 1 | Halbzeug Typ 1 | ← |

Applizier einheit 2

V

Y
X  Z

20

102

35

50

Fig. 25

| Bahn n | Halbzeug Typ 1 | ← |
|--------|----------------|---|
| Bahn n-2 | Halbzeug Typ 1 | → |
| Bahn n-4 | Halbzeug Typ 1 | ← |
| Bahn 3 | Halbzeug Typ 1 | → |
| Bahn 2 | Halbzeug Typ 1 | ← |

| Bahn n-1 | Halbzeug Typ 1 | ← |
|----------|----------------|---|
| Bahn n-3 | Halbzeug Typ 1 | → |
| Bahn n-5 | Halbzeug Typ 1 | ← |
| Bahn 4 | Halbzeug Typ 1 | → |
| Bahn 1 | Halbzeug Typ 1 | ← |

Applizier einheit 1

20    35    20    102    35    50

Fig. 26

| Bahn n | Halbzeug Typ 5 | ← |
| Bahn n-1 | Halbzeug Typ 4 | → |
| Bahn n-2 | Halbzeug Typ 3 | ← |
| Bahn 2 | Halbzeug Typ 2 | → |
| Bahn 1 | Halbzeug Typ 1 | ← |

Applizier einheit 1

V

Y

X

Z

20

102

35

50

## Fig. 27a

| | | |
|---|---|---|
| Bahn n | Halbzeug Typ 1 | ⟶ |
| Bahn n-1 | Halbzeug Typ 1 | ⟶ |
| Bahn n-2 | Halbzeug Typ 1 | ⟶ |
| Bahn n-3 | Halbzeug Typ 1 | ⟶ |
| Bahn n-4 | Halbzeug Typ 1 | ⟶ |
| Bahn n-5 | Halbzeug Typ 1 | ⟵ |
| Bahn n-6 | Halbzeug Typ 1 | ⟵ |
| Bahn 3 | Halbzeug Typ 1 | ⟵ |
| Bahn 2 | Halbzeug Typ 1 | ⟵ |
| Bahn 1 | Halbzeug Typ 1 | ⟵ |

Applizier einheit 5
Applizier einheit 4
Applizier einheit 3
Applizier einheit 2
Applizier einheit 1

Y

X ⊗ Z

V

20    102    35    50

## Fig. 27b

| | | |
|---|---|---|
| Bahn n | Halbzeug Typ 1 | ⟵ |
| Bahn n-1 | Halbzeug Typ 1 | ⟵ |
| Bahn n-2 | Halbzeug Typ 1 | ⟵ |
| Bahn n-3 | Halbzeug Typ 1 | ⟵ |
| Bahn n-4 | Halbzeug Typ 1 | ⟵ |
| Bahn n-5 | Halbzeug Typ 1 | ⟵ |
| Bahn n-6 | Halbzeug Typ 1 | ⟵ |
| Bahn 3 | Halbzeug Typ 1 | ⟵ |
| Bahn 2 | Halbzeug Typ 1 | ⟵ |
| Bahn 1 | Halbzeug Typ 1 | ⟵ |

Applizier einheit 10
Applizier einheit 9
Applizier einheit 8
Applizier einheit 7
Applizier einheit 6
Applizier einheit 5
Applizier einheit 4
Applizier einheit 3
Applizier einheit 2
Applizier einheit 1

Y

X ⊗ Z

V

20    102    35    50

EP 3 390 021 B1

# Fig. 28

| | | |
|---|---|---|
| Bahn n | Halbzeug Typ 10 | → |
| Bahn n-1 | Halbzeug Typ 9 | → |
| Bahn n-2 | Halbzeug Typ 8 | → |
| Bahn n-3 | Halbzeug Typ 7 | → |
| Bahn n-4 | Halbzeug Typ 6 | → |
| Bahn n-5 | Halbzeug Typ 5 | ← |
| Bahn n-6 | Halbzeug Typ 4 | ← |
| Bahn 3 | Halbzeug Typ 3 | ← |
| Bahn 2 | Halbzeug Typ 2 | ← |
| Bahn 1 | Halbzeug Typ 1 | ← |

Applizier einheit 5

Applizier einheit 4

Applizier einheit 3

Applizier einheit 2

Applizier einheit 1

V

Y
X
Z

20

102

35

50

## Fig. 29a

| Achse | Freiheitsgrad |
|---|---|
| Antrieb 1 Gantry gekoppelt mit 2 | Translation |
| Antrieb 2 Gantry | Translation |
| Antrieb 3 Appliziereinheit | Translation |
| Antrieb 4 Appliziereinheit | Rotation |

| Achse | Freiheitsgrad |
|---|---|
| Antrieb 1 Werkzeug | Rotation |
| Antrieb 2 Werkzeug | Translation |
| Antrieb 3 Appliziereinheit | Translation |
| Antrieb 4 Appliziereinheit | Rotation |

Fig. 29b

Y ◁———⊗ Z

X ▽

| Antriebe | Freiheitsgra d |
|---|---|
| Antrieb 1 Gantry gekoppelt mit 2 | Translation |
| Antrieb 2 Gantry | Translation |
| Antrieb 3 Appliziereinheit | Translation |
| Antrieb 4 Appliziereinheit | Rotation |
| Antrieb 5 Appliziereinheit 2 | Translation |
| Antrieb 6 Appliziereinheit | Rotation |

| Achse | Freiheitsgrad |
|---|---|
| Antrieb 1 Werkzeug | Rotation |
| Antrieb 2 Werkzeug | Translation |
| Antrieb 3 Appliziereinheit | Translation |
| Antrieb 4 Appliziereinheit | Rotation |
| Antrieb 5 Appliziereinheit | Translation |
| Antrieb 6 Appliziereinheit | Rotation |

**Fig. 29c**

| Antriebe | Freiheitsgrad |
|---|---|
| Antrieb 1 Gantry gekoppelt mit 2 | Translation |
| Antrieb 2 Gantry | Translation |
| Antrieb 3 Appliziereinheit | Translation |
| Antrieb 4 Appliziereinheit | Rotation |
| Antrieb 5 Appliziereinheit 2 | Translation |
| Antrieb 6 Appliziereinheit | Rotation |
| Antrieb 7 Gantry 2 gekoppelt mit 8 | Translation |
| Antrieb 8 Gantry 2 | Translation |
| Antrieb 9 Appliziereinheit 3 | Translation |
| Antrieb 10 Appliziereinheit | Rotation |
| Antrieb 11 Appliziereinheit 4 | Tranlation |
| Antrieb 12 Appliziereinheit | Rotation |

| Achse | Freiheitsgrad |
|---|---|
| Antrieb 1 Werkzeug | Rotation |
| Antrieb 2 Werkzeug | Translation |

Fig. 30

## Fig. 31

Fig. 32

Fig. 33

Fig. 34

Fig. 35

Fig. 36

**Fig. 37**

# Fig. 38

Bahn 8   Halbzeug Typ 8

Bahn 7   Halbzeug Typ 7

Bahn 6   Halbzeug Typ 7

Bahn 5   Halbzeug Typ 6

Bahn 3   Halbzeug Typ 3

Bahn 2   Halbzeug Typ 2

Bahn 1   Halbzeug Typ 1

Bahn 9   Halbzeug Typ 1

Bahn 10   Halbzeug Typ 1

Bahn 11   Halbzeug Typ 7

Bahn 12   Halbzeug Typ 7

Bahn 13   Halbzeug Typ 7

20

102

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012102841 B3
- WO 2013139834 A1
- CN 104985834 A

**In der Beschreibung aufgeführte Nicht-Patentliteratur**

- **STEEG et al.** Automation implementation and process development of thermoplastic tape placement for 3-dimensional parts. *SAMPE,* 2006, vol. 42 (5), 18-24
- **DARA, P. H. ; ; LOOS, A.** Thermoplastic Matrix Composite Processing Model. *Virginia Polytechnic Institute Report, Report CCMS-85-10,* 1985
- **DE GENNES, P.-G.** Reptation of a polymer chain in the presence of fixed obstacles''. *The journal of chemical physics,* 1971, vol. 55 (2), 572-579